(19) Europäisches Patentamt
European Patent Office
Office européen des brevets

(11) EP 0 549 914 B1

(12) EUROPEAN PATENT SPECIFICATION

(45) Date of publication and mention of the grant of the patent:
**07.05.1997 Bulletin 1997/19**

(51) Int Cl.[6]: **G01B 11/08**

(21) Application number: **92120723.9**

(22) Date of filing: **04.12.1992**

# (54) Measurement of fiber diameters and detection of defects

Messung der Durchmesser von Fasern und Aufspüren von Fehlern

Mesure des diamètres de fibres et détection de défauts

(84) Designated Contracting States:
**DE ES FR GB IT NL**

(30) Priority: **31.12.1991 US 816882**
**31.12.1991 US 816883**
**31.12.1991 US 816491**

(43) Date of publication of application:
**07.07.1993 Bulletin 1993/27**

(73) Proprietor: **Corning Incorporated**
**Corning New York 14831 (US)**

(72) Inventors:
- **Button, Leslie James, Corning Incorporated Corning, NY 14831 (US)**
- **Fischer, Frederic Phillip, Corning Incorporated Corning, NY 14831 (US)**
- **Dotson, Jerald Benjamin, Corning Incorporated Corning, NY 14831 (US)**
- **Lee, Patrick Shiu Key, Corning Incorporated Corning, NY 14831 (US)**
- **Logue, Raymond Carl, Corning Incorporated Corning, NY 14831 (US)**
- **Parks, Thomas William, Corning Incorporated Corning, NY 14831 (US)**
- **Nease, Jerry Dion, Corning Incorporated Corning, NY 14831 (US)**
- **Reding, Bruce Warren, Corning Incorporated Corning, NY 14831 (US)**
- **Wightman, Christopher Woodrow, Corning Corning, NY 14831 (US)**

(74) Representative: **Boon, Graham Anthony et al**
**Elkington and Fife,**
**Prospect House,**
**8 Pembroke Road**
**Sevenoaks, Kent TN13 1XR (GB)**

(56) References cited:
**EP-A- 0 069 355** **EP-A- 0 218 151**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

**Description**

BACKGROUND OF THE INVENTION

1. Field of the Invention

This invention relates to methods and apparatus for measuring the diameters of optical waveguide fibers and for detecting defects in such fibers.

2. Description of the Prior Art

The precise measurement of the outside diameter of optical waveguide fibers is of central importance in both the manufacturing and quality control of such fibers. Among other things, diameter measurements are used to control the fiber drawing process and to select fiber suitable for commercial use.

U.S. Patents Nos. 3,982,816 and 4,067,651 to Lawrence Watkins disclose an optical technique for measuring fiber diameter which is widely used in the industry. The basic components of the Watkins system are schematically illustrated in Figure 1. As shown therein, optical waveguide fiber 13, whose cross-section has been greatly expanded for purposes of illustration, is transversely illuminated by light 15 of sufficient spatial coherence and monochromaticity to create a discernible interference pattern in the far field, that interference pattern being created by the superposition of light reflected from the fiber surface 17 and light refracted through the fiber body 13. In practice, a laser, e.g. a HeNe laser, is the preferred light source because of its wavelength stability. The following discussion is thus in terms of a laser light source, it being understood that other light sources having sufficient spatial coherence and monochromaticity can be used if desired.

As explained in the Watkins patents, in the far field, this reflected and refracted light interferes to form fringe pattern 19. For an optical waveguide fiber having a core and a cladding, the fringe pattern will in general be a function of the wavelength of the incident light and of the indices of refraction and the diameters of both the core and the cladding. However, as shown by Watkins, if the core/clad ratio is not too large and if the fringe pattern is examined at sufficiently large angles, e.g., above about ±50° in Figure 1 for core/clad ratios of less than about 0.5, the pattern will depend almost exclusively on the diameter and index of refraction of the cladding.

Accordingly, if the index of refraction (n) of the cladding is known, the outside diameter (d) of the fiber can be determined by analyzing the fringe pattern. Specifically, the diameter can be approximated with good precision by counting the number of full and partial fringes (N) between two angles ($\theta_a$ and $\theta_b$) and then using the following equations to calculate d:

$$E(\theta_a) = \sin(\theta_a/2) + [n^2 + 1 - 2n\cos(\theta_a/2)]^{1/2} \qquad (1)$$

$$E(\theta_b) = \sin(\theta_b/2) + [n^2 + 1 - 2n\cos(\theta_b/2)]^{1/2} \qquad (2)$$

$$d = N\lambda/[E(\theta_b) - E(\theta_a)] \qquad (3)$$

where $\lambda$ is the wavelength of the laser light used to illuminate the fiber. Note that in equation 3, there is a direct relationship between diameter and fringe count. In practice, given an invariant clad index and an invariant wavelength, one can calibrate the system with an empirical constant, which when multiplied by the number of fringes gives, the diameter.

Using the fringe counting technique, root mean square (RMS) precisions on the order of 0.2 microns have been achieved for detectors having angular extents of approximately 80°. (The term "precision" is used herein in the sense of a 1 $\sigma$ repeatability of the fiber diameter measurement, e.g., a diameter measurement is precise to the 0.2 micron level if repeated measurements of a fiber of constant diameter have a scatter whose standard deviation $\sigma$ is less than or equal to 0.2 microns.) For a fiber having a diameter of around 125 microns, this corresponds to a percentage error of less than a two tenths of a percent. Although clearly quite precise, even higher levels of precision are needed to meet the demand for ever improved optical waveguide fibers.

For example, as optical fiber telecommunications are installed closer to the subscriber, the number of fiber-to-fiber connections and splices required in the field increases rapidly. These connections and splices need to be both easy to make and must have a very low loss. Generally, for single-mode fiber, good diameter control is crucial to meeting these two requirements. Specifically, one desires a one σ variation among fiber diameters of approximately 0.2 microns or less. Given this target, one would prefer that the system which measures and/or controls the fiber diameter have a precision of 0.02 microns or less. This precision is a factor of ten beyond the capability of fringe counting techniques used in the past.

Equations 1-3 are based on the assumption that the fiber is circular. In practice, fibers are not perfectly round but tend to have at least some ovoid or elliptical characteristics. This non-circularity can cause over or under estimates of the average fiber diameter by as much as one percent. These errors in diameter measurement limit the level of process control and product uniformity which can be achieved. In particular, one needs to hold the average fiber diameter at a particular value during the drawing of optical waveguide fibers from preforms. Errors of one percent in the diameter of optical waveguide fibers are considered to be large errors relative to the level of uniformity expected for such fibers.

Accordingly, there is need for a fiber diameter measurement technique which is insensitive to ellipticity, i.e., a technique which will determine the average diameter of a non-circular fiber with high precision. Moreover, there is also a need for a method which can characterize the ellipticity of a fiber so that manufacturing techniques, such as fiber draw, can be modified and/or controlled to minimize non-circularity.

The ability to detect defects, such as holes or voids, e.g., airlines, in optical waveguide fibers is of central importance in providing high quality fibers and in devising manufacturing techniques which minimize the occurrence of such defects. Holes or voids typically occur at the center of a fiber (on-center holes), although they can be located anywhere in the fiber cross-section (off-center holes).

In the past, holes have been detected during the drawing of fibers as part of the procedures used to measure fiber diameter. Specifically, when a fiber is being drawn at or near its target diameter, the location of each fringe in the Watkins interference pattern is predictable. Using this fact, holes have been detected by watching for a missing sequence of fringes of a prescribed, user-settable length, e.g., two missing fringes in a row.

Although this technique has worked reasonably well in practice, it has suffered from a number of problems.

First, small holes result in the loss of only a few fringes and thus can be easily missed. Accordingly, fiber may be considered acceptable when in fact it contains holes. Also, holes tend to start small, grow larger, and then diminish in size. The inability to detect small holes means that the beginning and end of a hole's life cycle cannot be seen. Accordingly, long lengths of fiber on either side of the portion of a fiber where a hole is detected must be discarded to insure that the entire hole is removed.

Second, although the hole detector may miss a small hole, the reduced number of fringes produced by such a hole will be detected by the overall control system and interpreted as a reduction in the fiber's diameter. The response will generally be to inappropriately increase the fiber's diameter. Accordingly, not only might fiber be sold with small holes, but the diameter of the fiber may also be off nominal.

Third, even if a hole does grow large enough to be detected, thus alleviating the concern of sending unacceptable product to a customer, the resultant diameter mismeasure is so gross that the control system is significantly disturbed and takes a substantial amount of time to restabilize.

EP-A-0218151 pertains to a measuring method and a device for determining the diameter of stationary or moving thin wires, fibers, liquid jets, and the like in a contactless manner. The invention utilizes the Fraunhofer diffraction while illuminating the object to be measured with parallel, monochromatic coherent light. According to the invention, the local intensity progression in a region of interest of the diffraction pattern is digitized and stored. Additional signal processing is carried out to allegedly increase the accuracy of the measurement. A resulting harmonic signal progression with respect to the distance from the non diffracted beam is then Fourier transformed to obtain its frequency spectrum. Knowing the wavelength of the diffracting light, the frequency data obtained from the Fourier transform operation can allegedly be used to obtain a direct measure of the diameter of the object to be measured. The application discloses that the invention described therein may realize measuring times of less than one second and determine diameters between 3 and 1,000 microns with an accuracy of approximately 0.1% + 0.1 micron.

EP-A-0069355 describes a process for testing optical fibers or preforms from which optical fibers are produced, for defects particularly relating to the tensile strength of the fiber. Basically, the method of the disclosed invention allegedly involves comparing the spatial frequency of the test object to the spatial frequency of a defect-free control object. A filter is employed to cut down on the intensity of the maxima regions from the control object such that deviations in the spatial frequency pattern of the test object indicate the location of defects in the fiber under test.

## SUMMARY OF THE INVENTION

In view of the foregoing state of the art, it is an object of this invention to provide improved methods and apparatus for measuring the diameters of optical waveguide fibers or, more generally, the diameters of any transparent filaments. More particularly, it is an object of the invention to improve the precision with which such measurements are made. In quantitative terms, it is an object of the invention to provide methods and apparatus for making real time measurements of diameters with RMS precisions of at least about 0.02 microns and preferably on the order of 0.001 microns.

It is also an object of the invention to provide methods and apparatus of the foregoing types which are computationally efficient so that the desired high precision diameter measurements can be made rapidly on, for example, a moving optical waveguide fiber. In quantitative terms, it is an object of the invention to provide diameter measurements having the above precisions at rates of at least about 500 measurements per second and preferably as high as about 1,000 measurements per second or above.

It is a further object of this invention to provide methods and apparatus for measuring the average diameter of an optical waveguide fiber or, more generally, any transparent filament, which methods and apparatus are substantially insensitive to fiber non-circularity and, in particular, are substantially insensitive to fiber ellipticity. It is also an object of the invention to provide such methods and apparatus which are simple and inexpensive to implement in practice.

It is a further object of the invention to provide methods and apparatus for characterizing the extent to which the cross-section of a fiber (filament) is non-circular and, in particular, is elliptical. Again, it is an object of the invention to provide such methods and apparatus which are simple and inexpensive to implement in practice.

It is an additional object of this invention to provide improved methods and apparatus for detecting defects in optical waveguide fibers or, more generally, any transparent filament.

More particularly, it is an object of the invention to provide improved defect detection techniques which can 1) detect small defects, 2) follow the life cycle of defects, and 3) characterize whether a defect is on or off center.

It is also an object of the invention to provide defect detection techniques based on parameters different from those used to measure fiber diameter so that the steps of diameter control and defect detection can be uncoupled in the overall control system, i.e., to avoid the problems in the prior art where the same parameter (missing fringes) was used to perform both functions.

To achieve the foregoing objects, the invention approaches the problem of diameter measurement from the point of view of precisely determining the spatial frequency of the Watkins interference pattern, rather than counting the fringes of that pattern. The frequency of interest is the average number of fringe cycles per spatial degree. The average is over the spatial extent of the sensor used to detect the fringe pattern, e.g., between the known angular locations $\theta_a$ and $\theta_b$ of the first and last pixels of the detector.

Once determined, the average spatial frequency is converted into a diameter measurement. In particular, a value for N in equation 3 can be obtained by multiplying the average frequency $\omega$ by $\theta_b$-$\theta_a$. The fiber diameter can then be obtained from equation 3 using the known wavelength of the incident light and the known index of refraction of the fiber's cladding. More directly, a conversion constant (K) can be calculated (or, in practice, determined empirically) which when multiplied by the average frequency $\omega$ gives the fiber diameter. In view of these procedures, the term "average spatial frequency of an interference pattern" is used herein to mean a frequency characteristic of the interference pattern which can be converted into a fiber diameter measurement, the precision of the diameter measurement being dependent upon the precision with which the frequency is determined.

For example, for $\theta_a = 50°$, $\theta_b = 70°$, $\lambda = 0.633$ microns, and n = 1.457, the calculated value of K is 40.242. Accordingly, an average spatial frequency $\omega$ of 3.106 cycles/degree corresponds to a fiber diameter of 125 microns. (The foregoing numerical values are used throughout this specification to make representative calculations and will be referred to herein by such terms as "representative fiber", "representative parameters", "representative calculations", and the like. It is to be understood, of course, that these values and calculations are only for the purpose of illustration and are not to be considered limiting of the invention in any sense.)

As demonstrated below, in accordance with the invention, the average spatial frequency of an interference pattern can be determined with extremely high precision even in the presence of noise, i.e., with a precision of at least $25 \times 10^{-6}$ cycles per degree for a signal to noise ratio greater than about 80:1. For the above conversion constant, this level of precision in determining the spatial frequency corresponds to a precision of 0.001 microns in the diameter determination, which is well within the desired 0.02 micron level needed for the production of state of the art optical waveguide fibers.

For comparison, use of the output of the sensor to determine a fringe count, instead of an average spatial frequency, cannot achieve nearly as high a level of precision. The fringe count error arises primarily because of errors in detecting fringes at the ends of the angular range of the sensor caused by, among other things, noise in the signal. In particular, the count at each end can be off by as much as a quarter of a fringe. Since the total number of fringes counted is less than about 200, this error corresponds to a precision of only about 0.25%, which for a fiber having a diameter of about 125 microns, corresponds to a precision of only about 0.3 microns.

Thus, in overview, the technique of the present invention does employ the basic Watkins' model, however it does so in a different way from what has been done previously in the art. Whereas the conventional technique counted fringes and thus was subject to the problem of noise and partial fringes at the ends of the sensor range, the technique of the invention uses all of the information in the fringe pattern to determine an average spatial frequency ω for the entire pattern. This average does depend to some extent upon the measurements at the ends of the sensor range, but to a much smaller degree than fringe counting. It is this difference in combination with other signal processing aspects of the invention discussed below which permits the invention to achieve the desired improvement in precision of the diameter measurement.

The success of the invention thus depends upon being able to determine the average spatial frequency ω of the far field interference pattern with high precision. In accordance with the invention, the average spatial frequency is estimated by determining the frequency component of the fringe pattern which has the maximum spectral power. In terms of mathematical theory, it can be shown that this estimate comprises a maximum likelihood estimate for the frequency of the interference pattern provided that the frequency modulation of the original signal has been removed (see below).

Depending upon the context, the frequency component of the fringe pattern having the maximum spectral power will be referred to herein as the "O.D. line" (i.e., the outer diameter line) and/or the "brightest line" of the fringe pattern's frequency spectrum. The component being sought, of course, is not the DC component which, in general, will have the largest power, but rather the component corresponding to the sinusoidal-like variation of the fringe pattern as a function of θ. Similarly, the component being sought is not that due to defects in the fiber (see below).

The success of the invention thus becomes dependent upon being able to determine the location (frequency) of the O.D. line with high precision. Although a fast Fourier transform (FFT) can be used to determine the frequency components of the far field interference pattern and the location of the peaks of that spectrum can then be used to calculate fiber diameter, such a transform cannot by itself determine the location of the maximum peak with sufficient precision to achieve a RMS error in the measurement of fiber diameter of less than 0.02 microns. (Note that, as discussed fully below, in certain embodiments of the invention, a fast Fourier transform is used to make an initial analysis of the interference fringe pattern. However, the fast Fourier transform is not used to make the ultimate determination of the location of the O.D. line from which the fiber's diameter is derived.)

The fast Fourier transform operates by taking a set of M real data point values, e.g., the amplitudes of the far field interference pattern at M equally spaced values of θ, and converting those values into a set of M complex quantities (coefficients) at M equally spaced spatial frequencies. The magnitudes of the M coefficients correspond to the spectral power at the different frequencies. The spacing between the frequencies (Δf) is equal to 1/MΔθ, where Δθ is the spacing between the original data points. The first M/2 coefficients and the second M/2 coefficients are related to one another in that they comprise mirror images of one another about the Nyquist or folding frequency.

The problem with the fast Fourier transform approach can be seen by calculating the change in fiber diameter corresponding to a change from one line of the FFT spectrum to an adjacent line. Assuming a 20° detector divided into M equal segments (pixels), the spacing between adjacent lines of the FFT spectrum (Δf) is equal to 0.05 cycles/degree. (Δf = 1/MΔθ = 1/(M(20°/M)) = 0.05 cycles/degree.) Using the 40.242 conversion constant set forth above, a change from one line to the next corresponds to a diameter change of about 2 microns.

As this calculation demonstrates, the FFT spectrum is too coarse to obtain the desired precision of at least 0.02 microns. Some improvement can be achieved by increasing the angular extent of the detector, but even for an 80° detector, Δf is only 0.0125 cycles/degree. Moreover, the conversion constant K is somewhat larger for the larger detector, i.e., if the 80° detector extends between 6° and 86°, the calculated value of K is 43.4996 for λ = 0.633 microns and n = 1.457. Accordingly, even if the interference pattern is sampled over a larger angular range, the FFT still can only achieve a precision on the order of 0.54 microns, which is more than twenty-five times too big.

It is this problem which makes the FFT approach unsuitable for achieving the levels of precision which the present invention is designed to provide.

To overcome the imprecision of the FFT technique, an embodiment of the present invention uses discrete sequence Fourier transforms (DSFTs) calculated on a fine grid to determine the location of the O.D. line with very high precision. By utilizing this approach in combination with other error reducing aspects of the invention, the standard deviations for diameter measurements made with the invention are essentially equal to the theoretical lower limit (the Cramer-Rao bound) for such deviations. The achievement of this lower limit indicates that although there may exist other techniques for determining fiber diameters from far field interference patterns which exhibit high precision, none of those other techniques, if unbiased, will be more precise than the technique of the present invention.

In general terms, a discrete sequence Fourier transform operates by taking a set of M data point values x(kΔθ), k = 0,1,2,...,M-1, and converting those values into a single complex quantity C(f) at a selected spatial frequency f in accordance with the following equation:

$$C(f) = \sum_{k=0}^{M-1} x(k\Delta\theta)\ e^{-ifk\Delta\theta} \qquad (4)$$

See A. V. Oppenheim and R. W. Schafer, Discrete-Time Signal Processing, Prentice-Hall, Englewood Cliffs, New Jersey, 1989, page 45.

DSFTs differ from FFTs in that each time a DSFT is performed, only one Fourier coefficient is generated, whereas for FFTs, a whole set of Fourier coefficients are generated. As a result, DSFTs are much less computationally efficient than FFTs as can be readily seen from the fact that M/2 DSFTs would be needed to generate the M/2 non-redundant coefficients obtained from a single FFT. It is for this reason that for most applications, FFTs are preferred over DSFTs.

Although they are computationally inefficient, DSFTs have an advantage over FFTs in that the frequency at which the coefficient is determined can be selected by the user. In contrast, for an FFT, the frequencies are fixed at the values $k/M\Delta\theta$, k = 0,1,2,...,M-1. It is this advantage of the DSFT which is used in the present invention to achieve the desired high level of precision in determining fiber diameters.

The DSFT approach of the invention can be applied in various ways to determine the location of the O.D. line.

One approach is to calculate coefficients on a sufficiently fine grid so that simply converting the frequency corresponding to the largest coefficient to a fiber diameter will be precise to within 0.02 microns. The grid can, for example, extend up to the Nyquist frequency. Using the 40.242 conversion constant, the spacing which will achieve this goal is approximately 0.0005 cycles/degree. Accordingly, to cover a range of 6.4 cycles per degree requires the performance of 12,800 DSFTs. Calculating this many DSFTs is computationally intensive. However, in view of the ever increasing speed of digital computers, the approach can be used if desired.

A preferred approach is to reduce the number of DSFTs which need to be performed by limiting the range over which the fine grid is used to frequencies where the O.D. line is expected to be found. A preferred method for identifying these frequencies is to perform a FFT on the original data and then use the frequency of the largest coefficient determined by that transform as the center point of the fine grid for which the DSFTs are calculated. In practice, it has been found that this approach allows for the use of a fine grid having a very small size, e.g., a total of 11 DSFTs.

In addition to providing information on where to locate the fine grid, the initial FFT can also be used to check the power level of the light source by, for example, summing the amplitudes of the FFT lines and/or examining the amplitude of the DC line and/or the O.D. line. Also, as discussed below, the initial FFT can be used to determine if defects, such as holes, are present in the fiber.

In addition to using DSFTs calculated on a fine grid to improve the precision of the diameter measurement, a variety of other precision improving techniques are employed in accordance with certain preferred embodiments of the invention. In particular, low pass filtering and downsampling of the original fringe pattern data is performed to increase the signal to noise ratio. (As used herein, the signal to noise ratio is the RMS signal divided by the RMS noise.)

Also, the variation (modulation) in the frequency of the fringe pattern across the angular extent of the detector which the Watkins model predicts, as well as that produced by the lens system used to project the interference pattern onto the detector, is removed from the data so that the DSFTs are performed on a pure sinusoidal signal.

Further, to minimize biasing of the location of the O.D. peak due to the finite extent (truncation) of the fringe pattern used in the analysis, the amplitudes of the leading and trailing data points are reduced by "windowing".

Finally, a parabolic fit is performed in the region of the brightest line of the fine grid DSFTs to provide an even better estimate of the location of the O.D. line.

Each of these precision-improving features of the invention is discussed in detail below in connection with the description of the preferred embodiments of the invention.

In addition to using a DSFT grid having a small number of lines, various other procedures which improve the computational efficiency of the process are employed in the preferred embodiments of the invention. In particular, the frequency demodulation, window correction, and fine grid DSFT steps are combined and performed off-line so that the fine grid spectrum can be obtained by simply multiplying the data values (preferably after low pass filtering) by a precalculated matrix.

Even a further reduction in on-line processing is achieved by replacing the data values with a set of inverse DSFTs applied to selected FFT coefficients determined in the initial analysis of the data. This inverse DSFT step is performed off-line and combined with the other off-line steps, i.e., frequency demodulation, window correction, and the fine grid DSFTs, to produce a very small precalculated matrix which when multiplied by the selected FFT coefficients produces the desired fine grid DSFT line spectrum.

Indeed, in practice, it has been found that only 15 complex FFT coefficients are needed so that to determine a fine grid DSFT spectrum containing, for example, 11 lines, all that needs to be done on-line is to multiply a complex matrix having 165 elements (i.e., a 11 x 15 matrix) times a complex vector comprising the 15 FFT coefficients. It is this reduction in the on-line computational effort which allows the measurement process of the invention to be practiced in real time, using generally available computer components, on, for example, a moving optical waveguide fiber at very high execution rates, e.g., 500 hertz and above, while still maintaining a precision of at least 0.02 microns.

As with the precision-improving features of the invention, each of the foregoing speed-improving features is discussed in detail below in connection with the description of the preferred embodiments of the invention.

In practice, the technique of the invention has been found to a very robust system for making real world measurements of fiber diameters. First, as discussed above, the technique is very precise in the presence of noise.

Second, the technique is extremely linear for fibers having a wide range of diameters. That is, the largest deviation between diameter values determined using the technique on simulated data and the known diameter values of those inputs over a range of fiber diameters from 40 to 250 microns is less than 0.01 microns.

Third, the technique is insensitive to analog to digital quantization and thus operates successfully over a wide range of illuminations, i.e., the technique has a large dynamic range. Indeed, even if the signal is quantified with only a 2 bit A/D converter, i.e., 4 gray scale values, the induced error is again less than 0.01 microns.

Fourth, the technique is insensitive to shifts of the interference pattern across the face of the detector. In particular, shifts of the order of one complete cycle of the interference pattern result in induced errors of less than 0.002 microns.

Fifth, the technique is unaffected by amplitude modulations of the interference pattern which may result, for example, from blemishes in the optical system used to project the interference pattern onto the detector. For example, removing 10% of the fringe pattern across any portion of the pattern results in an induced error of less than 0.003 microns.

In accordance with an embodiment thereof, the invention provides a method and associated apparatus for measuring the diameter of an optical waveguide fiber comprising the steps of:

(a) directing a beam of coherent, monochromatic radiation, e.g., a laser beam, at the fiber so as to produce a far-field (Watkins-type) interference pattern;
(b) using the interference pattern to determine two values for the fiber diameter at two spaced-apart locations, the locations being chosen so that a plot of diameter versus angle of rotation for an elliptical fiber determined for one of the locations is approximately 90° out of phase from the same plot determined at the other location; and
(c) averaging the two values to produce a value for the fiber's diameter which is substantially insensitive to ellipticity of the fiber.

For a fiber having a cladding of fused silica, an angular spacing between the two measurement locations in the range of from about 120° to about 124°, e.g., a spacing of about 123°, has been found to produce the desired phase difference between the two diameter measurements.

The diameter value determined in step (c) is not only ellipticity-insensitive, it is also an excellent approximation of the average diameter of an elliptical fiber so long as the ratio of the minor to the major axis of the fiber is 0.98 or greater. Such a range covers the types of optical waveguide fibers encountered in practice. Below this range, simply averaging the two values tends to produce an overestimate of the average diameter because there are more short radii as the eccentricity of an ellipse increases.

In accordance with another embodiment of the invention, a method and associated apparatus for characterizing the non-circularity of a fiber is provided comprising the steps of:

(a) directing at least one beam of coherent, monochromatic radiation at the fiber to produce at least one far-field interference pattern;
(b) using the interference pattern(s) to determine at least three values for the fiber diameter, one value for each of at least three spaced-apart locations; and
(c) comparing the at least three values of the fiber diameter to produce an index indicative of the non-circularity of the fiber, e.g., determining an index equal to the difference between the largest diameter value and the smallest diameter value divided by the average diameter value.

In certain preferred embodiments of the invention, two of the systems used to determine average diameter, i.e., a laser and two angularly-separated detectors, are stacked on top of one another with one system shifted by 45° relative to the other system. Diameter values are obtained for each of the four detectors and are compared to determine the index of non-circularity.

In accordance with others of its embodiments, the invention may provide two techniques for detecting defects in optical waveguide fibers which can be used separately or, preferably, in combination. Both techniques are based on effects on the far-field interference pattern produced by holes and are applicable to holes ranging in size from about 1% of the fiber's diameter up to about 60% of the fiber's diameter. Each technique involves detecting a portion of the far-field interference pattern, e.g., the portion lying between, for example, 50 and 70 degrees, and then analyzing the detected pattern to determine if a hole is present.

In particular, the first technique involves generating a spatial frequency spectrum for the detected pattern. In certain preferred embodiments of the invention, the spectrum is generated using a fast Fourier transform. The spatial frequency spectrum will contain a line (component) corresponding to the outer diameter of the fiber (hereinafter referred to as the "O.D. line", the "O.D. component", the "first line", or the "first component").

It has been found that, when the fiber contains a defect, the spectrum will contain a second component whose frequency (or frequencies when split (see below)) is greater than that of the D.C. component and less than the frequency of the O.D. component. In particular, for small, centered holes, the frequency of the second component is approximately half the frequency of the O.D. component.

Moreover, it has been further found that as a small, centered hole grows in size, the second component splits into two subcomponents which migrate in opposite directions from the original location of the second component, i.e., one subcomponent moves up in spatial frequency towards the O.D. line as the hole increases in size, while the other subcomponent moves down in spatial frequency towards the DC line.

Accordingly, by detecting this second component and by observing its behavior over time, both small holes and the growth of a hole over time can be monitored.

The second technique involves determining the total power of the detected interference pattern. It has been found that the total power increases essentially linearly with hole size. Accordingly, by monitoring total power over time, one can monitor the creation and growth of holes in the fiber. Pure hole detection can be accomplished by setting a threshold for the total power which when exceeded indicates the presence of a hole. The threshold can be set, for example, empirically by measuring the total power for a defect-free fiber and then adding a selected amount of power to this base level to arrive at the threshold.

In addition to being affected by the presence of holes, the total power is also directly proportional to the power of the light incident on the fiber. Therefore, monitoring total power can be subject to errors due to fluctuations in the illumination system.

However, it has been determined that the magnitude (spectral power) of the O.D. component is also directly proportional to the power of the light incident on the fiber and is essentially independent of the presence of a hole for holes smaller than about 60% of the fiber's diameter. Accordingly, by monitoring both the total power of the interference pattern and the power of the O.D. component, changes due to the presence of a hole can be distinguished from changes due to fluctuations in the illumination system. More specifically, by normalizing total power with the power of the O.D. component, one yields an indicator which is invariant to changes in source power, but which will increase in the presence of a hole of increasing size. Again, by monitoring this normalized power over time, one can monitor the creation and growth of holes in fiber, and by setting a threshold for the normalized power, pure hole detection can be achieved.

In certain embodiments of the invention, spatial frequency spectra are determined at more than one location, e. g., at +61.5° and -61.5° in Figure 2, and second components are searched for and identified in each of the spectra. Differences in the frequency and/or shape and/or size of the second components are then used as an indication of whether the detected hole is on or off center.

Combinations of the above techniques, e.g., second component detection plus total power monitoring plus multiple location detection, can be used to provide cross checks on the operation of the individual techniques.

Because incident light is refracted by the fiber, light from a single source cannot reach all portions of the fiber's cross-section. (Note that this effect also occurs in the prior art technique discussed above.) The embodiments of the invention which use multiple light sources incident on the fiber at different angles can reduce or eliminate these blind spots, thus increasing the probability of detecting holes of arbitrary location.

The accompanying drawings, which are incorporated in and constitute part of the specification, illustrate the preferred embodiments of the invention, and together with the description, serve to explain the principles of the invention. It is to be understood, of course, that both the drawings and the description are explanatory only and are not restrictive of the invention.

## BRIEF DESCRIPTION OF THE DRAWINGS

Figure 1 is a schematic diagram illustrating the elements of a prior art, Watkins-type system for measuring fiber diameter using far-field interference patterns.

Figure 2 is a schematic diagram illustrating the components of an ellipticity-insensitive, fiber diameter measurement system constructed in accordance with an embodiment of the present invention. It should be noted that the high precision diameter measurement aspect of the invention as claimed can be used with fiber diameter measurement systems which are not ellipticity insensitive, e.g., with one detector.

Figures 3a and 3b are graphs of calculated fringe count versus angle of rotation of an elliptical fiber for an eighty degree detector centered at +46° for Figure 3a and -46° for Figure 3b.

Figure 4 shows the superposition of the curves of Figures 3a and 3b.

Figures 5a and 5b are graphs of calculated fringe counts versus angle of rotation of an elliptical fiber for a twenty degree detector centered at +60° for Figure 5a and at -60° for Figure 5b.

Figure 6 shows the superposition of the curves of Figures 5a and 5b and the average of those two curves (curve 41).

Figure 7 is a graph of calculated fringe counts versus angle of rotation of an elliptical fiber for a twenty degree detector centered at +60° for curve 43 and at +70° for curve 45.

Figure 8 is a graph of error attenuation versus angle between detectors obtained from a series of calculations of the type plotted in Figure 6 for included angles between the left and right detectors of Figure 2 of between 116° and 124°.

Figure 9 is a graph of simulated fringe counts versus angle of rotation of an elliptical fiber for two systems of the type shown in Figure 2 wherein one system is shifted by 45° with respect to the other system.

Figure 10 is a graph of simulated fringe counts versus angle of rotation of an elliptical fiber for three detectors located 120° out of phase from one another.

Figure 11(a) shows a typical far-field interference pattern for a 125 micron fiber for the angular range between 50 and 70 degrees.

Figure 11(b) shows the effect of a 20 micron, on-center hole on the fringe pattern of Figure 11(a).

Figure 12 shows a typical frequency spectrum for the far-field interference pattern of a 125 micron fiber over the spatial frequency range from 2.0 cycles/degree to 4.0 cycles/degree.

Figure 13 is a block diagram showing the on-line steps of a preferred embodiment of the present invention.

Figure 14 is a block diagram showing the off-line steps of a preferred embodiment of the present invention.

Figure 15 is a plot of the frequency domain response of a Parks-McClellan filter which can be used in the practice of the invention. The frequencies plotted along the x-axis in this figure have been normalized to the sampling frequency prior to downsampling.

Figure 16 is a plot of local spatial frequency in cycles/degree versus scattering angle.

Figure 17 is a plot of three cycles of a non-frequency modulated sinusoidal curve.

Figure 18 is a plot of three cycles of a frequency modulated sinusoidal curve.

Figure 19 is a plot of angular offset versus data point location used in the removal of frequency modulation from the far-field interference data.

Figures 20 and 21 are schematic diagrams illustrating the effects of a rectangular versus a tapered window on the Fourier transform of a truncated sine wave.

Figure 22 is a plot of fiber diameter standard deviation versus signal to noise ratio. The data points represent the results of applying the procedures of the invention to simulated interference patterns for fibers of various diameters. The straight line represents the theoretical lower limit (Cramer-Rao bound) for the standard deviation as a function of signal to noise ratio.

Figure 23 shows the frequency spectrum of the fringe pattern of Figure 11(a).

Figure 24 shows the frequency spectrum of the far-field interference pattern between 50 and 70 degrees (not shown) of a 125 micron, coreless fiber containing an 80 micron on-center hole.

Figure 25(a) shows a typical far-field interference pattern of a 125 micron, coreless fiber containing a 2 micron on-center hole for the angular range between 50 and 70 degrees.

Figure 25(b) shows the frequency spectrum of the fringe pattern of Figure 25(a).

Figure 26(a) shows a typical far-field interference pattern of a 125 micron, coreless fiber containing a 5 micron on-center hole for the angular range between 50 and 70 degrees.

Figure 26(b) shows the frequency spectrum of the fringe pattern of Figure 26(a).

Figure 27(a) shows a typical far-field interference pattern of a 125 micron, coreless fiber containing a 20 micron on-center hole for the angular range between 50 and 70 degrees.

Figure 27(b) shows the frequency spectrum of the fringe pattern of Figure 27(a).

Figure 28(a) shows a typical far-field interference pattern of a 125 micron, coreless fiber containing a 40 micron on-center hole for the angular range between 50 and 70 degrees.

Figure 28(b) shows the frequency spectrum of the fringe pattern of Figure 28(a).

Figure 29 is a plot of total power in the range from 50 to 70 degrees versus hole diameter for constant incident power.

Figure 30 is a plot of the power of the O.D. component versus hole diameter for constant incident power.

Figure 31 is a schematic diagram showing reflected and refracted rays for a 125 micron, coreless fiber containing a 2 micron, on-center hole.

Figure 32 is a schematic diagram showing the path of refracted rays through an optical waveguide fiber.

## DESCRIPTION OF THE PREFERRED EMBODIMENTS

### Non-Circular Fibers

With reference now to the figures, Figure 2 shows an ellipticity-insensitive system for measuring fiber diameter. As illustrated therein, laser 23 produces a beam 25 of collimated, coherent, monochromatic light. Beam 25 defines a 0° or central axis for the system.

Light from beam 25 is reflected and refracted by fiber 13 so as to produce a far-field interference pattern according to equations 1-3.

Optical systems 26,27 project the far-field interference pattern onto left and right detectors 29,31. The detectors can comprise linear arrays of photodetectors whose output, after analog to digital conversion, consists of a digital representation of the fringe pattern. By way of example, the output of each detector can comprise 2048 digital values representing the level of illumination at each pixel of the photodetector array.

During manufacture, the fiber may translate a few millimeters from its nominal position in the plane which contains the laser and associated detector(s) (hereinafter called the x-y plane). If not corrected for, this could cause a change in the spatial frequency of the fringe pattern which is projected onto the detector(s), and hence spuriously affect the diameter measurement. The optical systems should be designed so as to minimize any measurement error due to x-y translation. This is accomplished by placing the detector in the back focal surface of its associated optical system. This positioning keeps the far-field pattern substantially independent of fiber translation, since, by definition, the focal surface is the place at which translationally separated rays of equal angle converge to a common point.

Since detectors are generally flat, the optical system should preferably have a planar tangential focal surface. More preferably, the optical system should minimize the transverse magnitude of tangential aberrations in the tangential focal plane. In practice, scan lens-type systems have these properties, and have been found to perform well in this application, so long as the fiber's nominal position is at the entrance pupil of the lens. Also, since scan lenses are readily available, one can obtain good performance at reasonable cost. It should be noted that although the optical system can meet a f-θ distortion criteria, the meeting of such a criteria is not necessary since as discussed in detail below, distortions caused by the lens can be anticipated and removed in the frequency demodulation step. It should also be noted that telecentricity, schematically indicated in Figure 2, is not required. Finally, note that sagittal aberrations in the tangential focal plane are generally inconsequential.

In addition to translating during manufacture, the fiber may also tilt by up to 1° from the perpendicular to the x-y plane, causing the scattered pattern to be deflected out of the x-y plane. If the longitudinal extents of the illumination of the fiber and/or the detector are small enough, then the far-field pattern may move up or down off the detector. This problem, if present, can be corrected by placing a cylinder lens in the optics system, oriented so that the line defining its center of curvature is parallel to the x-y plane and perpendicular to the axis of the scan lens, and positioned such that it redeflects a pattern scattered out of the x-y plane back to the detector. As an example of proper positioning, if the scan lens is telecentric, then the cylinder should be positioned so that its back focal line is at the detector surface.

It should be noted that optics are not actually required. One could simply place the detector in the x-y plane at a sufficient distance from the fiber such that the desired angular range is subtended. This arrangement has the advantage of extreme simplicity, with commensurately low cost and high reliability. Its chief disadvantage is that the average spatial frequency of the pattern on the detector is roughly proportional to the distance between the fiber and the detector. Hence, movement of the fiber from its nominal x-y location would cause measurement error. One could prevent this error by keeping the fiber sufficiently close to the nominal location, or correct for the error given knowledge of the actual fiber position. However, to keep the error below 1:5000 (0.02 microns for a 100 micron fiber) one would have to constrain, or determine, the fiber position to 1:5000 of the fiber to detector distance. In practice, in the manufacturing process, such constraint of the fiber position is impractical, and such determination of the position, while feasible, is difficult, and thus the use of an optical system is preferred.

As shown in Figure 2, the center of detector 29 lies at +61.5° and the center of detector 31 lies at -61.5°. The derivation of these values is discussed in detail below. A suitable angular collection range for each detector is 20°, i. e., from +51.5° to +71.5° for detector 29 and from -51.5° to -71.5° for detector 31. Detectors having other angular collection ranges can, of course, be used if desired. For example, in practice, a detector having an angular collection range of 16° has been found to work successfully.

The output of each detector is analyzed separately to produce a signal representative of the diameter of the fiber. The analysis can comprise counting the fringes and partial fringes in the 20° detection interval as described in, among other places, the Watkins patents. Preferably, the analysis is performed using the spatial frequency analysis techniques described below.

Once the two signals representative of the fiber diameter have been generated, they are simply averaged (i.e., added together and divided by two) to produce the desired final signal which is representative of the fiber diameter and which is substantially insensitive to fiber ellipticity.

It should be noted that neither the intermediate signals obtained from the output of the two detectors nor the final signal need actually be a diameter value in, for example, microns. Rather, those signals can be fringe counts, or a characteristic spatial frequency of the fringe pattern, or some other quantity which is representative of the diameter of the fiber. This is especially the case where the fiber diameter measurement is to be used as part of process control where actual diameter values are unnecessary. Although the signals need not be diameter measurements, each signal needs to be separately calibrated so as to avoid biasing of the average. In particular, for a cylindrical fiber, the two signals should be essentially equal.

The process and underlying theory for determining the location of the detectors is illustrated in Figures 3-7. The curves in these figures are plots of calculated fringe counts versus angle of rotation for an elliptical fiber rotated through 180°. The geometry used is that of Figure 1 where the fiber has the elliptical surface shown schematically at 21. The fiber is assumed to rotate counter-clockwise and 0° of rotation corresponds to the fiber's minor axis being parallel to the system's central (laser) axis.

For purposes of calculation, the fiber's core and cladding were assumed to have indices of refraction of 1.469 and 1.457, respectively. The core diameter was assumed to be 8.0 microns, and the major and minor diameters of the cladding were 126.0 microns and 124.0 microns, respectively. These dimensions and refractive indices are typical of those that would be found in the application of the invention to the control of the drawing process for a single mode optical waveguide fiber. For other types of transparent filaments, similar calculations are performed using parameters appropriate to the filament whose diameter is to be measured.

The calculations were performed by ray tracing in which phase was tracked for the various rays so that the interference effects in the far field could be seen. The calculations also kept track of the power associated with the various rays, including multiply reflected rays, so as to produce a realistic far field pattern. To keep the calculations manageable, rays representing very small amounts of power were ignored. In general, at least 99% of the incident power was accounted for. The accuracy of the ray tracing technique was confirmed by comparison with solutions of the scalar wave equations for the far field for cylindrical fibers.

The curves in Figure 3 were calculated for two 80° detectors centered at +46° and -46° for Figures 3a and 3b, respectively. Curves 37 and 39 in Figures 5-6 were calculated for two 20° detectors centered at +60° and -60°, respectively. Curves 43 and 45 in Figure 7 were calculated for a 20° detector centered at +60° and +70°, respectively.

An examination of Figure 1 reveals a number of basic properties of the curves of Figures 3-7. First, because of the symmetry of elliptical surface 21, the period of these curves is 180°. Second, for detectors which are symmetrically located relative to the system's axis, i.e., $\theta 1 = -\theta 2$, the fringe counts at the two detectors ($N_{\theta 1}$ and $N_{\theta 2}$) satisfy the following relationship:

$$N_{\theta 1}(\omega) = N_{\theta 2}(-\omega) \tag{5}$$

where $\omega$ is the angle of rotation of the elliptical fiber.

Each of the fringe count curves shown in Figures 3-7 can be approximated by the sum of a constant value plus a sinusoidal ripple, i.e., by an equation of the following form:

$$N_{\theta}(\omega) \simeq K(\theta) + A(\theta)[\sin 2(\omega + \phi(\theta))] \tag{6}$$

where $K(\theta)$ is the constant value and $A(\theta)$ and $\phi(\theta)$ are the amplitude and phase of the ripple, all of which, in the general case, depend upon the detector angle $\theta$.

An examination of Figure 3 reveals that for these curves, $K(\theta)$ is approximately 191.35 fringes, $A(\theta)$ is approximately 1.25 fringes, and $\phi(\theta)$ is approximately 15° for Figure 3a and approximately 75° for Figure 3b.

In accordance with the embodiment of the invention, two detector locations ($\theta 1$ and $\theta 2$) are chosen such that the average of the diameters measured at the locations is insensitive to the ellipticity of the fiber, i.e.,

$$[N_{\theta 1}(\omega) + N_{\theta 2}(\omega)]/2 = N_{av} \tag{7}$$

for all $\omega$.

Considering first the case of two detectors located on opposite sides of the system's central axis and equally angularly spaced from that axis, i.e., $\theta 1 = -\theta 2$, we have from symmetry:

$$K(\theta 1) = K(\theta 2) \tag{8}$$

$$A(\theta 1) = A(\theta 2) \tag{9}$$

Accordingly, for equation 7 to be satisfied for curves having the form of equation 6, the following relationship must be satisfied for all $\omega$:

$$\sin 2(\omega + \phi(\theta 1)) = - \sin 2(\omega + \phi(\theta 2)) \tag{10}$$

This in turn means that $\phi(\theta 1)$ and $\phi(\theta 2)$ must satisfy the following relationship:

$$\phi(\theta 1) - \phi(\theta 2) = (2m-1)\ \pi/2,\ m = 1,2,... \quad (11)$$

Or, in graphical terms, the fringe count curves for the first and second detector locations must be 90° out of phase.

As shown in Figure 4, the fringe count curves of Figures 3a and 3b, which correspond to detector locations of ±46°, i.e., roughly perpendicular, do not satisfy equation 10. The phase difference for these two curves is approximately 60°, rather than the desired 90°. Accordingly, the average of diameter measurements for these two detector locations is not insensitive to ellipticity as is desired.

However, as illustrated in Figures 5(a) and 5(b), moving the detectors farther apart to approximately ±60° does achieve the desired phase difference of approximately 90°. As shown in Figure 6, the average of the fringe counts for these two locations, i.e., curve 41 in Figure 6, is substantially independent of the angle of rotation of the fiber.

Even further insensitivity to ellipticity can be achieved by following the procedure illustrated in Figure 8. The vertical axis (error attenuation axis) in this figure is a plot of the ratio of the peak-to-peak amplitude of the fringe count curve for a single detector, e.g., curve 37 or 39 in Figure 6, to the peak-to-peak amplitude of the two-detector average curve, e.g., curve 41 in Figure 6. The horizontal axis is the angular spacing between the detectors. As shown in this figure, the greatest error attenuations, i.e., error attenuations of at least 20 to 1, occur in the range between about 120° and about 124°, with the maximum occurring at about 122°. It should be noted that, because of the complex nature of the fringe pattern, complete insensitivity to ellipticity, which would correspond to an infinite error attenuation value, is not achieved even for the calculated optimum detector spacing. However, a 20 to 1 reduction is adequate for practical applications.

The fringe count curves, and thus the error attenuation curve of Figure 8, depend upon the index of refraction of the cladding. In general, the detector spacing which achieves the maximum error attenuation is a weakly increasing function of the index of refraction. However, for index changes of less than 0.05 the optimum detector spacing is not significantly changed. Accordingly, a wide variety of fiber types under a wide range of temperatures can be measured with a high degree of ellipticity attenuation using the same detector spacing.

In practice, a spacing of 123° ($\theta = \pm 61.5°$) has been found to work successfully in the measurement of a variety of single-mode and multi-mode optical waveguide fibers over a wide range of temperatures.

The curves of Figures 3-8 have been calculated for a fiber having a purely elliptical shape. In practice, a fiber's deviation from circularity may include components other than those represented by an ellipse. Accordingly, some residual sensitivity to non-circularity can be expected even for a detector spacing corresponding to the maximum calculated error attenuation value.

In practice, it has been found that the main component of the out-of-roundness of optical waveguide fibers is elliptical for out-of-roundnesses greater than about 0.2 microns. Accordingly, the technique of the present invention affords excellent error attenuation for such fibers. Fibers having lower levels of out-of-roundness tend to be less elliptical in shape, therefore diminishing to some extent the error attenuation achieved by the invention. However, the difference between the minimum and maximum diameters for such fibers is so small that the somewhat diminished error attenuation is inconsequential.

The desired insensitivity to ellipticity can also be achieved for non-symmetric arrangements of the detectors. In general, the phase of the fringe count curve increases approximately linearly with $\theta$, i.e., the phase increases approximately 1° for each 1° increase in the magnitude of $\theta$. This effect is illustrated in Figure 7 where curves 43 and 45 have been calculated for detector center angles of 60° and 70°, respectively.

From symmetry, similar, but opposite, changes occur for a detector located around -60°, i.e., the phase decreases approximately 1° for each 1° decrease in the magnitude of $\theta$. Accordingly, the desired 90° phase difference can be maintained by making equal, but opposite, changes in the locations of the left and right detectors, e.g., by moving the left detector from 60° to 70° while moving the right detector from -60° to -50°. Put another way, the desired 90° phase difference can be maintained by holding the spacing between the detectors at about 120°.

Although the non-symmetric configuration can be used, the symmetric configuration is preferred for a number of reasons. First, to maintain the spacing of about 120°, one of the detectors must move closer to the system's central axis. As a result, the effects of the core will be greater for this detector than for the detector farther from the axis.

Also, as shown in Figure 7, the $K(\theta)$ and $A(\theta)$ values in equation 6 change with detector angle. To maintain the maximum level of ellipticity insensitivity, this effect should be removed from the data to avoid biasing of the average of the diameter measurements for the two detectors, i.e., the detectors should be calibrated at their respective locations to give substantially equal signals for a cylindrical fiber.

Although it is preferred to perform the ellipticity-insensitive diameter measurement using one laser and two coplanar detectors, as described above, it should be noted that such measurements can also be performed using two lasers and two detectors.

In particular, two separate but identical laser-detector assemblies, each comprising one laser and one detector, can be stacked on top of one another so that the interference pattern produced by the first laser does not mix with the interference pattern produced by the second laser.

The assemblies can be stacked coaxially, with the separation of the two interference patterns being accomplished by a slight longitudinal displacement of the two assemblies. Alternatively, the two systems can be stacked so that both measure the same longitudinal position of the fiber, with the separation of the two fringe patterns being accomplished by a slight relative angling of the two laser beams as viewed in a direction perpendicular to the fiber.

The coaxial stacking scheme is more straightforward, but can induce errors if the geometry of the fiber is not identical at the two longitudinal locations. The laser angling scheme removes the above concern, but adds complexity to the manufacture and alignment of the apparatus. In practice, coaxial stacking has been used with a longitudinal separation of the two assemblies of about one millimeter. Over such a short distance, fiber geometry changes are generally insignificant, especially as measured on a moving fiber during fiber draw.

Whichever approach is used, i.e., coaxial stacking or laser angling, by orienting the two identical laser-detector assemblies at 90° to each other, the necessary 90° phase shift in the fringe count vs. fiber angle curve is achieved. It should be noted that ellipticity insensitivity is not contingent upon having an approximately 60° angle between laser and detector in each laser-detector assembly. In fact, so long as the two assemblies are identical, the detectors can be placed at any angle relative to their associated lasers where the fringe pattern is representative of diameter. (See the Watkins patents.)

More generally, the two laser-detector assemblies do not have to be identical, so long as they are azimuthally oriented such that their resultant fringe count vs. fiber orientation curves are 90° out of phase.

In either the identical or nonidentical cases, the average of the diameter measurements are substantially independent of fiber ellipticity, as with the coplanar configuration of Figure 2. The need for an extra laser, however, makes these approaches more expensive to implement in practice than the one laser/two detector approach.

In addition to being able to determine the average diameter of a non-circular fiber, it is also important to be able to characterize the extent to which the fiber is non-circular. With reference to Figure 6, it can be seen that the difference between curves 37 and 39 at their peak values, i.e., around 45 and 135 degrees, provides a good measure of non-circularity. Unfortunately, at other angles the difference is less meaningful and at 0, 90, and 180 degrees, the difference drops to zero and thus erroneously indicates that the fiber is circular. In practice, of course, the orientation of the fiber with respect to the detectors is in general unknown.

Figure 9 illustrates a solution to this problem wherein four detectors, rather than two detectors, are used to measure the diameter of the fiber. Preferably, the four detectors are composed of two systems of the type shown in Figure 2 placed on top of one another, with the central axis of the second system shifted by 45° relative to the central axis of the first system. This shift causes fringe count curves for the second system to be shifted by 45° relative to the fringe count curves for the first system, thus filling in the gaps between the curves as shown in Figure 9.

Various indices indicative of the non-circularity of the fiber can be determined from the diameter measurements obtained from the four detectors. For example, an index equal to the largest measured diameter minus the smallest measured diameter divided by the average measured diameter can be used. For Figure 9, this index varies from about 0.016 to about 0.011, with the maximum error occurring for fiber orientations of around 20°, 70°, 110°, and 160°. This error is around 30% and comprises an underestimate of the degree of non-circularity.

By assuming that the non-circularity of the fiber is purely elliptical, the error in the estimate of the degree of non-circularity can be reduced by performing an elliptical fit. However, in general, it is preferred not to assume that the non-circularity is purely elliptical, and thus the procedure of using an index of the type discussed above is preferred.

Although illustrated for the case of four detectors, it is to be understood that in general ellipticity can be characterized using three or more detectors. The configurations of the detectors logically break into two qualitatively different types: configurations using an odd number of detectors and configurations using an even number.

The odd number configurations have the advantage that the maximum underestimate of non-circularity is less than that for the next larger even number system, e.g., the underestimate for three detectors is less than that for four detectors.

This effect can be seen by comparing Figures 9 and 10. For fiber rotation orientations around 20°, 70°, 110°, and 160° in Figure 9, the largest overestimate of the fiber's minor axis coincides with the largest underestimate of the fiber's major axis, thus yielding the maximum underestimate of the fiber's non-circularity.

For an odd number of detectors, this coincidence of greatest error for the major and minor axes does not occur. This effect is illustrated in Figure 10 for the case of three detectors. As shown in this figure, the location at which the overestimate of the minor axis is largest corresponds to a correct estimate of the major axis and vice versa, the location at which the underestimate of the major axis is largest corresponds to a correct estimate of the minor axis. As a result, the overall maximum underestimate of the fiber's non-circularity is less for the three detector system (i.e., about 25%) than for the four detector system (i.e., about 30%). Also, the variation in the estimate of non-circularity is less for the three detector system than the four detector system, i.e., in Figure 9 the underestimate ranges from 0% to about 30%, while in Figure 10 the range is much narrower and goes from about 12% to about 25%.

The disadvantage of an odd number of views comes from practical problems in arranging the detectors and the lasers. For example, for a three detector system, the detectors should be placed around the fiber so that plots of fringe count versus angle of fiber rotation for the three locations are 120° out of phase (see Figure 10). In general, if only one laser is used, this will put one of the detectors at a location where the fringe pattern is not representative of the diameter of the fiber (see the Watkins patents). Accordingly, at a minimum, one would need to use two lasers to achieve a three detector system with one laser being associated with two of the detectors and the other laser associated with the third detector. More simply, three lasers and three detectors can be used, where the laser-detector pairs are stacked on top of one another with their central axes shifted by 120°.

In general, the increased complexity of the odd number configuration makes the even number configuration preferable. In particular, using repeating units of the basic, two-view, ellipticity-insensitive system shown in Figure 2 is considered the most preferred approach for quantifying fiber non-circularity since, among other things, it requires no changes to an existing two view, ellipticity-insensitive system to upgrade to a four or more view, non-circularity quantification system, and it provides redundancy with regard to ellipticity-insensitivity since in the event of failure within one of the basic two-view systems, any of the remaining two-view systems will yield an ellipticity-insensitive measurement of the fiber diameter.

It should be noted in Figures 9 and 10, that the average of the signals from the four detectors in Figure 9 or the three detectors in Figure 10 is insensitive to fiber ellipticity (see curves 50 and 52). More generally, ellipticity-insensitivity can be achieved by locating a plurality of detectors, i.e., "M" detectors, around a fiber such that plots of diameter versus angle of rotation for an elliptical fiber determined for the M locations are approximately 180°/M out of phase from one another. Thus, in moving from two to three or more views, one gains the ability to quantify fiber non-circularity without losing the ability to make a ellipticity-insensitive measurement of fiber diameter.

In addition to their use in generating fiber diameter measurements which are insensitive to ellipticity and in characterizing the non-circularity of fibers, the various embodiments of the invention can also be used to generate an estimate of and/or control to the maximum material condition (MMC) of the fiber during fiber draw. The MMC for a fiber can be defined as the smallest circle which circumscribes the fiber. For an ellipse, it is the major axis of the ellipse. Its relevance is to applications in which the fiber is placed within a rigid tube, e.g., a connector ferrule. The MMC can be estimated as the maximum diameter measured among the M views, or alternatively, can be estimated as the major axis of a fit ellipse. The pros and cons of these two estimate techniques are the same as the pros and cons of the related techniques for estimating fiber non-circularity discussed above.

As an example of the an estimation technique for the MMC, in Figure 6, the MMC at any given fiber angle is the larger of curves 37 and 39. Note that, in this case, the MMC is correctly estimated only at the 45° and 90° orientations. At other fiber orientations, the MMC is underestimated, with a maximum underestimate equal to 50% of the difference of the major and minor axes occurring at the O°, 90°, and 180° orientations. While this error is smaller than would be yielded if a single view were used to estimate the MMC, it is still relatively large compared to desired level of measurement and control. Generally, the magnitude of underestimate is reduced as the number of views is increased. As an illustration of this improvement, for the four view system shown in Figure 9, the maximum underestimate of the MMC, occurring at the 22.5°, 67.5°, 112.5°, and 157.5° orientations, is only 29% of the difference between the major and minor axes.

High Precision Diameter Measurement

As discussed above, in overview, the diameter measurement process of the invention involves determining the spatial frequency ω of the O.D. line for a far-field interference pattern of the type shown in Figure 11(a).

Figure 12 shows the spectrum of such a pattern for spatial frequencies between 2.0 and 4.0 cycles/degree. As with the interference pattern of Figure 11(a), the spectrum of Figure 12 is for the representative parameters discussed above and a 125 micron fiber. The spectrum was determined by applying DSFTs at a spacing of 0.01 cycles/degree to a calculated interference pattern. As can be seen from this figure, the spectrum comprises a series of peaks (lines) at different spatial frequencies having various amplitudes.

The O.D. line for this pattern is identified in Figure 12 by the reference numeral 70 and the gallery mode line (discussed below) by the numeral 72. The object of the invention is to find the frequency of the O.D. line with a precision of at least $5x10^{-4}$ cycles/degree. The various process steps which are used to achieve this result are shown in Figures 13 and 14, where Figure 13 shows the steps which are performed on-line and Figure 14 shows those which are performed off-line and then stored for later use by the on-line processor. The operation of these various steps is as follows:

I. Prefiltering and Downsampling

The first on-line step in processing the data representing the interference pattern is prefiltering and downsampling step 520. The purpose of prefiltering is to 1) improve the signal to noise ratio of the digital data and 2) avoid the possibility of aliasing in the subsequent downsampling procedure, i.e., a higher frequency spuriously folding down into the frequency range of interest. The purpose of downsampling is to reduce the number of data points fed to the remaining on-line processing steps so as to minimize on-line processing time.

By taking more samples than are needed and then low pass filtering and eliminating unneeded samples, the signal to noise ratio ("s/n ratio") of the data is significantly improved. In particular, the s/n ratio is increased by the square root of decimation rate (e.g., by about 2.8 for a reduction from 2048 samples to 256 samples).

The cut-off frequency of the low pass filter is selected so that the O.D. frequencies for the fiber diameters of interest remain in the data after filtering. As can be seen from equation 3, the O.D. frequency is a linear function of the fiber diameter. Using the 40.242 conversion constant discussed above, the O.D. frequency for a 125 micron fiber is approximately 3.1 cycles/degree. If fibers having diameters of up to 250 microns are to be measured, a low pass filter having a cut-off frequency above 6.2 cycles/degree would thus be chosen.

The effect of filtering is to introduce a shift (bias) in the frequency of the O.D. line. In particular, after filtering the peak appears to have been shifted to the frequency at which the spectrum obtained for unfiltered data has a slope equal and opposite in sign to that of the filter gain slope at the O.D. frequency. Accordingly, a filter should be selected for which the bias is less than the precision with which the O.D. line is to be determined. For the Parks-McClellan filter discussed below, the bias is less than about $25 \times 10^{-6}$ cycles/degree and thus does not substantially affect the precision of the diameter measurement.

To achieve an improved s/n ratio, spectral power above the Nyquist or folding frequency for the downsampled data should be removed. For example, for 2048 pixels distributed over a 20° detector, the Nyquist frequency is 51.2 cycles/degree($f_N$ = 0.5*(2048/20) = 51.2 cycles/degree). Downsampling the data to 256 data points (i.e., an 8 to 1 decimation) reduces the Nyquist frequency to 6.4 cycles/degree. Accordingly, a low pass filter having a cut-off frequency in the neighborhood of 6.4 cycles/degree would be used for this example. It should be noted that this number is greater than the 6.2 cycles/degree value calculated above based on a fiber diameter of 250 microns. The larger number, of course, is the one which needs to be implemented.

Various digital filters known in the art can be used for the low pass filter. Similarly, various downsampling rates can be employed in the practice of the invention. For example, for 2048 data points distributed over a 20° detector, downsampling at an 8:1 rate and filtering with a 26 point finite impulse response (FIR) Parks-McClellan filter have been found to work successfully.

A general discussion of Parks-McClellan filters can be found in A. V. Oppenheim and R. W. Schafer, Discrete-Time Signal Processing, Prentice-Hall, Englewood Cliffs, New Jersey, 1989, pp. 465-488; and T. W. Parks and C. S. Burrus, Digital Filter Design, John Wiley & Sons, New York, 1987, pp. 89-106. Table 1 sets forth a suitable set of coefficients for use with this filter. These coefficients produce a cut-off frequency of approximately 6.4 cycles/degree and in practice have been found to accurately pass the O.D. lines for fibers in the 40 to 250 micron range. A plot of the filter's frequency domain response is shown in Figure 15. Downsampling of the original data is achieved by calculating an output for this filter for every eighth point.

II. Fast Fourier Transform

The second on-line processing step 54 comprises performing a fast Fourier transform on the filtered and downsampled data to produce a set of complex coefficients in the frequency domain. A suitable procedure for performing the FFT is that described by Cooley, Lewis, and Welch in a paper entitled "The Fast Fourier Transform and its Applications," IBM Research Paper RC 1743, February 9, 1967.

As discussed in detail below, in addition to its use in precisely determining fiber diameters, the output of the FFT can also be used to detect defects such as holes in the fiber and to monitor the operation of the laser, optical system, and detector by, for example, checking the overall power in the FFT spectrum and/or the amplitude of the DC and/or O.D. lines.

III. Identification of the O.D.

Line In the FFT Spectrum

The third on-line processing step 56 comprises identifying the O.D. line in the FFT spectrum. The search is performed using the magnitudes of the FFT coefficiencies. The goal is to find the coefficient having the largest magnitude, other than the DC coefficient or coefficients relating to defects in the fiber, the frequencies for which are smaller than that of the O.D. line.

If the diameter of the fiber being measured is generally known, the search can begin above the region where the O.D. line for such a fiber is expected to occur and then proceed downward. More particularly, the search can begin with lines above the frequency of the expected O.D. line and then proceed to lines having lower frequencies. (Note that the spacing of the FFT lines is one over the angular extent of the detector, e.g., 0.05 cycles/degree for a 20° detector.) For example, for the 125 micron representative fiber described above, the search would begin above 3.1 cycles/degree, e.g., above spectrum line 62 for a 20° detector.

Alternatively, the search can begin above the region of the O.D. line for the largest fiber diameter the system is designed to measure and proceed downward to lower frequencies, e.g., if the largest fiber to be measured has a diameter of 250 microns, the search can begin above spectrum line 124 and proceed downward.

In either case, the search can be terminated in the region of the O.D. line for the smallest fiber diameter to be measured, e.g., a diameter of about 40 microns corresponding to about spectrum line 20 for a 20° detector.

The desired maximum can be found be searching for a line whose magnitude is greater than both the adjacent preceding and adjacent succeeding lines. Also, it is desirable to require that the magnitude of the maximum line be greater than a threshold.

In particular, it has been found that FFT spectrums for optical waveguide fibers can include a peak at a frequency above the O.D. line (see line 72 in Figure 4), the presence or absence of which depends upon the wavelength of the incident light and the diameter of the fiber. It is believed that this higher frequency line results from "gallery" modes which propagate around the surface of the fiber, and thus whether or not a particular fiber produces this line will depend upon the length of the fiber's circumference in relation to the wavelength of the incident light. This higher frequency line has a smaller amplitude than the O.D. line. Accordingly, by properly setting the threshold, the search procedure will ignore this line and find the desired O.D. line. In practice, the use of a fixed threshold of nominally one fourth (0.25) of the typical peak amplitude of the O.D. line has been found to work successfully in identifying the O.D. line in the presence of the gallery mode line. If desired, an automatic gain control system applied to the operation of the detector can be used to keep the expected height of the O.D. line constant.

Once the O.D. line has been identified, it and a preselected number of lines on either side of it are used in the remaining on-line process steps. As discussed above, in accordance with the invention, it has been found that the original fringe data does not have to be used in determining the fine grid DSFTs. (Note that the original data can be used if desired.) Rather, reconstructed data obtained by applying inverse DSFTs to selected FFT coefficients in the region of the O.D. line has been found to contain sufficient information to allow the location of the O.D. line to be determined with high precision.

The number of FFT coefficients which needs to be retained for the subsequent on-line processing steps depends upon such variables as the spacing of the FFT lines, the "window" correction applied to the data, the data's signal to noise ratio, the range of diameters to be measured, the size of the detector, and the inherent modulation of the frequency of the fringe pattern predicted by the Watkins model as well as that introduced by the lens system used to project the interference pattern onto the detector. As a general guide, the selected FFT lines should extend out from the O.D. line by at least about $\pm 4/M\Delta\theta$ cycles/degree, where M is the number of data points and $\Delta\theta$ is the spacing between data points. That is, at least four FFT lines on either side of the O.D. line should be used.

For any particular application, the optimal number of lines can be determined by, for example, applying the process to simulated fringe data for a set of selected fiber diameters, and then varying the number of lines used to reconstruct the data to find the number for which the process generates fiber diameters which are sufficiently close to the selected fiber diameters. The simulated fringe data can be calculated using, for example, the Watkins equations or a wave equation model to which is added simulated noise, e.g., white Gaussian noise.

In practice, for the representative parameters set forth above and the preferred process steps of Figures 13 and 14, it has been found that a total of 15 FFT coefficients centered around the O.D. line are sufficient to provide the desired 0.02 micron level of precision in the measured fiber diameters. Even fewer lines can be used if desired. For example, as few as 9 lines were found to produce good results, although the 15 line results were considered more robust.

In Figure 13, the 15 coefficients are represented by the column vector $[A_1 \ldots A_{15}]$.

IV. Matrix Multiplication

The fourth on-line processing step 58 comprises multiplying the selected FFT coefficients by a precomputed matrix which incorporates 1) the inverse DSFT operation, 2) frequency demodulation, 3) the window correction, and 4) the calculation of the fine grid DSFT lines. In Figure 13, this matrix is identified by the reference numeral 60. The construction of this matrix is shown in Figure 14 and discussed in detail below. The result of multiplying the FFT coefficients by the precomputed matrix is to produce a set of complex coefficients representing the spectral power at the fine grid frequencies.

The number of columns in the matrix equals the number of FFT coefficients, e.g., 15, and the number of rows equals the number of fine grid DSFT lines, e.g., 11. Because both the FFT lines used to reconstruct the data and the fine grid used for the DSFTs must be spaced around the O.D. line, the values of the matrix elements change as the location of the O.D. line changes. In practice, a large matrix, e.g., a matrix having 100 columns and 500 rows, is constructed covering a range of O.D. line locations, and the coarse location of the O.D. line as determined by FFT step 54 is used to select the appropriate columns and rows of this large matrix for use in multiplication step 58.

The range of O.D. line locations which are included in the matrix is determined by the range of diameters the system is to measure, e.g., if the system is to measure diameters ranging from 40 microns to 250 microns, then for the representative parameters set forth above, O.D. lines ranging from about 1.0 cycle/degree to about 6.2 cycles/degree would be included in the large matrix.

The number of columns needed in the large matrix to cover this range depends on the spacing between the FFT lines. As discussed above, the FFT spacing for a 20° detector is 0.05 cycles/degree. Accordingly, approximately 100 columns would be needed to cover the range from 1.0 to 6.2 cycles/degree for this detector. Similarly, the number of rows is determined by the fine grid spacing. For a fine grid spacing of 0.01 cycles/degree, approximately 500 rows would be needed to cover the same range.

The large matrix is stored in a ROM or other suitable storage medium for access as a look-up table during the performance of the on-line processing steps.

V. <u>Location of the O.D. Line in the DSFT Spectrum</u>

The fifth and sixth on-line processing steps 62 and 64 comprise locating the O.D. line in the fine grid DSFT spectrum generated by matrix multiplication step 58.

A two step process is preferably used. First, in step 62, the locations of the three brightest DSFT lines are determined, i.e., the three C(f) coefficients in equation 4 having the largest magnitudes are located. (Note that the $x(k\Delta\theta)$ values used in equation 4 are not the original data points, but rather the points after signal processing in accordance with Figure 13.) Then, in step 64, a parabola is fitted to these three points to obtain an even better estimate of the frequency corresponding to the maximum spectral power.

In particular, using the magnitudes of the three largest coefficients ($|C(f_{m-1})|$, $|C(f_m)|$, and $|C(f_{m+1})|$), the a, b, and c coefficients in the following equation are determined:

$$|C(f)| = a + bf + cf^2 \qquad (12)$$

The frequency corresponding to the peak of the parabola is then given by:

$$f_p = -b/(2c). \qquad (13)$$

VI. <u>Determination of Fiber Diameter Value</u>

The last on-line processing step 66 comprises converting the frequency determined from equation 13 to a fiber diameter value. As discussed above, this step simply involves multiplying the frequency by a constant, e.g., 40.242 for the representative parameters discussed above. In practice, the constant is preferably determined empirically by calibrating the system using cylindrical fibers having known diameters.

Turning now to Figure 14, this figure describes the various components which make up the precalculated matrix used in step 58 of Figure 13. In particular, the precalculated matrix is the product of four matrices identified by the letters A, B, C, and D in Figure 14.

The construction of each of these matrices is discussed below. For ease of explanation, the discussion is in terms of the matrix elements used for any one calculation in step 58, it being understood that in practice the matrix elements are selected from the large matrix based on the frequency of the O.D. line determined from FFT step 54.

A. <u>Inverse DSFT Matrix</u>

The inverse DSFT matrix (matrix A) serves to create a reconstructed fringe pattern from the selected FFT coefficients (e.g., 15 coefficients) surrounding the O.D. line determined by FFT step 54. The elements of this complex matrix are given by:

$$a_{mn} = e^{j2\pi f_n m} \qquad (14)$$

where m goes from 1 to the number of data points used in performing the FFT (e.g., 256) and n goes from 1 to the selected number of FFT lines used in the reconstruction (e.g., 15). The effect of multiplying the A matrix by the FFT lines is to produce a set of data values which contains substantial information regarding the O.D. line and reduced information regarding other features of the original data, such as, defects in the fiber, gallery modes, DC levels, and the like.

The $f_n$'s in equation 14 are the frequencies in cycles/degree of the selected FFT lines which surround the FFT O. D. line. For example, for a 125 micron fiber, a 20° detector, 15 lines, and the representative parameters described above, the $f_n$'s would be 0.05 cycles/degree apart, would span a range of 0.7 cycles/degree (14 x 0.05), and would be centered around 3.1 cycles/degree.

B. Frequency Demodulation

The frequency demodulation matrix (matrix B) serves to remove variations (modulations) of the fringe pattern frequency over the angular range of the detector due to 1) the inherent frequency modulation of the interference pattern predicted by the Watkins model, and 2) distortions in the fringe pattern introduced by the optical system used to project the pattern onto the detector.

The advantages of removing the frequency modulators are 1) the width of the O.D. peak is somewhat reduced, and 2) the technique becomes less sensitive to missing fringes. Indeed, in practice, it has been found that the measured diameter is essentially unaffected even with as much as 30% of the fringes blocked. Also, if the modulation frequency predicted by the Watkins model were not removed, the estimate of fiber diameter using the location of the O.D. line would exhibit a substantial bias which increased linearly with fiber diameter.

With regard to the inherent frequency modulation of the interference pattern, the Watkins model predicts that the pattern will have a local frequency which varies with θ as follows:

$$f_L(\theta) = [d\pi/(2\lambda 180)]\,[\cos(\underline{\theta}/2 + n \sin(\underline{\theta}/2)\ x$$

$$[n^2 + 1 - 2n \cos(\underline{\theta}/2)]^{-1/2}] \qquad (15)$$

where $\underline{\theta}$ is measured in radians.

This modulation as a function of θ can be seen in Figure 16, which shows a plot of equation 15 for the representative parameters discussed above and a 125 micron fiber over the angular range from 50 to 70 degrees. As shown in this figure, the maximum local frequency for these parameters occurs around 60°.

In accordance with the invention, the effect of this frequency modulation is eliminated from the data by substituting at each data point the value of the light intensity which would exist at that point if there were no modulation. The process is illustrated in Figures 17 and 18.

Figure 17 shows three cycles of a sinusoidal curve which is not frequency modulated. For this curve, the phase of the sine wave increases by 45° for each of the 24 data points shown along the x-axis.

Figure 18 shows three cycles of a sinusoidal curve which is frequency modulated over the same 24 data points. The 45° phase points identified in Figure 18 for this curve are not equally distributed along the x-axis as in Figure 17, but are variably spaced as a result of the frequency modulation. However, if one were to substitute at each of the 24 data points in Figure 18, the value of the curve at the corresponding 45° point (e.g., substitute at data point 3, the value of the curve at 3 x 45°), the result would be Figure 17.

That is, the result of the substitution would be to eliminate the frequency modulation, while still retaining the same total number of cycles. Looked at another way, the average frequencies for the curves of Figures 17 and 18 are the same, but the curve of Figure 17 is a pure sine wave which can be more readily Fourier analyzed than the curve of Figure 18. Of course, it is the average frequency which needs to be determined, not the local frequency, and thus analysis of the curve of Figure 17 provides the required information for a diameter determination even though that curve lacks information about the local frequency.

The problem then becomes identifying the locations of the equal phase points in the interference pattern so that values for those points (i.e., interpolated values for those points (see below)) can be substituted for the values at the original data points. Equation 15 would suggest that such equal phase points cannot be found without first knowing the diameter d of the fiber, which is, of course, the unknown which the process is seeking to determine. However, in accordance with the invention, it has been surprisingly found that the locations of the equal phase points are independent of the fiber's diameter.

In particular, it has been found that the equal phase points θ(i), i = 1,2,...,M, where M is the original number of data points, e.g., 256, can be found by solving the following transcendental equations:

$$E(\theta(i)/2) = \alpha E(\theta_b/2) + (1-\alpha)E(\theta_a/2) \quad (16)$$

$$\alpha = (i-1)/(M-1) \qquad 2 < i < M-1 \quad (17)$$

where $\theta_a$ and $\theta_b$ are the angular locations of the first and Mth data points, respectively, and $E(\theta_i/2)$ is given by:

$$E(\theta_i/2) = \sin(\theta_i/4) + [n^2 + 1 - 2n\cos(\theta_i/4)]^{1/2} \quad (18)$$

These equations can be solved by well known numerical successive approximation techniques, e.g., by 1) evaluating the right side of equation 16, 2) guessing a value for $\theta_i$, e.g., the angular location of the original data point, 3) determining $E(\theta_i/2)$ for that guess from equation 18, 4) computing the difference $\Delta$ between $E(\theta_i/2)$ and the right side of equation 16, and 5) repeating the process with an improved guess until $\Delta$ is sufficiently small. The improved guess can, for example, be the original guess minus $\Delta \times (\theta_b - \theta_a)/(E(\theta_b/2) - E(\theta_a/2))$.

The results of applying this process is shown in Figure 19 in terms of the offset between the actual locations of the data points and the points at which the value of the interference pattern needs to be determined to eliminate the frequency modulation. That is, for the first 128 data points, the value of the interference pattern needs to be determined at a slightly larger angle (e.g., a maximum increase of 0.0078° for data point 64), and for the second 128 data points, at a slightly smaller angle (e.g., a maximum decrease of 0.0078° for data point 192).

The plot of Figure 19 provides a convenient way of incorporating into the frequency demodulation matrix the effects of distortions resulting from the optical system used to project the far-field interference pattern onto the detector.

Using conventional ray-tracing techniques, a plot similar to Figure 19 can be constructed for the particular lens system used in the fiber measurement system. That is, for each data point, an offset can be calculated representing the actual location of the light which theoretically should hit that point, e.g., if a particular data point theoretically represents light at 55°, but light at 55° actually strikes the photodetector array at 54.95°, the offset would be 0.05°. Then, by simply adding the lens offsets to the Figure 19 offsets, a combined set of offsets is obtained which represents the locations where values of the interference pattern are needed to remove both the inherent frequency modulation and the effects of lens distortion from the interference pattern.

Once the combined offsets have been obtained, the next step is to determine the values of the interference pattern at the offset points. In general terms, this is an interpolation problem where the goal is to determine a set of values $y_i'$ at a set of points $\theta_i'$ (the offset points) from a known set of values $y_i$ (i.e., the reconstructed data obtained from the operation of the "A" matrix in Figure 14) at a set of points $\theta_i$ (the locations of the original data points), where i = 1,2,..., M and M is the number of data points (e.g., 256).

Various interpolation techniques known in the art can be used to determine the values at the offset points, e.g., linear interpolation, sin(x)/x interpolation, and the like. In accordance with the invention, it has been found that the minimum norm interpolation technique is particularly well-suited to determining the amplitudes of the interference pattern at the offset points in that it produces significantly less bias in the diameter determination over the entire range of expected diameters (e.g., from 50 microns to 250 microns) than, for example, linear interpolation or sin(x)/x interpolation. General discussions of the minimum norm interpolation technique can be found in the following references: M. Golomb and H. F. Weinberger, "Optimal Approximation and Error Bounds", On Numerical Approximation, R. E. Langer ed., The University of Wisconsin Press, Madison, pp. 117-190, 1959; C. A. Michelli and T. J. Rivlin, " A Survey of Optimal Recovery", Optimal Estimation in Approximation Theory, C. A. Michelli, T. J. Rivlin, eds., Plenum Press, 1977, pp. 1-53; T. W. Parks and R. G. Shenoy, "An Optimal Recovery Approach to Interpolation", Proc. Princeton Conf. on Information Sciences and Systems, Princeton University, Princeton, N.J., March 1988; G. Oetken, T. W. Parks, and H. W. Schussler, "New Results in the Design of Digital Interpolators", IEEE Trans. ASSP, Vol. ASSP-23, No. 3, pp. 301-309, June 1975; T. W. Parks and D. P. Kolba, "Interpolation Minimizing Maximum Normalized Error for Bandlimited Signals", IEEE Trans. ASSP, Vol. ASSP-26, No. 4, pp. 381-384, August 1978.

To implement the minimum norm technique, a matrix inversion must be performed to find the elements of the "B" matrix in Figure 14. In particular, the rows of the B matrix comprise the vectors $\hat{b}$ obtained by solving the following matrix equation:

$$\hat{b} = g^{-1}\,\hat{e} \quad (19)$$

where g is a M x M matrix, the elements of which are given by:

$$g_{ij} = \text{sinc}\ (2w/k\ (\theta_i - \theta_j)) \qquad (20)$$

ê is a vector having M elements given by:

$$e_i = \text{sinc}\ (2w/k\ (\theta_i' - k\theta_i)) \qquad (21)$$

and $\theta_i$ are the locations of the original data points, $\theta_i'$ are the locations of the offset data points, the constant k is selected based on the desired fineness of the interpolation, the constant w is selected based on the bandwidth of data being interpolated, and M is the number of data points (e.g., 256).

In practice, w = 0.5 and k = 1,000 have been found to work successfully in the demodulation of the reconstructed data generated by the A matrix of Figure 14. Matrix g turns out to be ill-conditioned and thus is difficult to invert using standard techniques. However, the matrix is also Hermitian Toeplitz, i.e., the elements along any diagonal are identical and the matrix is symmetrical about the main diagonal. Techniques for inverting matrices of this type, even when ill-conditioned, are available. In particular, S. L. Marple in his text entitled Digital Spectral Analysis with Applications, Prentice-Hall, Englewood Cliffs, New Jersey, 1987, page 107, describes a technique which has been found to work successfully.

C. Window Correction

The need for a window correction is illustrated in Figure 20. The first panel of this figure shows the Fourier transform of an infinite sine wave of frequency $f_0$, the second panel shows the Fourier transform of a rectangular window, and the third panel shows the Fourier transform of the sine wave of the first panel after truncation (windowing) by the rectangular window.

As can be seen from this figure, the windowing causes broadening of the spectral lines at $\pm f_0$. Such broadening increases the RMS error in determining the location (frequency) of these lines. The amount of broadening is inversely related to the size of the window, i.e., larger windows produce less broadening.

Because the tails of the main lobes of the transform of the windowed sine wave extend under each other, i.e., mix with one another, windowing also causes shifts or biases in the location of the lobes along the frequency axis.

Figure 21 illustrates a procedure for controlling the effects of the window on the frequency spectrum. Specifically, as shown in this figure, a tapered window is used rather than one having square edges. The effect of the taper is to truncate the tails which extend away from the main lobes of the transform of the windowed sine wave, thus minimizing the bias effect on the location of those lobes. The taper, however, also reduces the effective width of the window which increases the broadening of the lobes, thus increasing the RMS error in determining the location of the lobes.

Thus, there is a trade-off between controlling bias and controlling RMS error. In practice, it has been found that for fiber diameter measurements performed using the preferred procedures of Figures 13 and 14, and for a detector having around a 20° angular extent, a smooth taper of the first and last 32 data points of the 256 downsampled data points using a cosine function provides a good compromise between the bias and RMS error considerations.

Specifically, a C matrix having the following elements has been found to work successfully in minimizing the effects of the finite window over which the interference data is measured:

$$C_{ii} = 0.5\ (1-\cos(\pi i/32)) \qquad i=1,...,32;\ M-32,...,M \qquad (22)$$

$$C_{ii} = 1.0 \qquad i=33,...,M-33 \qquad (23)$$

$$C_{ij} = 0.0 \qquad i \neq j \qquad (24)$$

Cosine windows using more or less data points, as well as other windowing procedures known in the art, can be used if desired. As with other aspects of the invention, the specific parameters for use with such alternate windowing procedures can be determined using simulated interference data for fibers having a range of selected diameters.

D. Fine Grid DSFTs

The elements of the D matrix of Figure 14 comprise the exponentials of equation 4 evaluated for the selected fine line spatial frequencies surrounding the coarse value of the O.D. line determined by FFT step 54.

The spacing between the fine line spatial frequencies must be small enough for parabolic fitting step 64 to provide a precise estimate of the actual location of the O.D. line. Also, since the actual O.D. line can be anywhere in the range defined by the FFT lines on either side of the coarse O.D. line, a sufficient number of fine line spatial frequencies must be chosen to cover that range.

The shape of the O.D. peak depends upon a variety of factors including the window, the inherent frequency modulation predicted by the Watkins model, and the distortion introduced by the lens. Accordingly, in general, the peak does not have the shape of a parabola. However, a parabola is a good approximation for the shape of the peak in the immediate vicinity of the peak's maximum value.

Thus, parabola fitting step 64 works well provided the spacing between the fine line spatial frequencies is sufficiently small, i.e., provided the lines used for the parabolic fitting closely surround the location of the peak's maximum value. As the spacing between the lines increases, the parabolic assumption becomes progressively less true. In practice, the breakdown in the parabolic assumption manifests itself as an error in the diameter estimation which is periodic with fiber diameter and increases in amplitude as the fine grid spacing is increased.

In practice, for an FFT line spacing of 0.05 cycles/degree, a fine line spacing of 0.01 cycles/degree and a total of 11 fine lines centered on the coarse O.D. line have been found to work successfully. Of course, other spacings and numbers of lines can be used if desired.

Following the foregoing procedures, the large matrix is constructed by multiplying together appropriate sets of the small matrices for a range of coarse O.D. lines sufficient to cover the range of fibers diameters which are to be measured. As discussed above, the large matrix is stored in a suitable storage medium and accessed during on-line processing to provide the appropriate small matrix for the O.D. line determined by FFT step 54.

In practice, the procedures of the invention have been found to provide fiber diameter measurements of very high precision. Figure 22 illustrates the results of testing performed on the procedure using simulated interference patterns to which various amounts of Gaussian noise were added to vary the signal to noise ratio. The interference patterns were calculated using the representative parameters discussed above for fibers having diameters of 123, 125, and 127 microns.

The data points in Figure 22 show the standard deviations obtained by performing repeated measurements on the simulated data with different random noise being added to the data for each measurement. The straight line represents the theoretical lower limit (Cramer-Rao bound) for the standard deviation.

As demonstrated by this figure, the invention essentially achieves the Cramer-Rao bound which means that no other unbiased method for analyzing far-field interference patterns which may be developed will be more precise than the present method.

In addition to testing on simulated data, the invention has also been tested on both stationary and moving optical waveguide fibers. Again, extremely high precision was observed. Indeed, for a stationary fiber, repeated measurements did not change over time in the third decimal place, i.e., the standard deviation of the measurement was less than 0.001 microns.

It is important to note that the invention achieves this very high level of precision even though only a limited angular range of measurement is used, e.g., a detector having an angular extent of around 20°. This result leads to a number of benefits. First, it facilitates the implementation of the ellipticity-insensitive technique discussed above since it allows two detectors to be spaced apart by 120° without overlap of their ranges. Similarly, it allows the detector to view a range of the interference pattern above 50° where the effect of the fiber's core is small. Further, it allows for the use of simpler optics since only a small angular range needs to be projected onto the detector, rather than a large range, e.g., 80°, as in the prior art.

Defect Detection

The defect detection aspects of the invention uses the FFT spectrum generated by the fiber diameter measurement technique. In particular, as discussed above, it has been found that defects produce a second component in the FFT spectrum at a spatial frequency smaller than that of the O.D. line, but greater than the D.C. component.

The appearance of the second component can be seen by comparing the spectrum of a defect-free fiber (Figure 23) with that of the same fiber with a 2 micron, on-center hole (Figure 25(b)). As can be seen from this comparison, the defect causes a second peak to appear in the spectrum at a frequency of about half that of the O.D. peak, i.e., at about 1.55 cycles/degree for the parameters used to construct the plots of Figures 23 and 25(b). The techniques used to prepare these plots are discussed in detail below. Briefly, solutions for the far-field pattern were obtained by solving the scalar wave equation. (Note that a defect free fiber will have small amounts of power at some frequencies lower than the O.D. peak due to, for example, multiply reflected rays. However, the rays that form the second component of the present invention contain significantly more power. Therefore, the second component of the invention is easily distinguished from these background, low power peaks.)

The behavior of the second component as the hole grows in size is shown in Figures 26(b) -- 5 micron hole, 27 (b) -- 20 micron hole, and 28(b) -- 40 micron hole. As shown in these figures, as the hole size increases, the amplitude of the second component increases and that component splits into two subcomponents which move in equal and opposite directions from the original location of the second component.

The origin of this behavior can be understood by considering a ray trace representation of scattering in the presence of a hole. Figure 31 schematically shows the three types of rays which can interfere for a fiber containing a hole, i.e., a main reflected ray ("RE" ray) which undergoes only reflection at the outer surface of the fiber, a main refracted ray ("RA" ray) which undergoes refraction both upon entering and leaving the fiber, and a hole reflected ray ("HO" ray) which undergoes reflection at the hole (index equal 1.0) and refraction upon entering and leaving the fiber.

The HO ray (hole reflected ray) interferes with both the RE ray (main reflected ray) and the RA ray (main refracted ray). In general terms, the frequency of the far-field interference pattern is inversely related to the spacing between the scattering sources in the near field. Thus, the highest frequency component of the far-field pattern is due to the interference between the RE and RA rays and constitutes the O.D. component of the spectrum.

For small holes, the RE/HO and the RA/HO spacings are essentially equal and roughly half of the RE/RA spacing which produces the O.D. peak. The equality of the spacing results in two superimposed peaks in the frequency spectrum of the far-field pattern (hence the appearance of a single valued second component for small holes as seen in Figure 25(b)). The fact that these spacings are half that of the RE/RA spacing accounts for the factor of two lower frequency in the far field.

As the hole grows and its surface moves away from the centerline of the fiber, the HO/RE interference moves to lower frequencies, while the HO/RA interference moves to higher frequencies. Accordingly, a split peak is seen in the spatial frequency spectra (see Figures 26(b), 27(b), and 28(b)).

It should be noted that other rays pass through the fiber and can interfere producing other smaller peaks in the frequency domain as shown, for example, in Figure 28(b). However, the HO, RE, and RA rays carry the majority of the power and thus dominate the frequency spectrum.

It is important to note that the frequency of the O.D. peak remains substantially unchanged in each of Figures 25 (b) through 28(b). As discussed above, the location of the O.D. peak is used to determine and thus control the diameter of the fiber. Thus, the constancy of the frequency of the O.D. peak is important because it means that fiber diameter measurement and control is uncoupled from hole detection, i.e., unlike the prior art, diameter measurement and control remains correct even in the presence of holes.

Sufficiently large holes will affect the O.D. peak. This effect is illustrated in Figure 24 for an 80 micron hole in a 125 micron fiber. As can be seen in this figure, the O.D. component has been reduced in size and the higher frequency subcomponent of the second component is now directly adjacent to the O.D. peak.

Significant changes in the O.D. peak tend to start at a hole size equal to approximately six tenths of the fiber diameter, e.g., around 75 microns for a 125 micron fiber. Accordingly, since holes do not normally start out large, but rather start out small and then grow large, there is plenty of opportunity to detect a hole and make an appropriate adjustment to the fiber diameter control system before significant changes occur in the O.D. peak.

Note that the upper limit of hole size for which the O.D. peak remains unaffected can be increased slightly if the detector is moved to a large angle. This is because at these high angles, it is still possible for the main refracted ray to pass into and out of the fiber without hitting the hole. However, for a hole larger than approximately 0.67 of the fiber diameter, a refracted ray will not pass through the fiber without hitting the hole no matter how large an angle is detected in the far field.

Turning now to Figure 29, this figure illustrates a second technique for detecting holes. As shown in this figure, the total power of the fringe pattern increases essentially linearly with hole size for holes having diameters less than about 70 microns for a 125 micron fiber. The total spatial power plotted in this figure is the sum of the power over the range from 50 to 70 degrees, i.e., it is the integral of the fringe curves of Figures 11(a), 11(b), and 25(a) through 28(a). Note that the total spatial power can also be obtained by summing the magnitudes of the coefficients obtained from the fast Fourier transform.

As discussed above, the effects of fluctuations in the illumination system on the measured total power can be distinguished from the effects of holes on that parameter by monitoring the power of the O.D. peak. The constancy of the size of this peak for holes ranging up to about 70 microns for a 125 micron fiber is shown in Figure 30. The values plotted in this figure are the peak values for the O.D. lines in Figures 23, 24, and 25(b) through 28(b). Since a fluctuation in the illumination system will affect both the total power and the O.D. peak power, the presence of a hole can be readily determined by looking for a change in the total power which is not accompanied by a change in the O.D. peak. More generally, the total power can be normalized to the O.D. peak power, and holes can be found by looking for changes in the normalized total power. (Note that ambient light striking the detector needs to be minimized since such light can change the total power without changing the O.D. peak.)

As with identifying the second component of the fringe pattern's frequency spectrum, the technique of monitoring the fringe pattern's total power is applicable to holes having a diameter less than about 60% of the fiber's diameter. Since holes normally start out small and grow larger, the technique's operating range is generally large enough to identify essentially all holes which occur in optical waveguide fibers. This is especially so when the total power and the second component techniques are used simultaneously, as is preferred.

The spatial frequency spectra of Figures 23, 24, and 25(b) through 28(b) are for on-center holes. Similar, but not identical, spatial frequency spectra are produced by off-center holes. In particular, the location of the second component and its behavior as a hole grows will be different for different viewing angles for an off-center hole.

This fact can be used to distinguish between on-center and off-center holes. In particular, such a distinction can be made by detecting the interference pattern at two or more locations, computing a spatial frequency spectrum for each location, and then comparing the second components for the multiple locations. If the comparison reveals that the second components are the same and change over time in the same way, the hole is on-center. On the other hand, if the second components differ among the various views, then the hole is off-center.

Figure 2 shows two possible locations for the two views, i.e., +61.5° and -61.5°. A comparison of spectra for these two locations will generally reveal whether the hole is centered or not. A centered hole will create second components which have the same shape and size. Whereas, the second components for an off-center hole will have different configurations. However, there are two azimuthal locations for an off-center hole which lie on the detectors' plane of symmetry (the 0° plane), and thus the second components for an off-center hole at these azimuthal locations will be incorrectly interpreted as being on-center.

As discussed above, the ellipticity of a fiber can be characterized by using multiple sets of the laser/detector combinations shown in Figure 2. The sets are stacked on top of one another with their central axes offset from one another. For example, two sets can be used with their central axes shifted by 45°. For such configurations, the ambiguity resulting from the plane of symmetry can be readily eliminated by simply computing spectra for one or more of the detectors in the additional set(s). A comparison of the resulting three or more spatial frequency spectra will unambiguously reveal if a hole is on-center or off-center.

The use of multiple sets of the laser/detector combinations of Figure 2 is also advantageous since it can reduce or eliminate the existence of "blind" spots in the fiber where holes cannot be detected with a single light source.

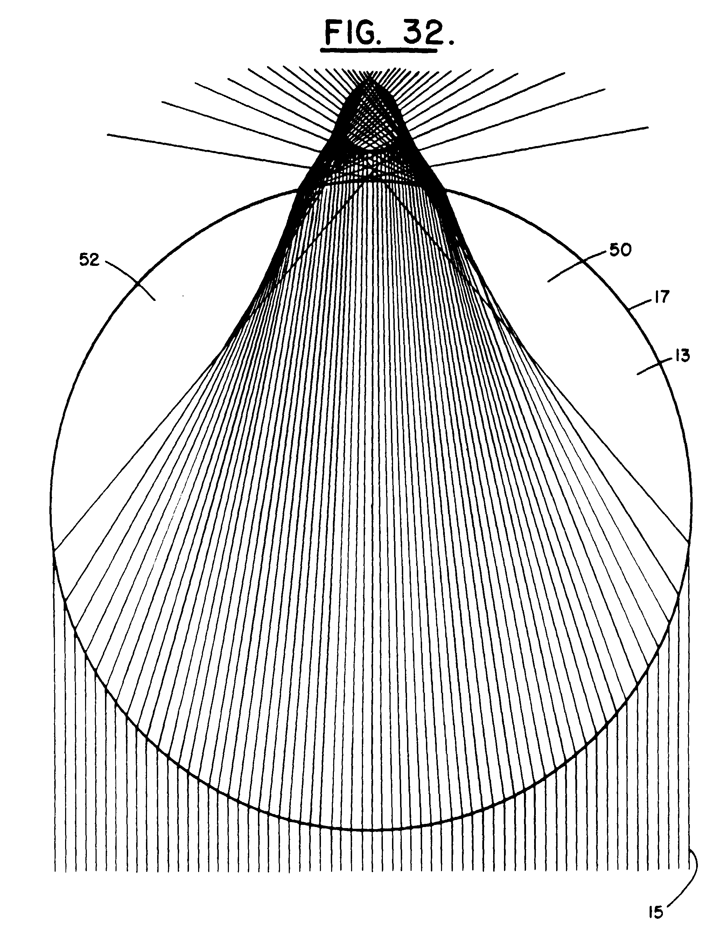

The origin of the blind spots is illustrated in Figure 32. As shown therein, because the incident light 15 is refracted at surface 17 of fiber 13, light impinging on the fiber from a single direction cannot reach areas 50 and 52. For an index of refraction of 1.457 which was used to calculate Figure 32, the combined area of the blind spots is around 16% of the total cross-sectional area of the fiber, and the angular extent of each area, measured from the center of the fiber, is about 80 degrees, i.e., the combined perimeter of the two areas is around 44% of the total perimeter of the fiber.

Because light cannot reach areas 50 and 52, it cannot reflect from holes located in those areas, and thus cannot generate a second component in the frequency spectrum or an increase in the total power. The use of multiple light sources, as in the case of multiple sets of the laser/detector combinations of Figure 2, addresses this problem since the blind spots for the different sources will have different azimuthal locations, and thus, through an appropriate selection of the number and location of the sources, essentially all or, if desired, all areas of the fiber can receive light from at least one source.

The plots of Figures 11 and 23 through 30 are based on computed fringe patterns for a 125 micron, coreless fiber. The parameters used for the calculations were: $\theta_a = 50°$, $\theta_b = 70°$, $\lambda = 0.633$ microns, and $n = 1.457$. The spatial frequency spectra were obtained by performing a fast Fourier transform (FFT) on the calculated fringe data using the Cooley, Lewis, and Welch technique referred to above. If desired, techniques other than the fast Fourier transform can be used to generate spatial frequency spectra, e.g., discrete sequence Fourier transforms can be performed if desired. The FFT procedure, however, is preferred because of its high speed and because the frequencies of the first and second components do not have to be determined with high precision to detect defects.

The process of the invention as described above is preferably practiced on a digital computer system configured by suitable programming to perform the various computational steps. The programming can be done in various programming languages known in the art. A preferred programming language is the C language which is particularly well-suited to performing scientific calculations. Other languages which can be used include FORTRAN, BASIC, PASCAL, C++, and the like.

The computer system can comprise a general purpose scientific computer and its associated peripherals, such as the computers and peripherals currently being manufactured by Digital Equipment Corporation, IBM, Hewlett-Packard, or the like. Alternatively, a dedicated system can be used in the practice of the invention. In particular, a dedicated system using multiple digital signal processing chips is preferred to perform the on-line processing steps of Figure 13.

Preferably, the processing portion of the computer system should have the following characteristics: a processing rate of 50 million floating point operations per second; a word length of 32 bits floating point, at least four megabytes of memory, and at least 40 megabytes of disk storage to hold the large matrix. The system should include means for inputting data from the photodetector array and means for outputting the measured diameter both in electronic form for use in process control and in visual form for observation by system operators, maintenance personnel, and the like. The output can also be stored on a disk drive, tape drive, or the like for further analysis and/or subsequent display.

Although specific embodiments of the invention have been described and illustrated, it is to be understood that modifications can be made without departing from the invention's scope. For example, although the optimum benefits of the invention may not be achieved, the invention can be practiced by using subsets of the on-line and off-line processing steps set forth in Figures 13 and 14. Similarly, the specific order of steps set forth in those figures can be varied, e.g., the cosine window could be applied prior to frequency demodulation.

More generally, techniques besides the preferred technique of determining DSFTs on a fine grid having a small number of lines, can be used to obtain a precise estimate of the average spatial frequency of the far-field interference pattern.

The fine grid DSFT approach described in detail herein achieves this result in a computationally efficient manner. However, in any case a DSFT as defined in the appended claims is used.

TABLE 1

Coefficients for 26 Tap Parks-McClellan FIR Filter

| |
|---|
| H(1) = H(26) = -.13507720E-01 |
| H(2) = H(25) = -.13547450E-01 |
| H(3) = H(24) = -.16699000E-01 |
| H(4) = H(23) = -.16727490E-01 |
| H(5) = H(22) = -.11988860E-01 |
| H(6) = H(21) = -.13101290E-02 |
| H(7) = H(20) = .15623170E-01 |
| H(8) = H(19) = .38029570E-01 |
| H(9) = H(18) = .63995060E-01 |
| H(10) = H(17) = .90693700E-01 |
| H(11) = H(16) = .11479270E+00 |
| H(12) = H(15) = .13305890E+00 |
| H(13) = H(14) = .14290310E+00 |

**Claims**

**1.** A method for non-contact measurement, in real time, of the diameter of a transparent filament (13), which may be moving, comprising the steps of:

(a) directing at said filament a beam of sufficiently coherent, monochromatic light (23) so as to produce an interference pattern (19), wherein the interference pattern is formed from light (15) which is reflected from the filament surface and from light which is refracted predominantly through an outer clad layer of the transparent filament;

(b) detecting said interference pattern by means of a detector (29), the pattern being detected as amplitude values at a set of points on the detector; and,

(c) determining a value for the average spatial frequency of the detected interference pattern and deriving a filament diameter from the average spatial frequency by means of the substeps;

i) transforming the amplitude values to the spatial frequency domain by performing discrete sequence Fourier transforms at a selected set of spatial frequencies to produce a Fourier coefficient for each member of the set of spatial frequencies; and,

ii) deriving an average value of the spatial frequency, which corresponds to the diameter of the filament, from the Fourier coefficients, said value for the average spatial frequency being a measure of the filament's diameter, wherein the set of spatial frequencies is sufficiently closely spaced to yield a diameter value having a precision of at least 0.02 microns.

**2.** The method of claim 1, wherein one or more of the following steps is performed before step (i):

a fast Fourier transform is performed on said detected interference pattern to produce a set of fast Fourier transform coefficients, a selected subset of said fast Fourier transform coefficients are used to produce reconstructed amplitude values, and the reconstructed amplitude values are used to determine a value for the average spatial frequency; and/or

frequency demodulation is performed on the amplitude values to produce demodulated amplitude values and the demodulated amplitude values are used to determine a value for the average spatial frequency; and/or

windowing is performed on the amplitude values, said windowing being preferably performed with a cosine window.

**3.** The method of Claim 2 wherein the frequency demodulation employs predetermined offsets of the locations of the data points, said predetermined offsets being preferably determined from the inherent frequency modulation of the interference pattern and/or include the distortion of any lens system used to detect the interference pattern, and the demodulated amplitude values are determined at the offset locations of the data points by interpolation, said interpolation being preferably a minimum norm interpolation.

**4.** The method of Claim 1, 2 or 3 wherein step (c) comprises multiplying the amplitude values by a precomputed matrix.

**5.** The method of Claim 1, 2, 3, or 4 wherein the value for the average spatial frequency is determined in step (ii) by either fitting a parabola to the magnitudes of a subset of the Fourier coefficients produced in step (i) or by selecting the Fourier coefficient having the largest magnitude.

**6.** The method of any of Claims 1-5 wherein more than one beam of radiation may be directed at said filament so as to produce more than one interference pattern and wherein the method further comprises the steps of:

(A) detecting said one or more interference patterns at a number, M, of spatially distributed locations, where M is equal to or greater than two;

(B) generating a signal representative of the filament's diameter for each of the M locations; and

(C) one or both of:

averaging the signals produced in step (B) to produce a signal representative of the fiber's diameter, said M spatially distributed locations being chosen so that plots of diameter versus angle of rotation for an elliptical filament determined for said M locations are approximately 180°/M out of phase from one another; and/or

for M equal to or greater than three, comparing the signals produced in step (B) to produce an index indicative of the non-circularity of the filament.

**7.** The method of any of Claims 1-5 wherein:

said interference pattern is detected at two locations, said two locations preferably being separated by an included angle of between about 120° and about 124°;

a signal representative of the filament's diameter is generated for each of the two locations; and

said signals are averaged to produce a third signal representative of the fiber's diameter, said two locations being chosen so that the third signal is substantially insensitive to ellipticity of the filament.

**8.** The method of any preceding claim further comprising detecting a defect in the filament by:

if not done in a prior step, generating a spatial frequency spectrum for said interference pattern;

identifying a first component of said spatial frequency spectrum, said first component corresponding to the outer diameter of the filament; and

identifying a second component of said spatial frequency spectrum, said second component having a spatial frequency greater than zero and less than the spatial frequency of the first component, the presence of the second component in the spatial frequency spectrum being indicative of the presence of a defect in the filament.

**9.** The method of any preceding claim further comprising detecting a defect in the filament by:

detecting the total power of a portion of the interference pattern;
and performing one or both of the following procedures:

(I) comparing the total power with a predetermined threshold, an exceeding of the threshold being indicative of the presence of a defect in the filament; and/or
(II) if not done in a prior step, generating a spatial frequency spectrum for the interference pattern;

identifying a first component of the spatial frequency spectrum, said first component corresponding to the outer diameter of the filament;
determining a value for the magnitude of the first component;
normalizing the total power to the magnitude of the first component; and
comparing the normalized total power with a predetermined threshold, an exceeding of the threshold being indicative of the presence of a defect in the filament.

**Patentansprüche**

1. Verfahren zur kontaktlosen Messung in Realzeit des Durchmessers einer transparenten Faser (13), welche sich bewegen kann, mit den Schritten:

   (a) Richten eines Strahls von hinreichend kohärentem monochromatischem Licht (23) auf die Faser, um ein Interferenzmuster (19) zu erzeugen, wobei das Interferenzmuster von Licht (15) gebildet wird, das von der Faseroberfläche reflektiert wird, und von Licht, das vornehmlich durch eine äußere Mantelschicht der transparenten Faser gebrochen wird;

   (b) Erfassen des Interferenzmusters mittels eines Detektors (29), wobei das Muster als Amplitudenwerte an einem Satz von Punkten auf dem Detektor erfaßt wird; und

   (c) Bestimmen eines Wertes für die mittlere räumliche Frequenz des erfaßten Interferenzmusters und Ableiten eines Faserdurchmessers von der mittleren räumlichen Frequenz mittels der Unterschritte:

   i) Transformieren der Amplitudenwerte in die räumliche Frequenzdomäne durch Durchführen diskreter sequentieller Fourier-Transformationen an einem ausgewählten Satz räumlicher Frequenzen zur Erzeugung eines Fourier-Koeffizienten für jedes Mitglied des Satzes der räumlichen Frequenzen; und

   ii) Ableiten eines Mittelwerts der räumlichen Frequenz, der dem Durchmesser der Faser entspricht, aus dem Fourier-Koeffizienten, wobei der Wert für die mittlere räumliche Frequenz ein Maß für den Faserdurchmesser ist, wobei der Satz der räumlichen Frequenzen hinreichend dicht beabstandet ist, um einen Durchmesserwert mit einer Genauigkeit von zumindest 0,02 Mikrometern zu erhalten.

2. Verfahren nach Anspruch 1, dadurch gekennzeichnet, daß einer oder mehrere der folgenden Schritte vor Schritt (i) durchgeführt wird:

   Durchführen einer schnellen Fourier-Transformationen an dem erfaßten Interferenzmuster zum Erzeugen eines Satzes von Koeffizienten der schnellen Fourier-Transformationen, wobei ein ausgewählter Untersatz der Koeffizienten der schnellen Fourier-Transformationen zum Erzeugen rekonstruierter Amplitudenwerte benutzt wird und die rekonstruierten Amplitudenwerte zum Bestimmen eines Werts für die mittlere räumliche Frequenz benutzt werden; und/oder

   Durchführen einer Frequenzdemodulierung an den Amplitudenwerten zur Erzeugung demodulierter Amplitudenwerte, wobei die demodulierten Amplitudenwerte zum Bestimmen eines Werts für die mittlere räumliche Frequenz benutzt werden; und/oder

   Bilden eines Fensters für die Amplitudenwerte, wobei das Fenster vorzugsweise durch ein Cosinusfenster gebildet wird.

3. Verfahren nach Anspruch 2, dadurch gekennzeichnet, daß die Frequenz-Demodulation vorbestimmte Versätze der Orte der Datenpunkte verwendet, wobei die vorbestimmten Versätze vorzugsweise von der inhärenten Frequenzmodulation der Interferenzmuster bestimmt werden und/oder die Verzerrung von irgendeinem Linsensystem aufweisen, das zum Umfassen des Interferenzmusters benutzt wird, und die demodulierten Amplitudenwerte an den Versatzorten der Datenpunkte durch Interpolation bestimmt werden, wobei die Interpolation vorzugsweise eine Minimalnorm-Interpolation ist.

**4.** Verfahren nach Anspruch 1, 2 oder 3, dadurch gekennzeichnet, daß der Schritt (c) das Multiplizieren der Amplitudenwerte mit einer vorberechneten Matrix aufweist.

**5.** Verfahren nach Anspruch 1, 2, 3, oder 4, dadurch gekennzeichnet, daß der Wert für die mittlere räumliche Frequenz in Schritt (ii) entweder durch Anpassung einer Parabel an die Größen eines Untersatzes der Fourier-Koeffizienten, die in Schritt (i) erzeugt werden, oder durch Auswählen des Fourier-Koeffizienten mit größten Größe bestimmt wird.

**6.** Verfahren nach einem der Ansprüche 1 bis 5, dadurch gekennzeichnet, daß mehr als ein Strahlungsstrahl auf die Faser gerichtet werden kann, um mehr als ein Interferenzmuster zu erzeugen, wobei das Verfahren weiterhin folgende Schritte aufweist:

(A) Erfassen von dem einen oder mehreren Interferenzmustern an einer Anzahl M örtlich verteilter Orte, wobei M gleich oder größer als zwei ist;

(B) Erzeugen eines Signals zum Darstellen des Faserdurchmessers für jeden der M Orte; und

(C) eines oder beides von:

Mitteln der in Schritt (B) erzeugten Signale zur Erzeugung eines Signals zum Darstellen des Faserdurchmessers, wobei die M örtlich verteilten Orte derart ausgewählt sind, daß Auftragungen des Durchmessers gegenüber dem Drehwinkel für eine elliptische Faser, die für die M Orte bestimmt sind, ungefähr 180°/M voneinander außer Phase liegen; und/oder

für M gleich oder größer als drei, Vergleichen der in Schritt (B) erzeugten Signale zur Erzeugung eines Index zum Anzeigen der Nicht-Kreisförmigkeit der Faser.

**7.** Verfahren nach einem der Ansprüche 1 bis 5, dadurch gekennzeichnet, daß:

das Interferenzmuster an zwei Orten erfaßt wird, wobei die zwei Orte vorzugsweise durch einen eingeschlossenen Winkel im Bereich von etwa 120° und etwa 124° getrennt sind;

ein Signal zum Darstellen des Faserdurchmessers für jeden der zwei Orte erzeugt wird; und

die Signale gemittelt werden, um ein drittes Signal zum Darstellen des Faserdurchmessers zu erzeugen, wobei die zwei Orte derart gewählt sind, daß das dritte Signal im wesentlichen unempfindlich gegenüber der Elliptizität der Faser ist.

**8.** Verfahren nach einem der folgenden Ansprüche, gekennzeichnet durch das Erfassen des Defekts in der Faser durch:

falls nicht in einem vorherigen Schritt durchgeführt, Erzeugen eines räumlichen Frequenzspektrums für das Interferenzmuster;

Identifizieren einer ersten Komponente des räumlichen Frequenzspektrums, wobei die erste Komponente dem Außendurchmesser der Faser entspricht; und

Identifizieren einer zweiten Komponente des räumlichen Frequenzspektrums, wobei die zweite Komponente eine räumliche Frequenz größer als Null und kleiner als die räumliche Frequenz der ersten Komponente aufweist, wobei die Gegenwart der zweiten Komponente im räumlichen Frequenzspektrum die Gegenwart eines Defekts in der Faser anzeigt.

**9.** Verfahren nach einem der vorherigen Ansprüche, gekennzeichnet durch die Erfassung eines Defekts in der Faser durch:

Erfassen der Gesamtleistung eines Bereichs des Interferenzmusters;

und Durchführen von einer oder beiden der folgenden Prozeduren:

(I) Vergleichen der Gesamtleistung mit einer vorbestimmten Schwelle, wobei ein Überschreiten der Schwelle das Vorliegen eines Defekts in der Faser anzeigt; und/oder

(II) falls nicht in einem vorherigen Schritt durchgeführt, Erzeugen eines räumlichen Frequenzspektrums für das Interferenzmuster;

Identifizieren einer ersten Komponente des räumlichen Frequenzspektrums, wobei die erste Komponente dem Außendurchmesser der Faser entspricht;

Bestimmen eines Werts für die Größe der ersten Komponente;

Normalisieren der Gesamtleistung auf die Größe der ersten Komponente; und

Vergleichen der normalisierten Gesamtleistung mit einer vorbestimmten Schwelle, wobei ein Überschreiten der Schwelle die Gegenwart eines Defekts in der Faser anzeigt.

## Revendications

1. Procédé de mesure sans contact, en temps réel, du diamètre d'un filament transparent (13), qui peut être mobile, comportant les étapes de:

   (a) direction sur ledit filament d'un faisceau de lumière (23) monochromatique suffisamment cohérente pour produire un motif d'interférence (19), le faisceau d'interférence étant formé à partir de la lumière (15) qui est réfléchie par la surface du filament et de la lumière qui est réfractée de façon prédominante à travers une couche de gaine externe du filament transparent;
   (b) détection dudit motif d'interférence au moyen d'un détecteur (29), le motif étant détecté sous forme de valeurs d'amplitude au niveau d'un ensemble de points sur le détecteur; et
   (c) détermination d'une valeur de fréquence spatiale moyenne du motif d'interférence détecté et calcul d'un diamètre de filament à partir de la fréquence spatiale moyenne au moyen des sous-étapes de:

      (i) transformation des valeurs d'amplitude en domaine de fréquences spatiales en calculant des transformées de Fourier discrètes successives sur un ensemble sélectionné de fréquences spatiales pour produire un coefficient de Fourier pour chaque élément de l'ensemble de fréquences spatiales; et
      (ii) calcul d'une valeur moyenne de la fréquence spatiale, qui correspond au diamètre du filament, à partir des coefficients de Fourier, ladite valeur de fréquence spatiale moyenne étant une mesure du diamètre du filament, l'espacement des éléments de l'ensemble de fréquences spatiales étant suffisamment faible pour que l'on puisse obtenir une valeur de diamètre avec une précision d'au moins 0,02 microns.

2. Procédé de la revendication 1, dans lequel au moins une des étapes suivantes est réalisée avant l'étape (i):

   une transformée de Fourier rapide est calculée sur ledit motif d'interférence détecté pour produire un ensemble de coefficients de transformée de Fourier rapide, un sous-ensemble sélectionné desdits coefficients de transformée de Fourier rapide est utilisé pour produire des valeurs d'amplitude reconstituées, et les valeurs d'amplitudes reconstituées servent à déterminer une valeur de fréquence spatiale moyenne; et/ou
   une démodulation de fréquence est effectuée sur les valeurs d'amplitude pour produire des valeurs d'amplitude démodulées et les valeurs d'amplitudes démodulées servent à déterminer une valeur de fréquence spatiale moyenne; et/ou
   un fenêtrage est effectué sur les valeurs d'amplitude, ledit fenêtrage étant de préférence effectué avec une fenêtre en cosinus.

3. Procédé de la revendication 2, dans lequel la démodulation de fréquence utilise des décalages prédéterminés des emplacements des points de données, lesdits décalages prédéterminés étant de préférence déterminés à partir de la modulation de fréquence naturelle du motif d'interférence et/ou comprenant la distorsion de tout système optique utilisé pour détecter le motif d'interférence, et les valeurs d'amplitude démodulées sont déterminées par interpolation au niveau des emplacements des décalages des points de données, ladite interpolation étant de préférence une interpolation de norme minimale.

**4.** Procédé selon la revendication 1, 2 ou 3, dans lequel l'étape (c) comporte la multiplication des valeurs d'amplitude par une matrice pré-calculée.

**5.** Procédé selon la revendication 1, 2, 3 ou 4, dans lequel la valeur de fréquence spatiale moyenne est déterminée dans l'étape (ii) soit en faisant correspondre une parabole aux amplitudes d'un sous-ensemble de coefficients de Fourier produits à l'étape (i) ou en sélectionnant le coefficient de Fourier de plus grande amplitude.

**6.** Procédé selon l'une quelconque des revendications 1 à 5, dans lequel on peut diriger plus d'un faisceau d'irradiation sur ledit filament de façon à produire plus d'un motif d'interférence et dans lequel le procédé comporte en outre les étapes de:

(A) détection dudit ou desdits motif (s) d'interférence au niveau d'un nombre M d'emplacements spatialement répartis, où M est supérieur ou égal à deux;
(B) génération d'un signal représentant le diamètre du filament pour chacun des M emplacements; et
(C) moyennage des signaux produits à l'étape (B) pour produire un signal représentant le diamètre de la fibre, lesdits M emplacements spatialement répartis étant choisis de façon à ce que les points de la courbe donnant le diamètre en fonction de l'angle de rotation pour un filament elliptique déterminés pour les M emplacements soient environs déphasés de 180°/M l'un de l'autre; et/ou
pour M supérieur ou égal à trois, comparaison des signaux produits à l'étape (B) pour produire un indice représentatif de la non-circularité du filament.

**7.** Procédé selon l'une quelconque des revendications 1 à 5, dans lequel:

ledit motif d'interférence est détecté au niveau de deux emplacements, lesdits deux emplacements étant de préférence séparés d'un angle d'ouverture environ compris entre 120° et 124°;
un signal représentant le diamètre du filament est généré pour chacun des deux emplacements; et
lesdits signaux sont moyennés pour produire un troisième signal représentant le diamètre de la fibre, lesdits deux emplacements étant choisis de façon à ce que le troisième signal soit sensiblement indépendant du caractère elliptique du filament.

**8.** Procédé selon l'une quelconque des revendications précédentes, comportant en outre la détection d'un défaut dans le filament en:

si cela n'a pas été fait dans une étape précédente, générant un spectre de fréquences spatiales pour ledit motif d'interférence;
identifiant une première composante dudit spectre de fréquences spatiales, ladite première composante correspondant au diamètre externe du filament; et
identifiant une seconde composante dudit spectre de fréquences spatiales, ladite seconde composante ayant une fréquence spatiale supérieure à zéro et inférieure à la fréquence spatiale de la première composante, la présence de la seconde composante dans le spectre de fréquences spatiales indiquant la présence d'un défaut dans le filament.

**9.** Procédé selon l'une quelconque des revendications précédentes comportant en outre la détection d'un défaut dans le filament en:

détectant la puissance totale d'une partie du motif d'interférence;
et exécutant une des procédures suivantes ou les deux:

(I) comparaison de la puissance totale à un seuil prédéterminé, un dépassement du seuil indiquant la présence d'un défaut dans le filament; et/ou
(II) si cela n'a pas été fait dans une étape antérieure, génération d'un spectre de fréquences spatiales pour le motif d'interférence;

identification d'une première composante du spectre de fréquences spatiales, ladite première composante correspondant au diamètre externe du filament;
détermination d'une valeur d'amplitude de la première composante;
normalisation de la puissance totale par rapport à l'amplitude de la première composante; et
comparaison de la puissance totale normalisée à un seuil prédéterminé, un dépassement du seuil indiquant la présence d'un défaut dans le filament.

FIG. 1.

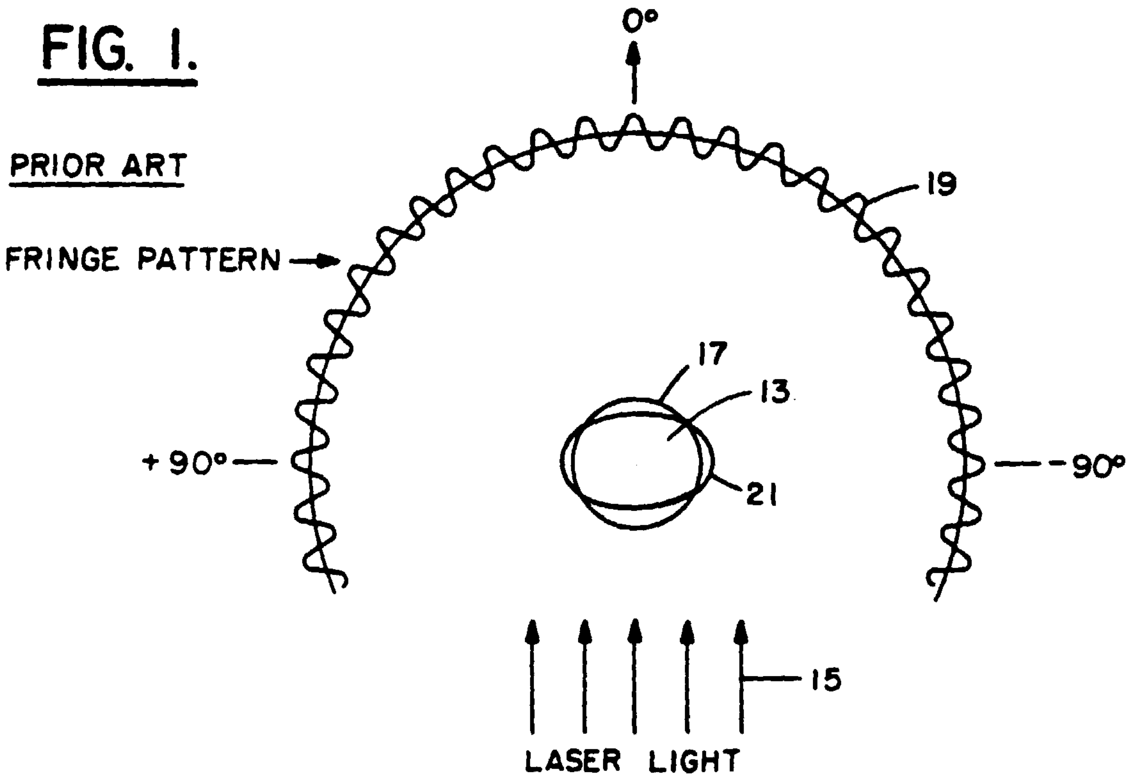
PRIOR ART
FRINGE PATTERN
0°
19
17
13
+90°
-90°
21
15
LASER LIGHT

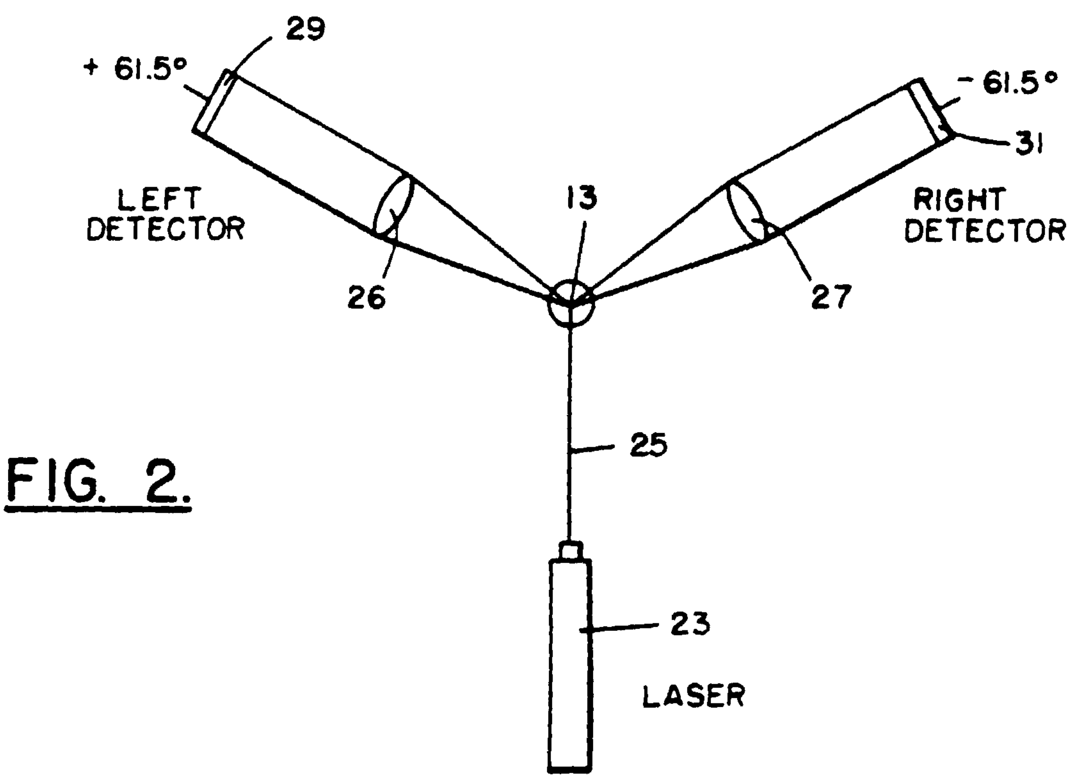
29
+ 61.5°
- 61.5°
31
LEFT DETECTOR
13
RIGHT DETECTOR
26
27
25
23
LASER

FIG. 2.

FIG. 3A.

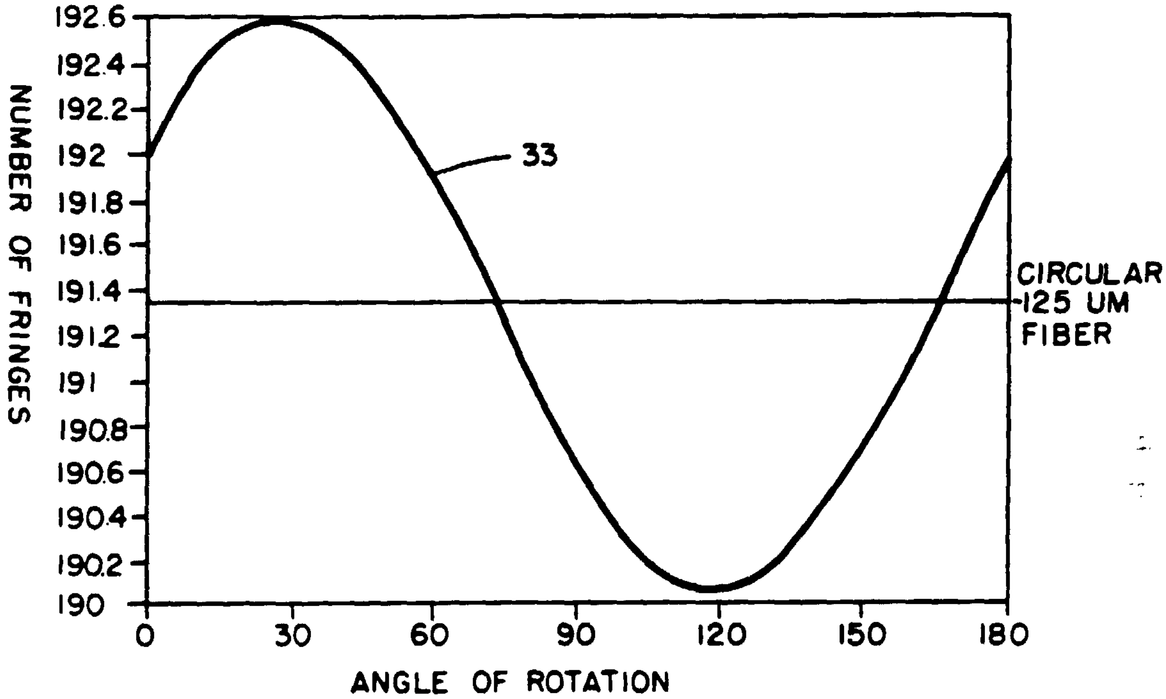
192.6
192.4
192.2
192
191.8
191.6
191.4
191.2
191
190.8
190.6
190.4
190.2
190
NUMBER OF FRINGES
0
30
60
90
120
150
180
ANGLE OF ROTATION
33
CIRCULAR 125 UM FIBER

FIG. 3B.

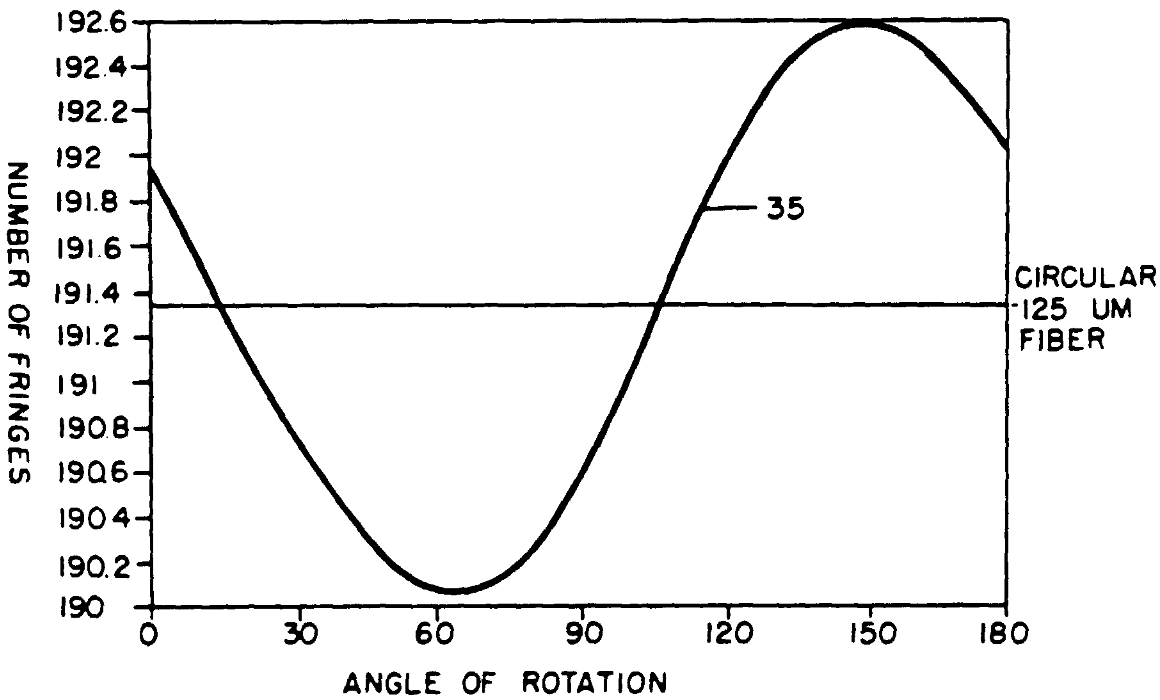
192.6
192.4
192.2
192
191.8
191.6
191.4
191.2
191
190.8
190.6
190.4
190.2
190
NUMBER OF FRINGES
0
30
60
90
120
150
180
ANGLE OF ROTATION
35
CIRCULAR 125 UM FIBER

FIG. 4.

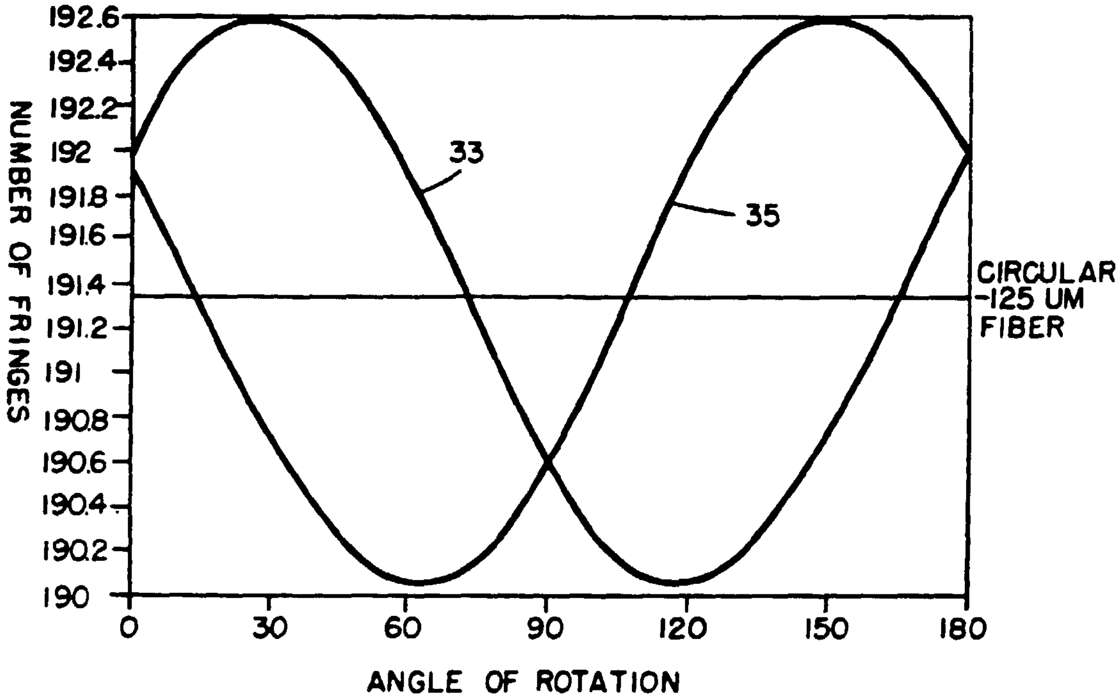
192.6
192.4
192.2
192
191.8
191.6
191.4
191.2
191
190.8
190.6
190.4
190.2
190
NUMBER OF FRINGES
0
30
60
90
120
150
180
ANGLE OF ROTATION
33
35
CIRCULAR
-125 UM
FIBER

FIG. 6.

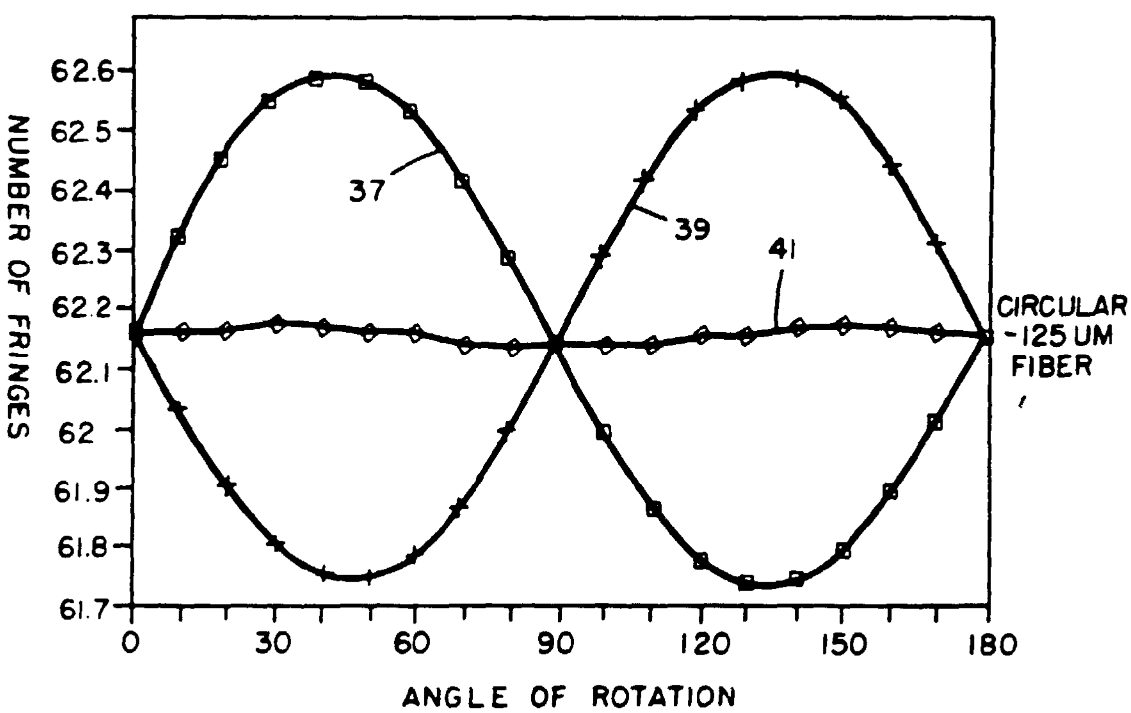
62.6
62.5
62.4
62.3
62.2
62.1
62
61.9
61.8
61.7
NUMBER OF FRINGES
0
30
60
90
120
150
180
ANGLE OF ROTATION
37
39
41
CIRCULAR
-125 UM
FIBER

FIG. 5A.

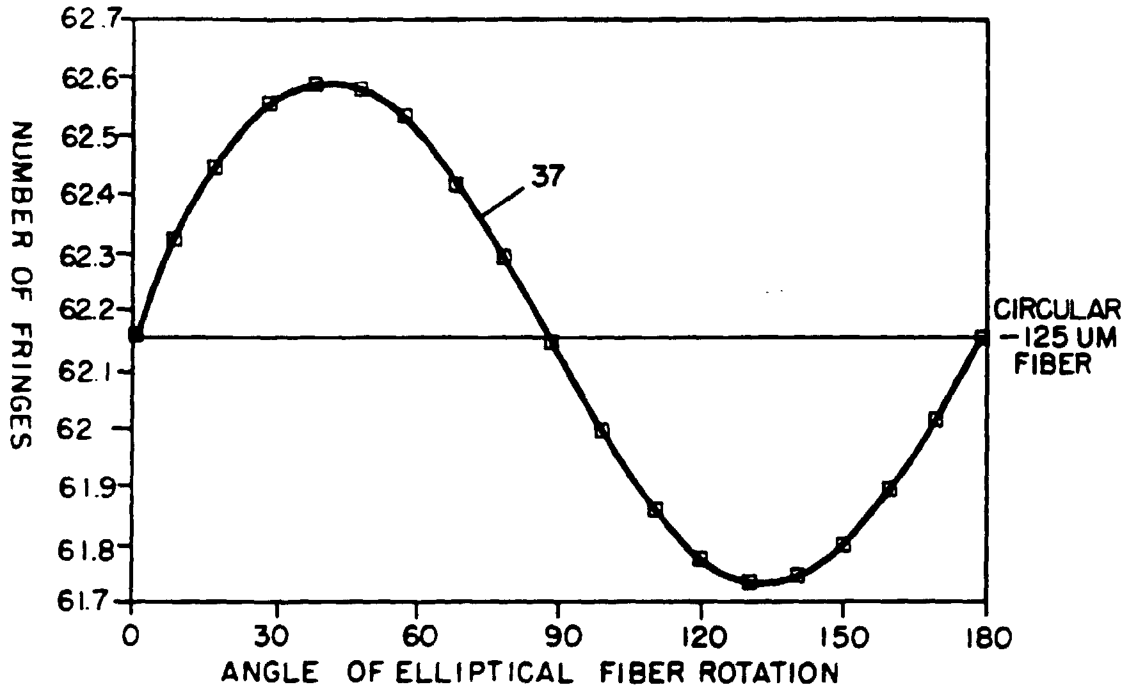
62.7
62.6
62.5
62.4
62.3
62.2
62.1
62
61.9
61.8
61.7
NUMBER OF FRINGES
37
CIRCULAR
-125 UM
FIBER
0
30
60
90
120
150
180
ANGLE OF ELLIPTICAL FIBER ROTATION

FIG. 5B.

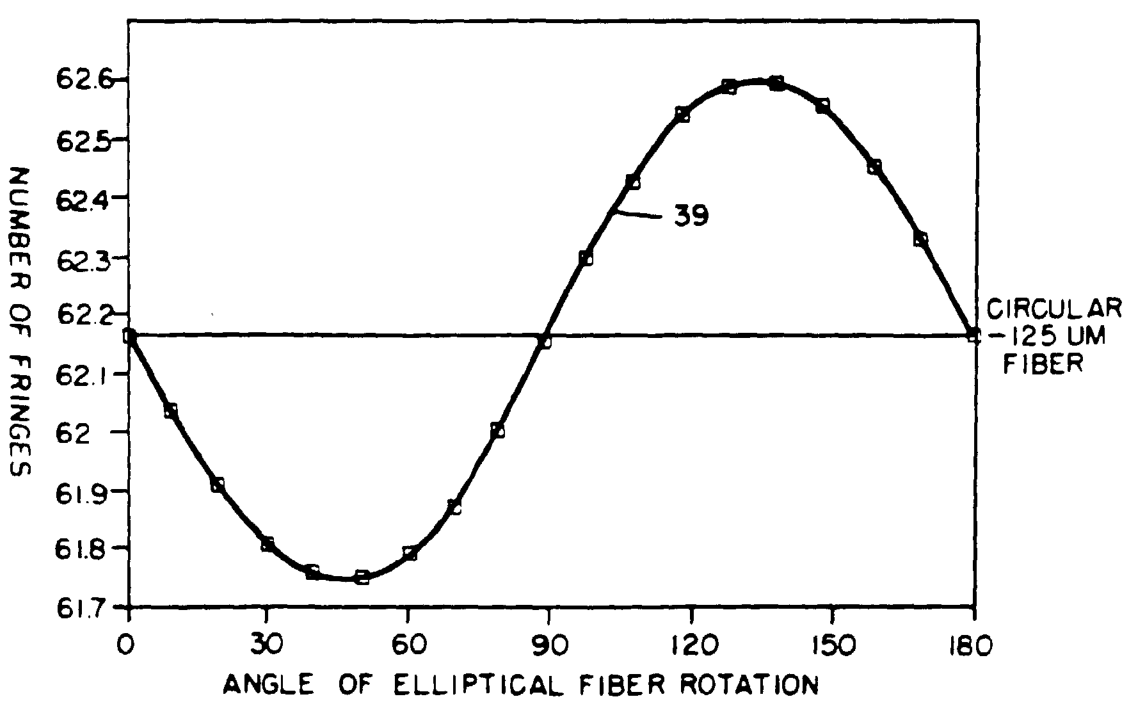
62.6
62.5
62.4
62.3
62.2
62.1
62
61.9
61.8
61.7
NUMBER OF FRINGES
39
CIRCULAR
-125 UM
FIBER
0
30
60
90
120
150
180
ANGLE OF ELLIPTICAL FIBER ROTATION

FIG. 7.

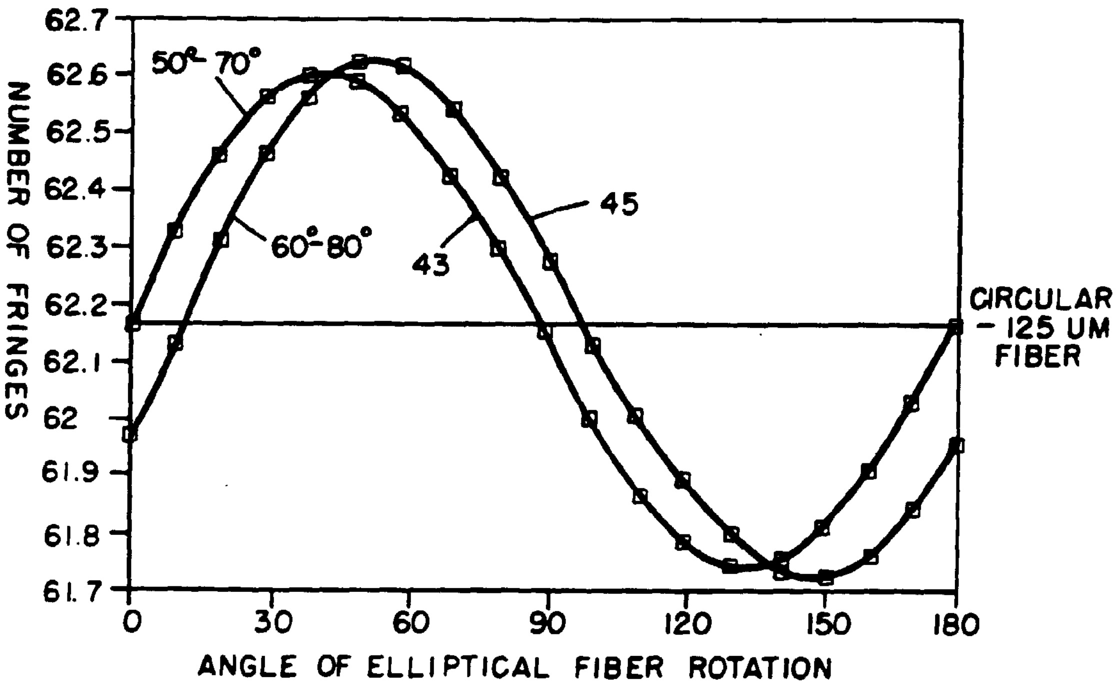
62.7
62.6
62.5
62.4
62.3
62.2
62.1
62
61.9
61.8
61.7
NUMBER OF FRINGES
50°-70°
60°-80°
43
45
CIRCULAR
- 125 UM
FIBER
0
30
60
90
120
150
180
ANGLE OF ELLIPTICAL FIBER ROTATION

FIG. 8.

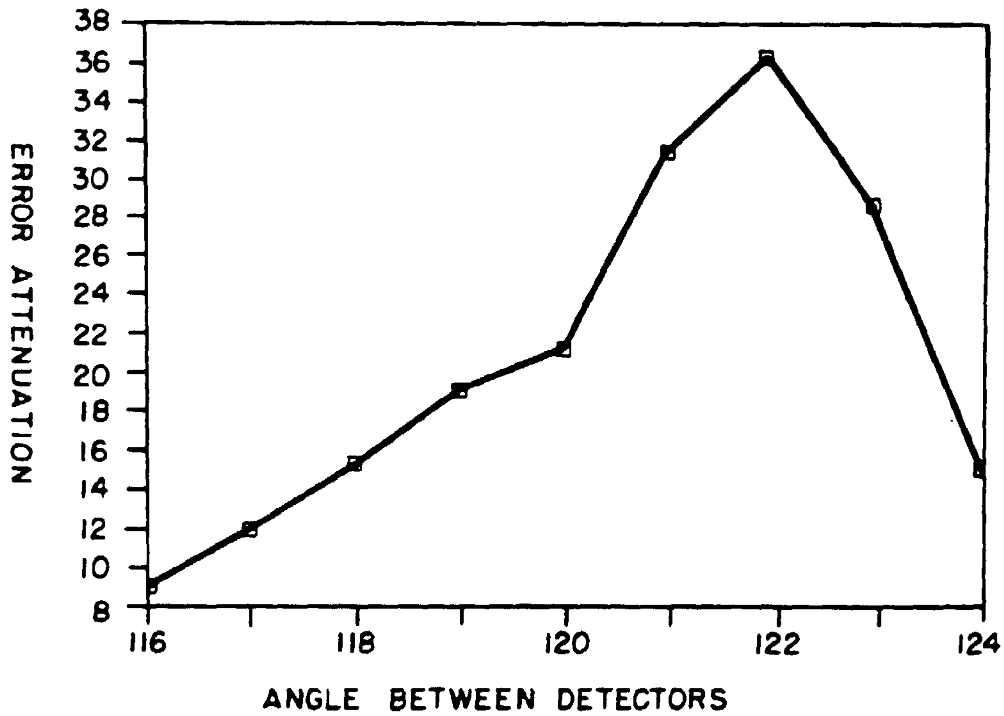
38
36
34
32
30
28
26
24
22
20
18
16
14
12
10
8
ERROR ATTENUATION
116
118
120
122
124
ANGLE BETWEEN DETECTORS

FIG. 9.

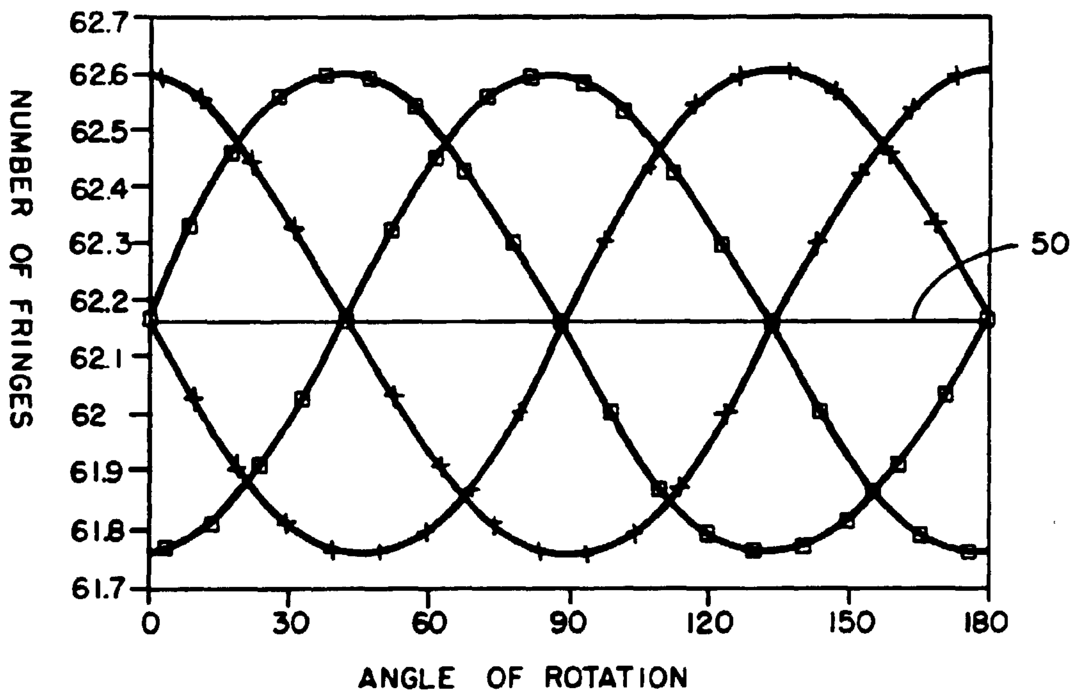
62.7
62.6
62.5
62.4
62.3
62.2
62.1
62
61.9
61.8
61.7
NUMBER OF FRINGES
0
30
60
90
120
150
180
ANGLE OF ROTATION
50

FIG. 10.

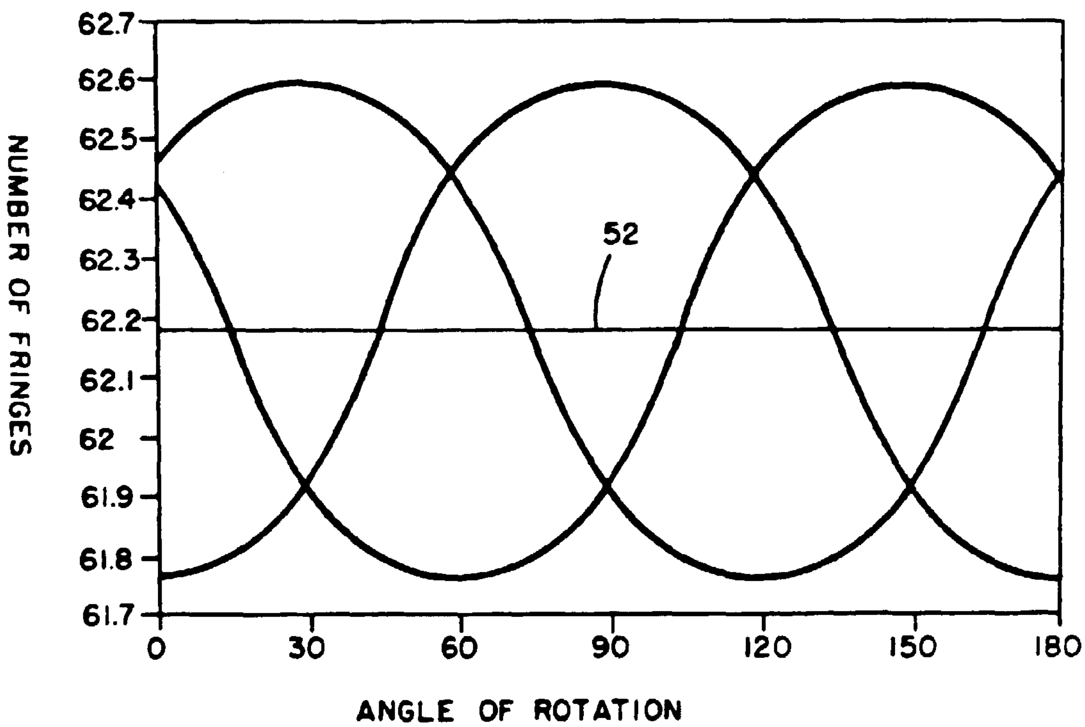
62.7
62.6
62.5
62.4
62.3
62.2
62.1
62
61.9
61.8
61.7
NUMBER OF FRINGES
0
30
60
90
120
150
180
ANGLE OF ROTATION
52

FIG. 11A.

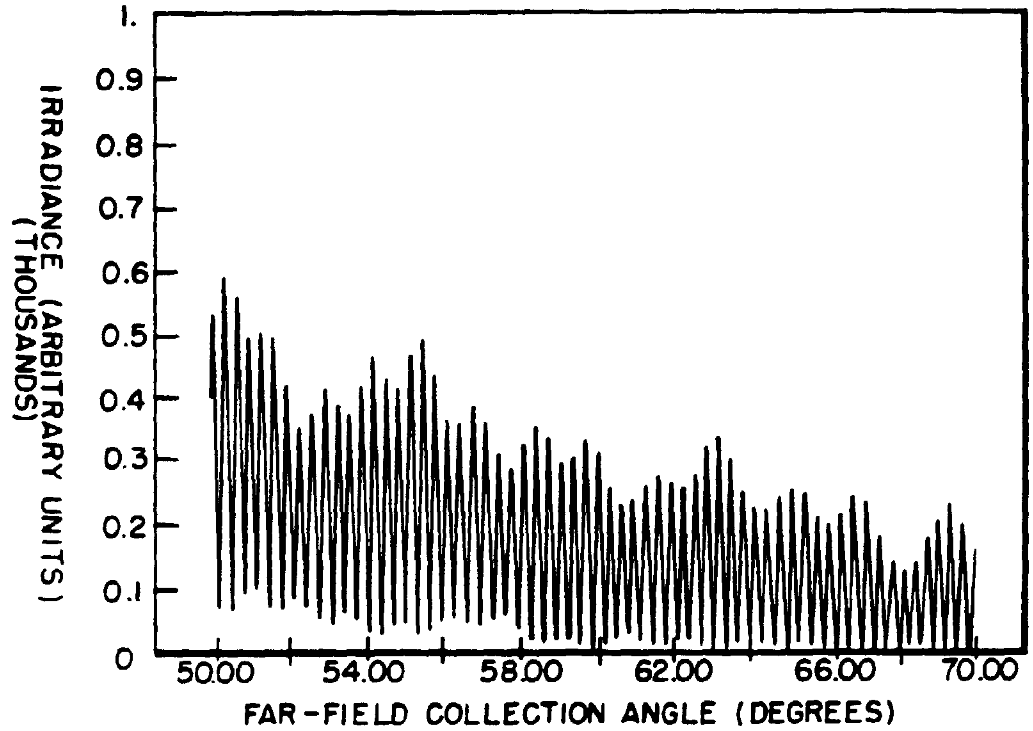


FIG. 11B.

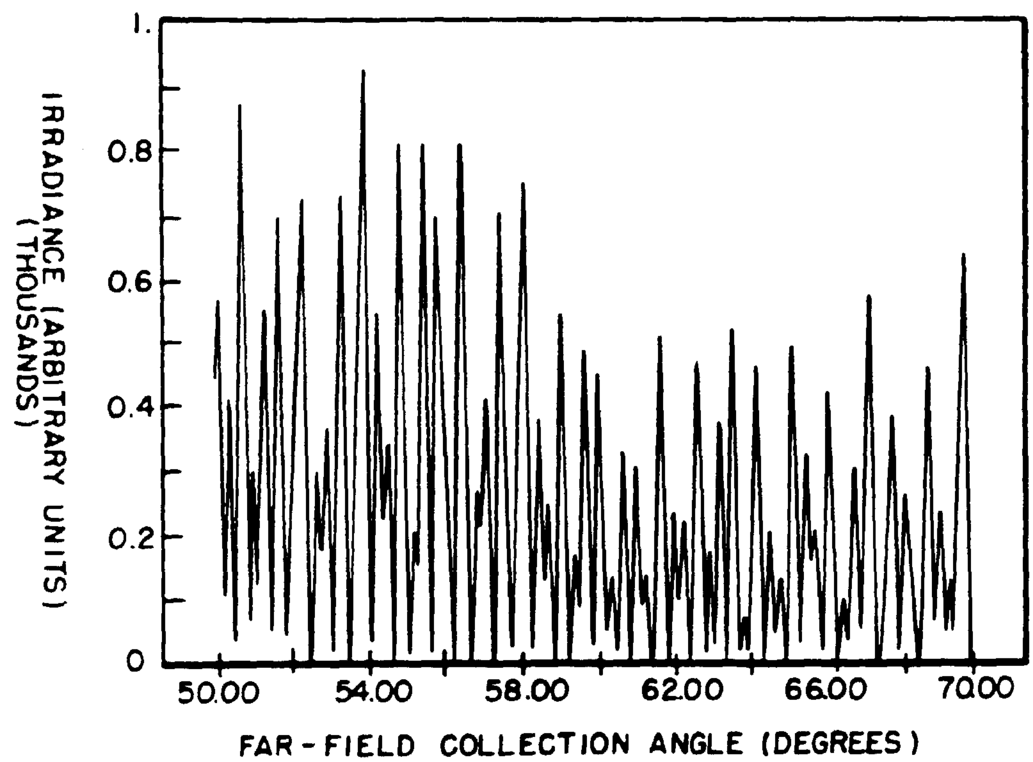

FIG. 12.

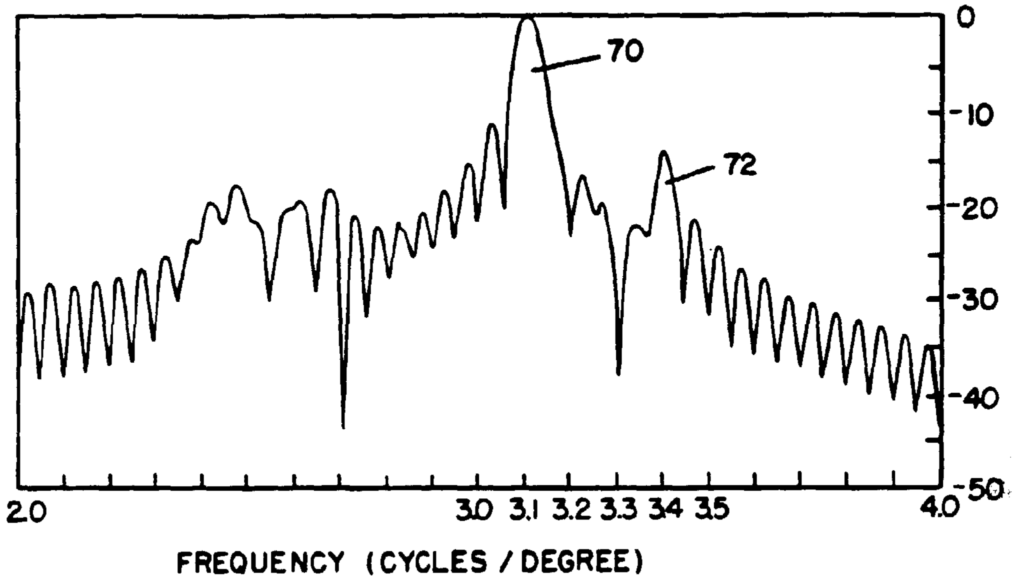
70
72
0
-10
-20
-30
-40
-50
2.0
3.0 3.1 3.2 3.3 3.4 3.5
4.0
FREQUENCY (CYCLES / DEGREE)

FIG. 22.

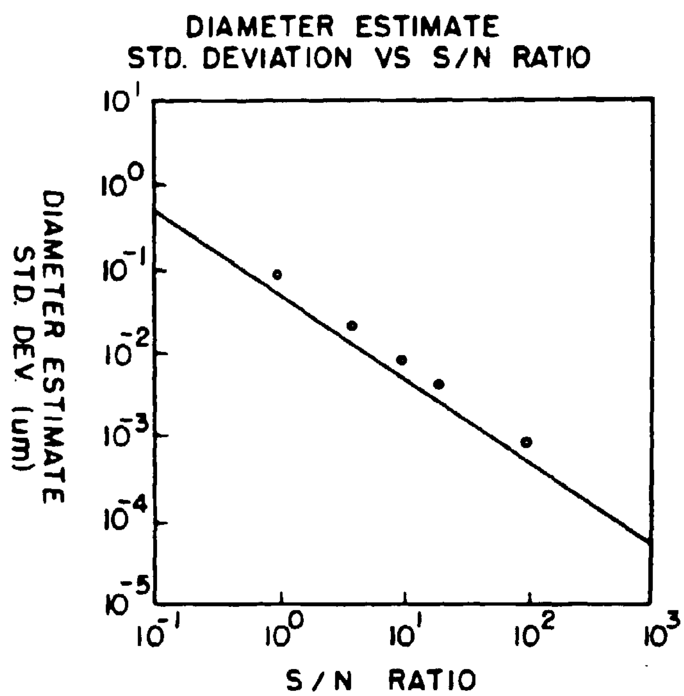
DIAMETER ESTIMATE
STD. DEVIATION VS S/N RATIO
DIAMETER ESTIMATE STD. DEV. (um)
$10^{1}$ $10^{0}$ $10^{-1}$ $10^{-2}$ $10^{-3}$ $10^{-4}$ $10^{-5}$
$10^{-1}$ $10^{0}$ $10^{1}$ $10^{2}$ $10^{3}$
S / N RATIO

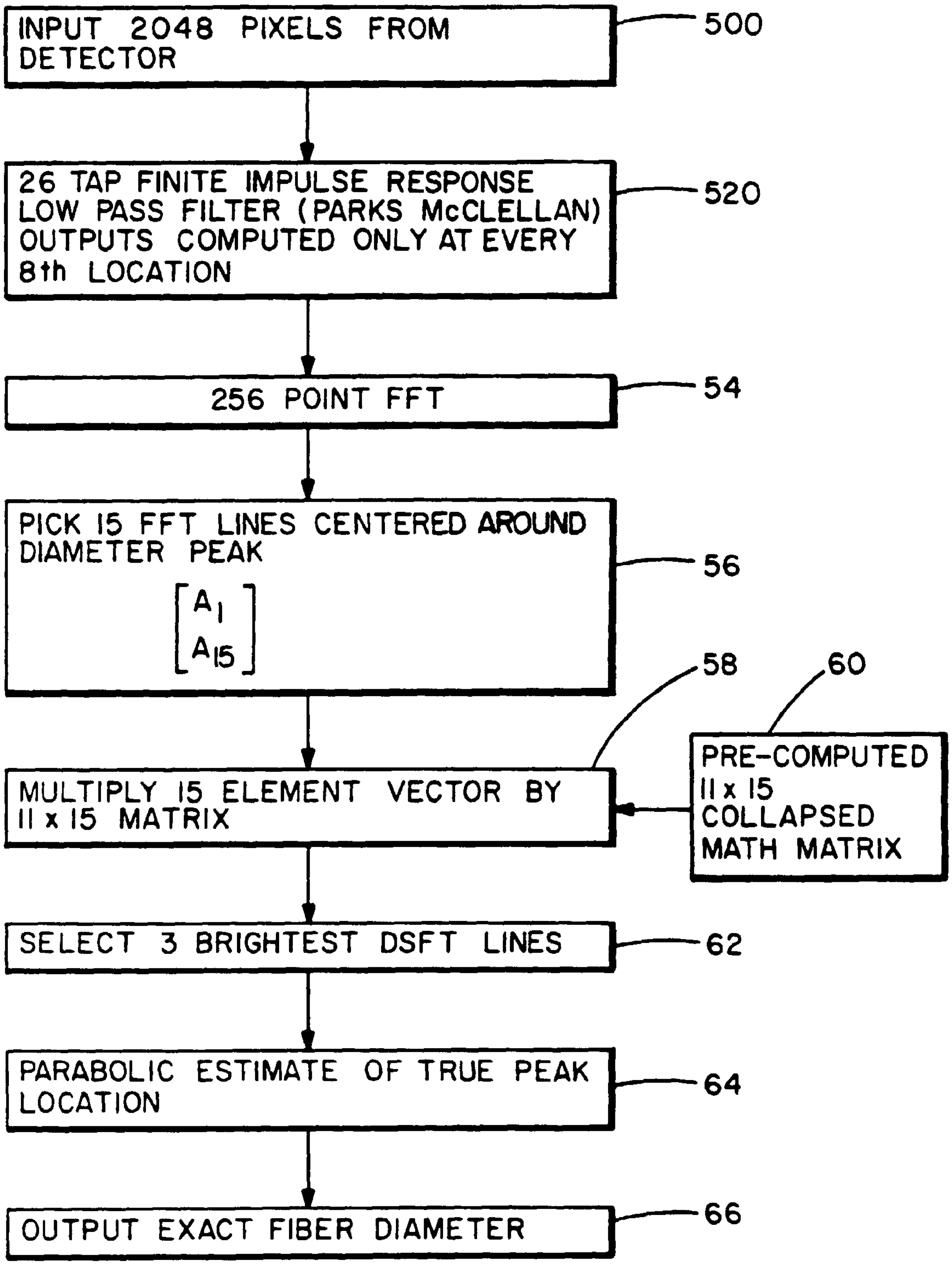
INPUT 2048 PIXELS FROM DETECTOR
500
26 TAP FINITE IMPULSE RESPONSE LOW PASS FILTER (PARKS McCLELLAN) OUTPUTS COMPUTED ONLY AT EVERY 8th LOCATION
520
256 POINT FFT
54
PICK 15 FFT LINES CENTERED AROUND DIAMETER PEAK
A1
A15
56
58
60
MULTIPLY 15 ELEMENT VECTOR BY 11 x 15 MATRIX
PRE-COMPUTED 11 x 15 COLLAPSED MATH MATRIX
SELECT 3 BRIGHTEST DSFT LINES
62
PARABOLIC ESTIMATE OF TRUE PEAK LOCATION
64
OUTPUT EXACT FIBER DIAMETER
66

FIG. 13.

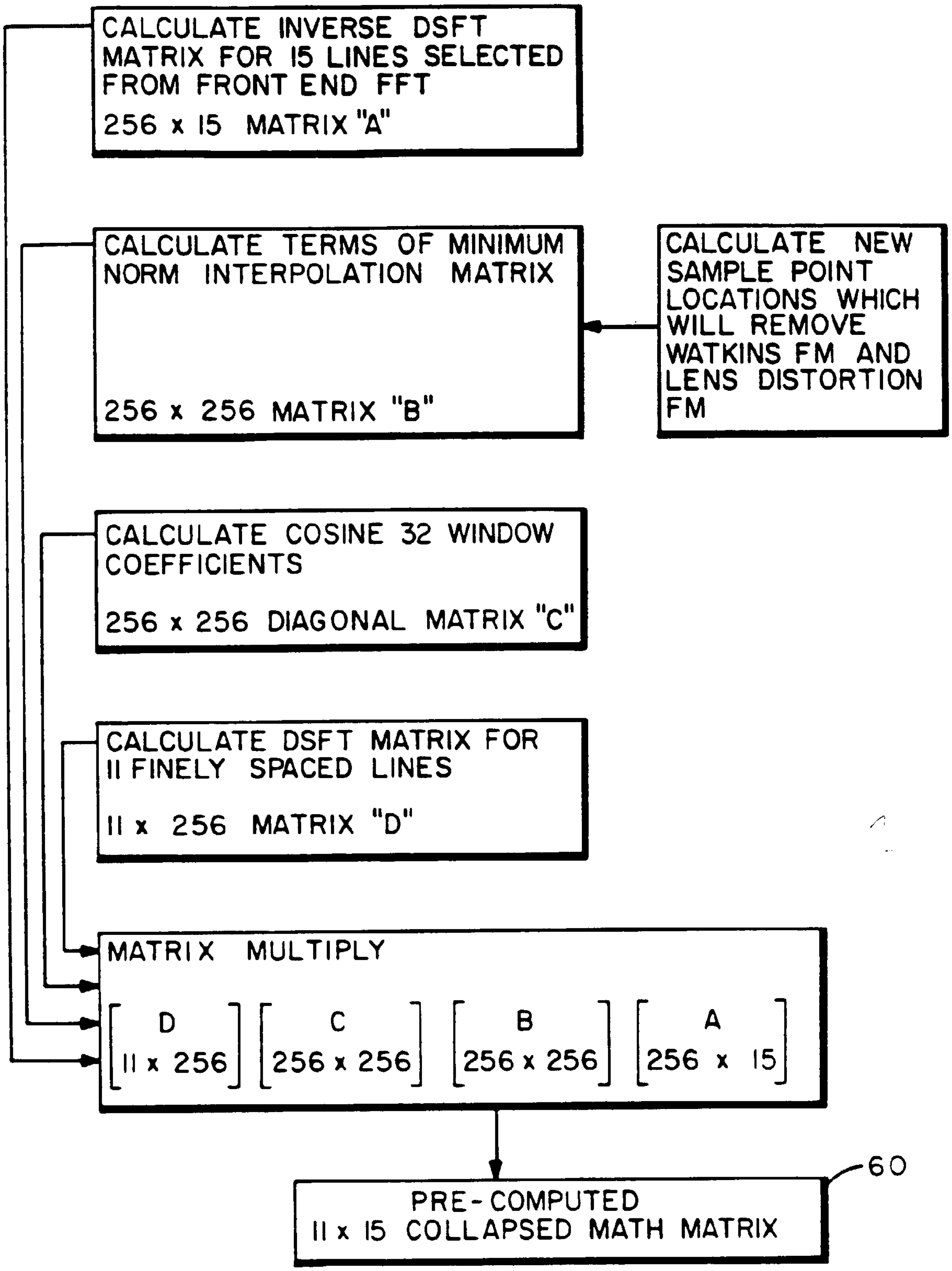
CALCULATE INVERSE DSFT MATRIX FOR 15 LINES SELECTED FROM FRONT END FFT
256 x 15 MATRIX "A"
CALCULATE TERMS OF MINIMUM NORM INTERPOLATION MATRIX
256 x 256 MATRIX "B"
CALCULATE NEW SAMPLE POINT LOCATIONS WHICH WILL REMOVE WATKINS FM AND LENS DISTORTION FM
CALCULATE COSINE 32 WINDOW COEFFICIENTS
256 x 256 DIAGONAL MATRIX "C"
CALCULATE DSFT MATRIX FOR 11 FINELY SPACED LINES
11 x 256 MATRIX "D"
MATRIX MULTIPLY
D 11 x 256
C 256 x 256
B 256 x 256
A 256 x 15
PRE-COMPUTED 11 x 15 COLLAPSED MATH MATRIX
60

FIG. 14.

FIG. 15.

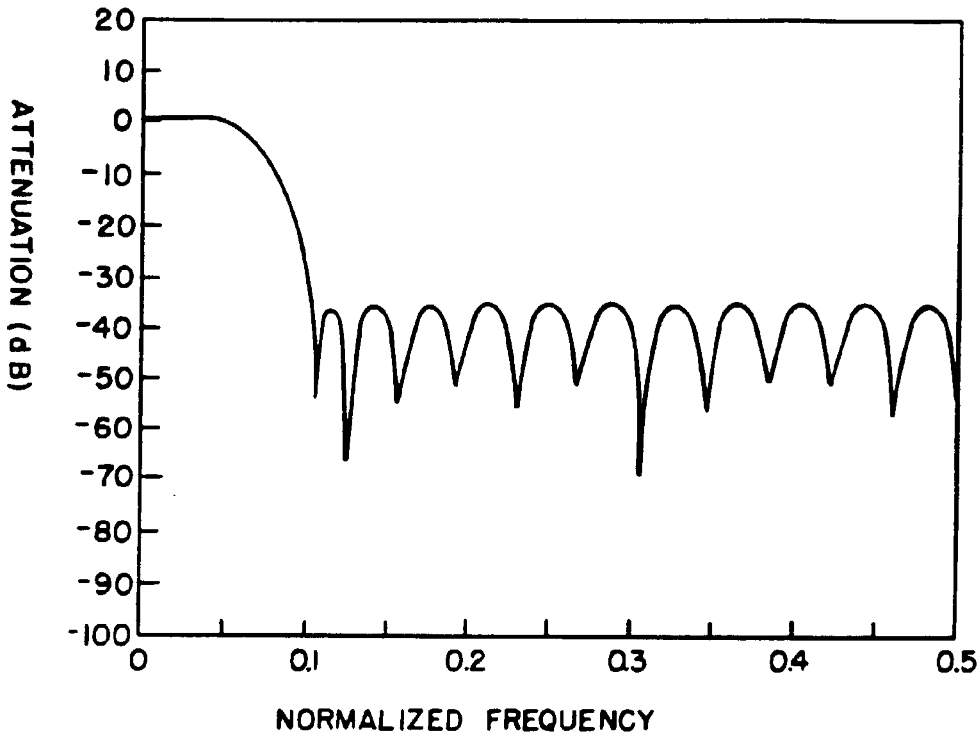
20
10
0
-10
-20
-30
-40
-50
-60
-70
-80
-90
-100
ATTENUATION (dB)
0
0.1
0.2
0.3
0.4
0.5
NORMALIZED FREQUENCY

FIG. 16.

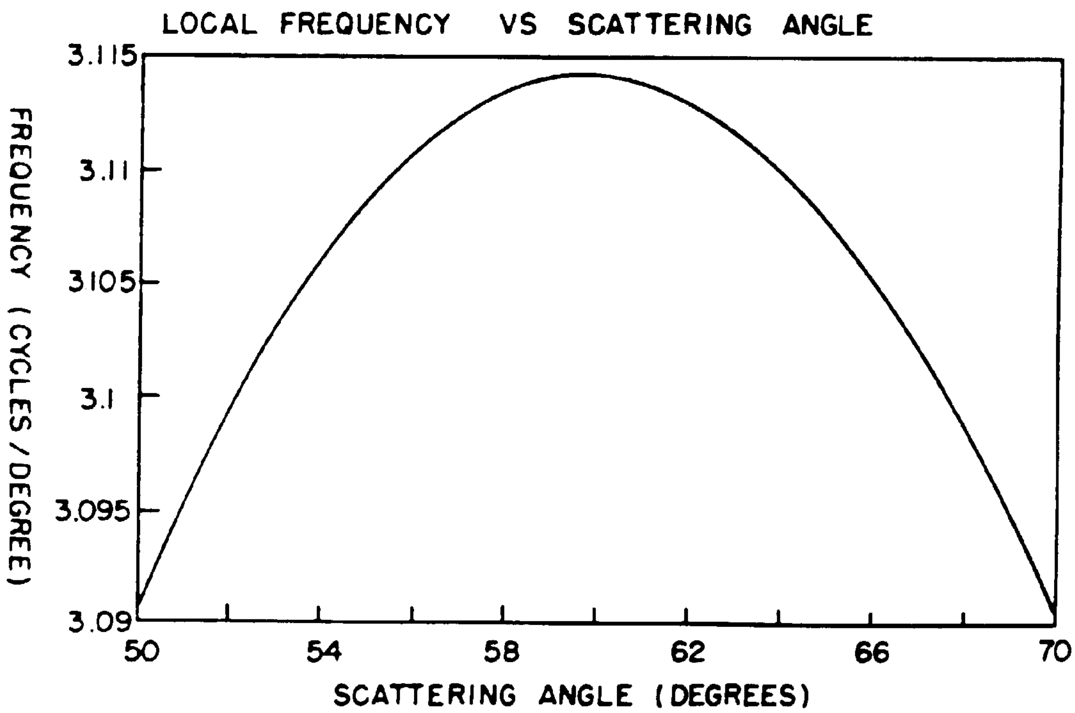
LOCAL FREQUENCY VS SCATTERING ANGLE
3.115
3.11
3.105
3.1
3.095
3.09
FREQUENCY (CYCLES / DEGREE)
50
54
58
62
66
70
SCATTERING ANGLE (DEGREES)

FIG. 17.

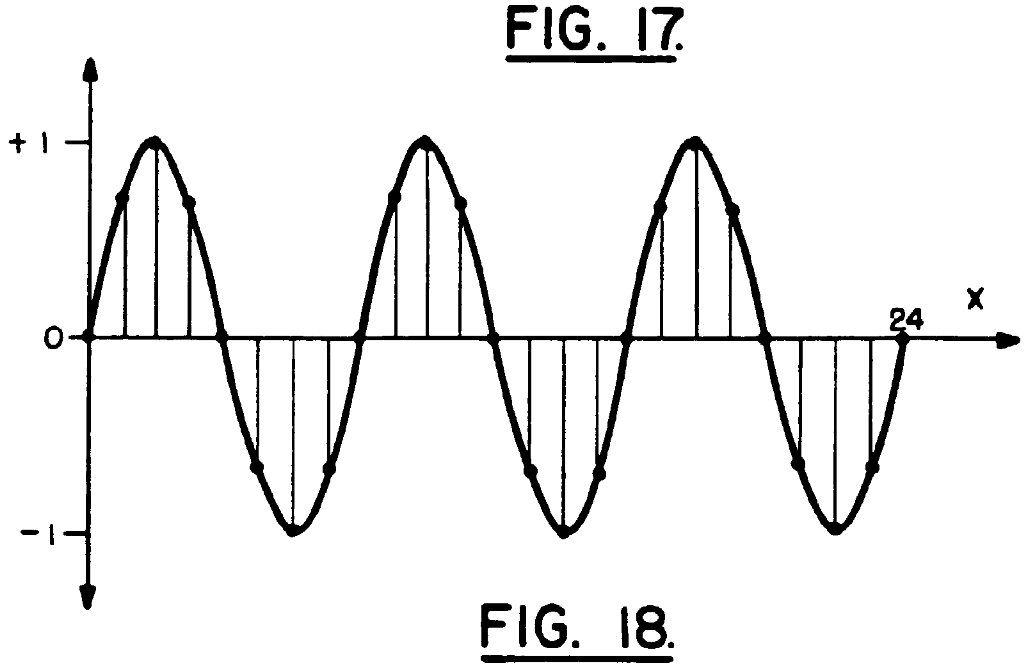


FIG. 18.

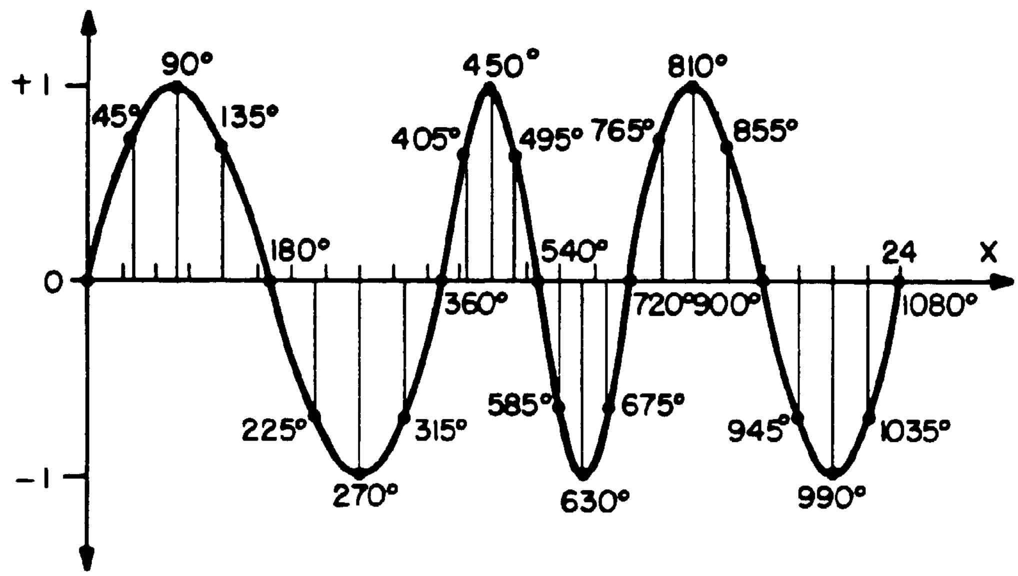


FIG. 19.

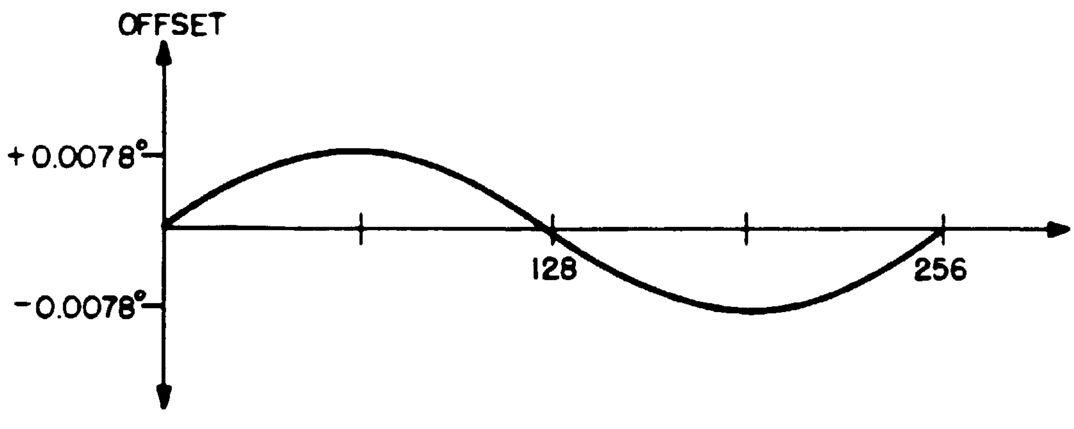

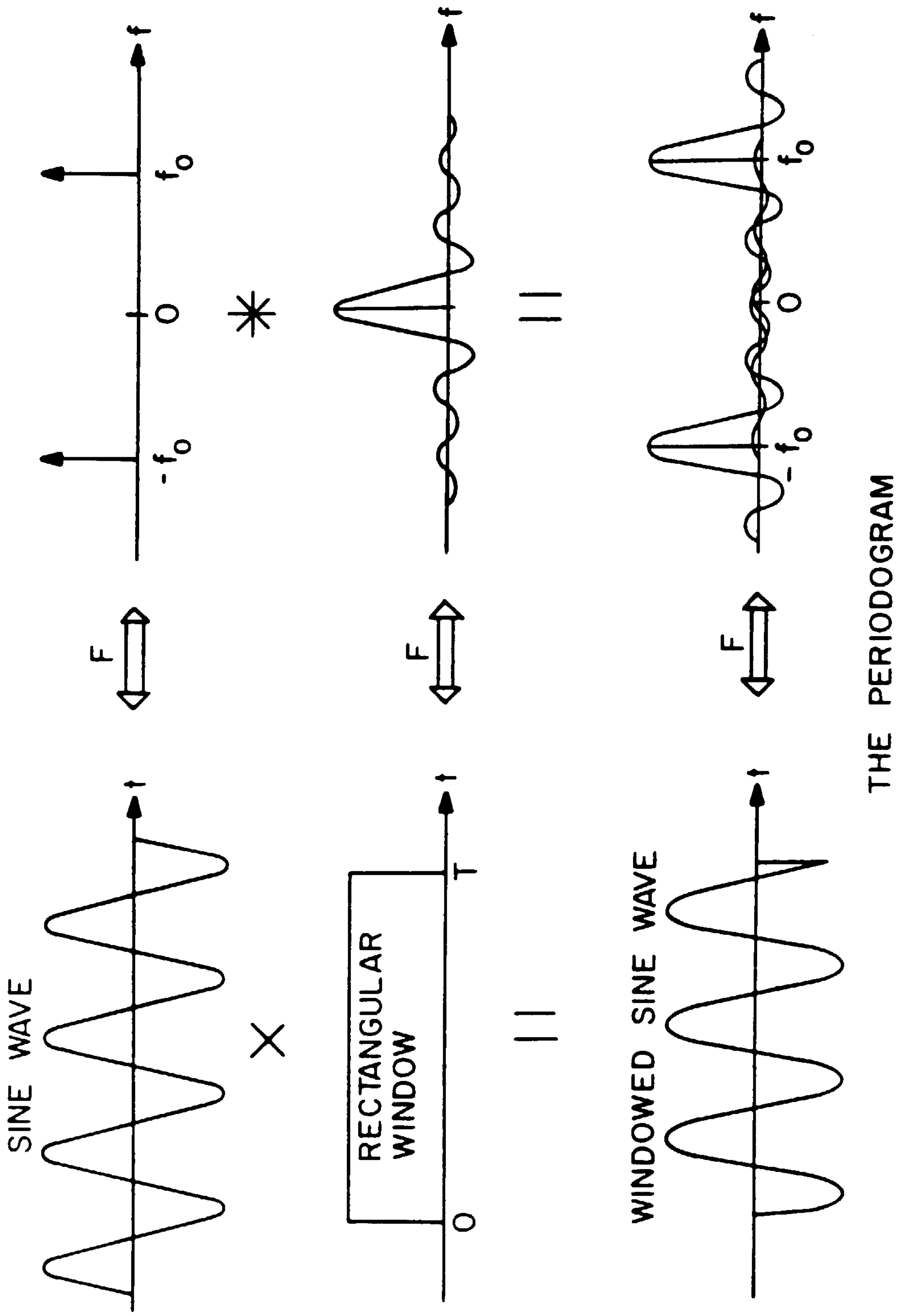
SINE WAVE
RECTANGULAR WINDOW
WINDOWED SINE WAVE
THE PERIODOGRAM
F
t
f
0
T
-f_o
f_o

FIG. 20.

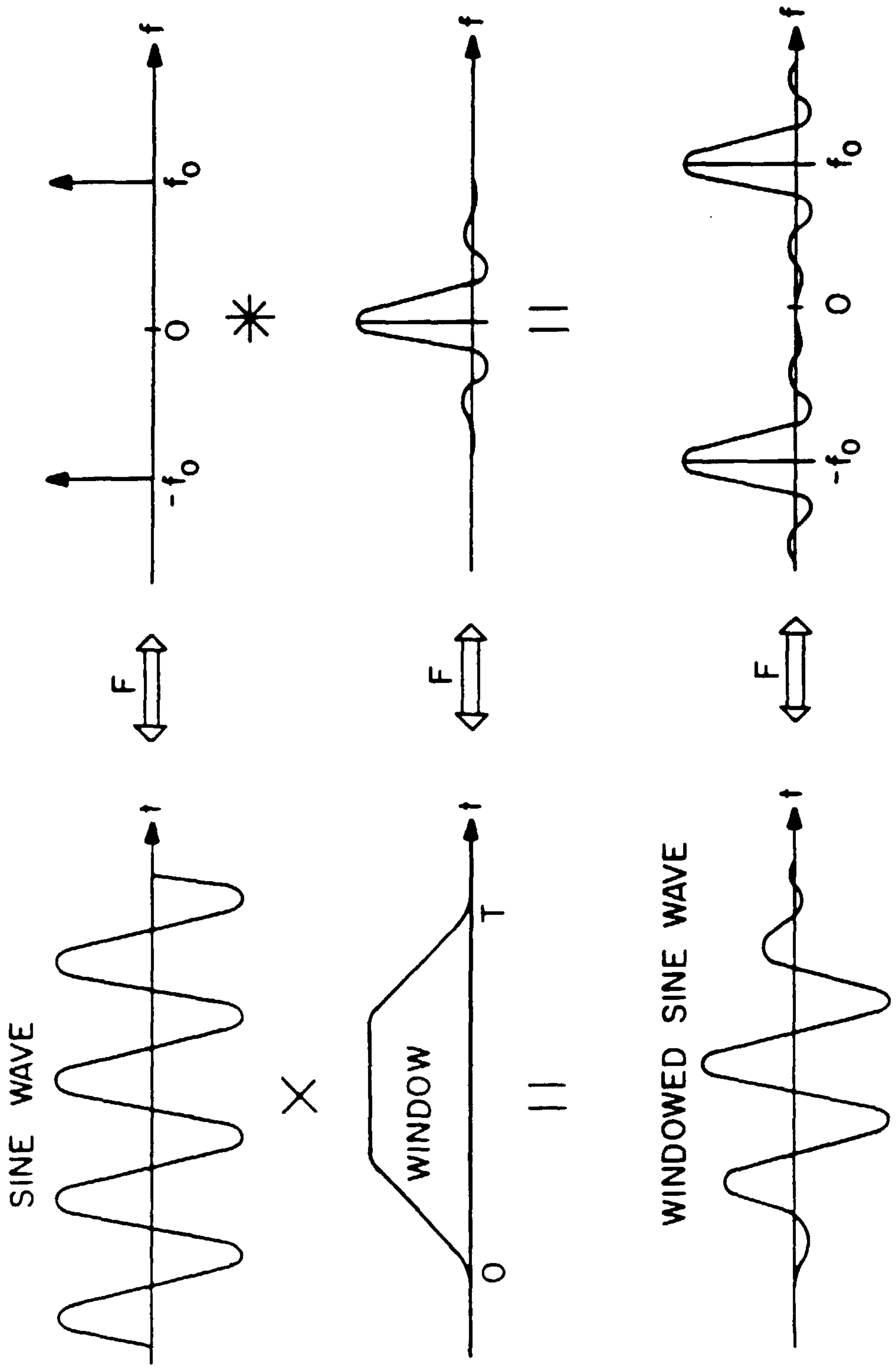


WINDOWING REDUCES BIAS

FIG. 2I.

FIG. 23.

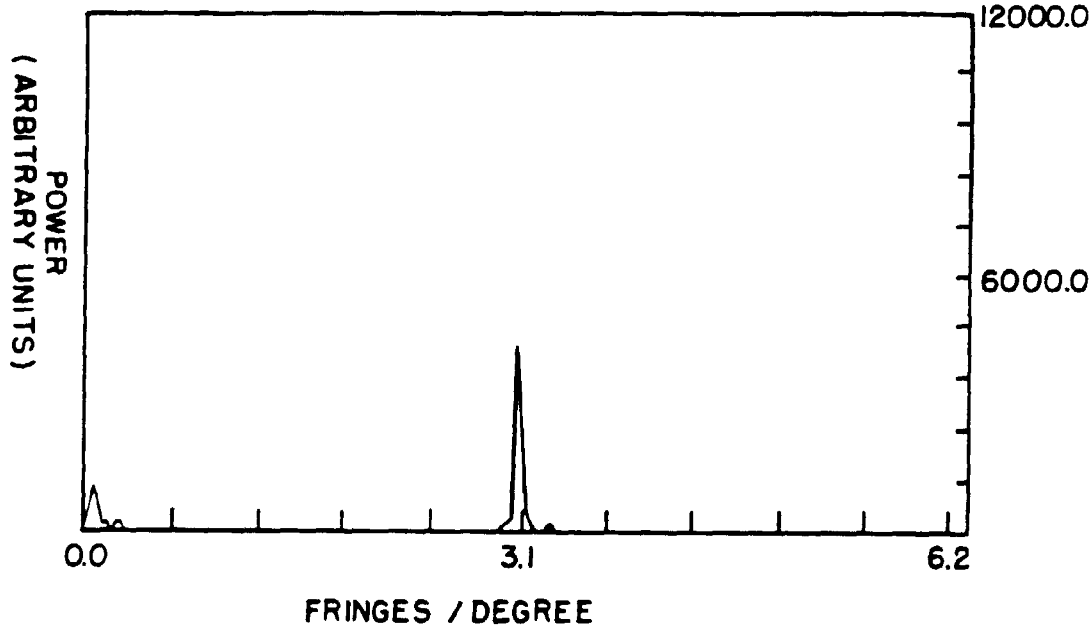
POWER (ARBITRARY UNITS)
12000.0
6000.0
0.0
3.1
6.2
FRINGES / DEGREE

FIG. 24.

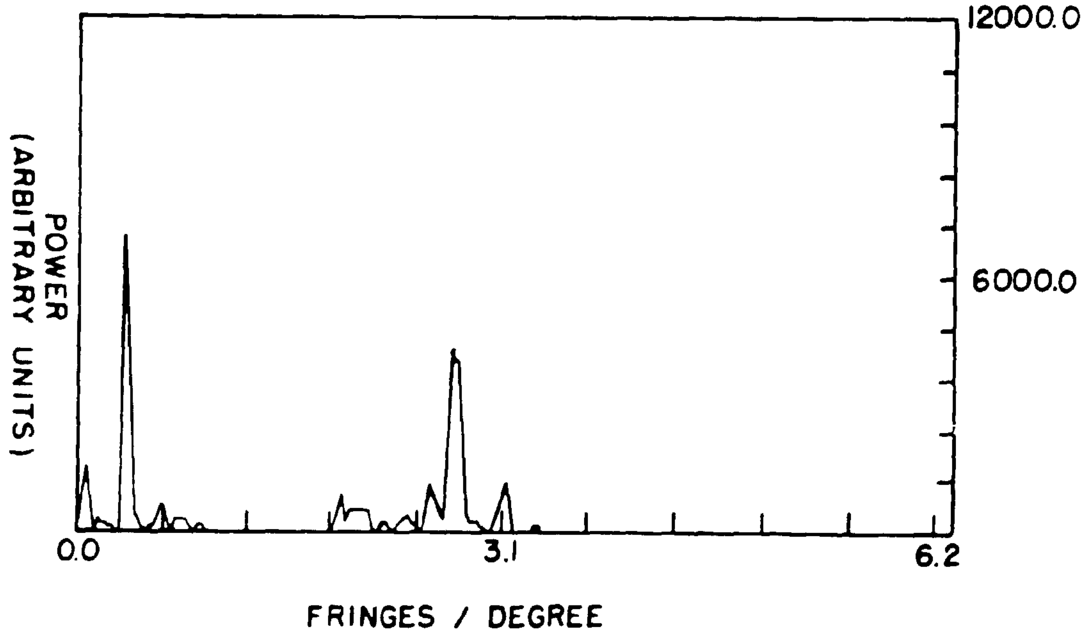
POWER (ARBITRARY UNITS)
12000.0
6000.0
0.0
3.1
6.2
FRINGES / DEGREE

FIG. 25a.

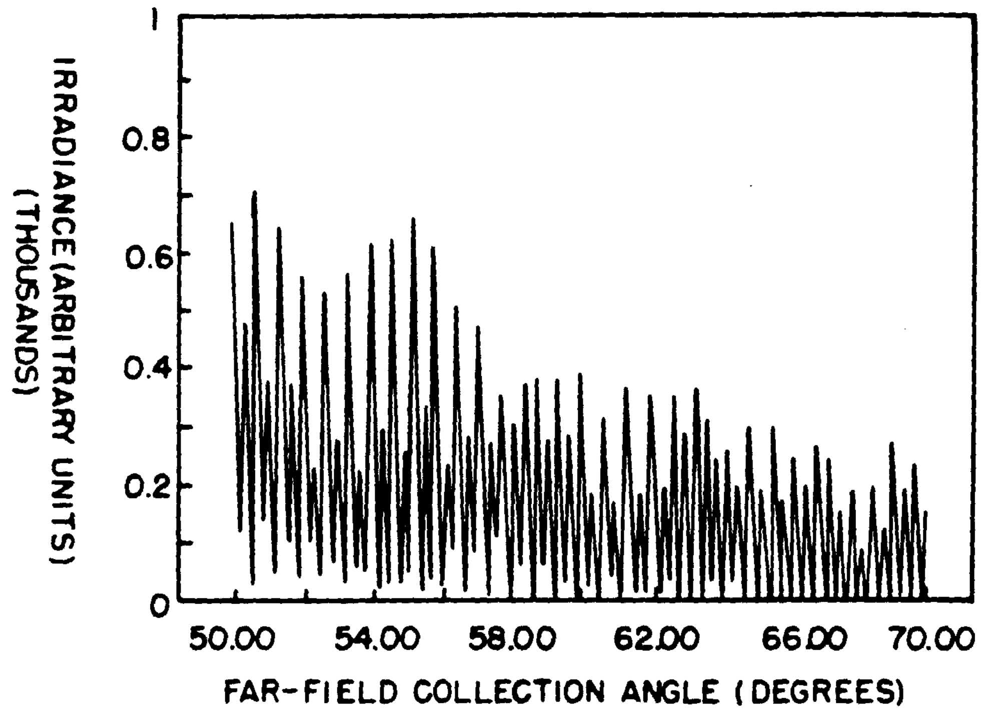


FIG. 25 b.

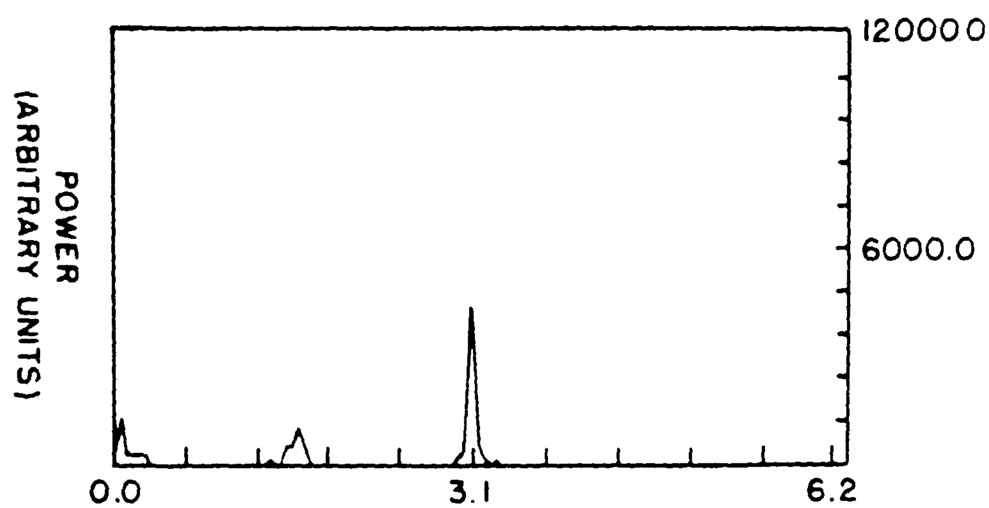

FIG. 26a.

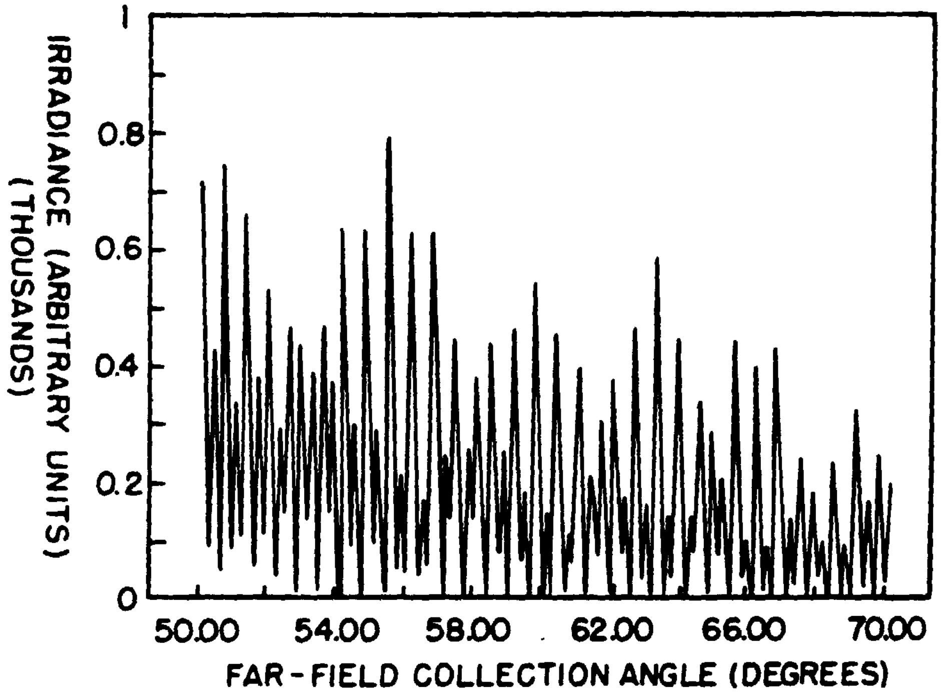


FIG. 26b.

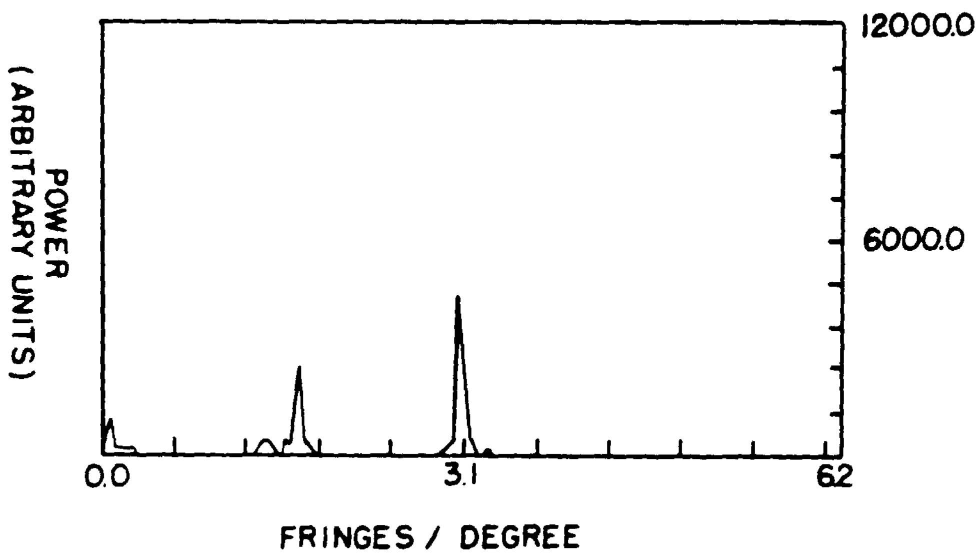

FIG. 27a.

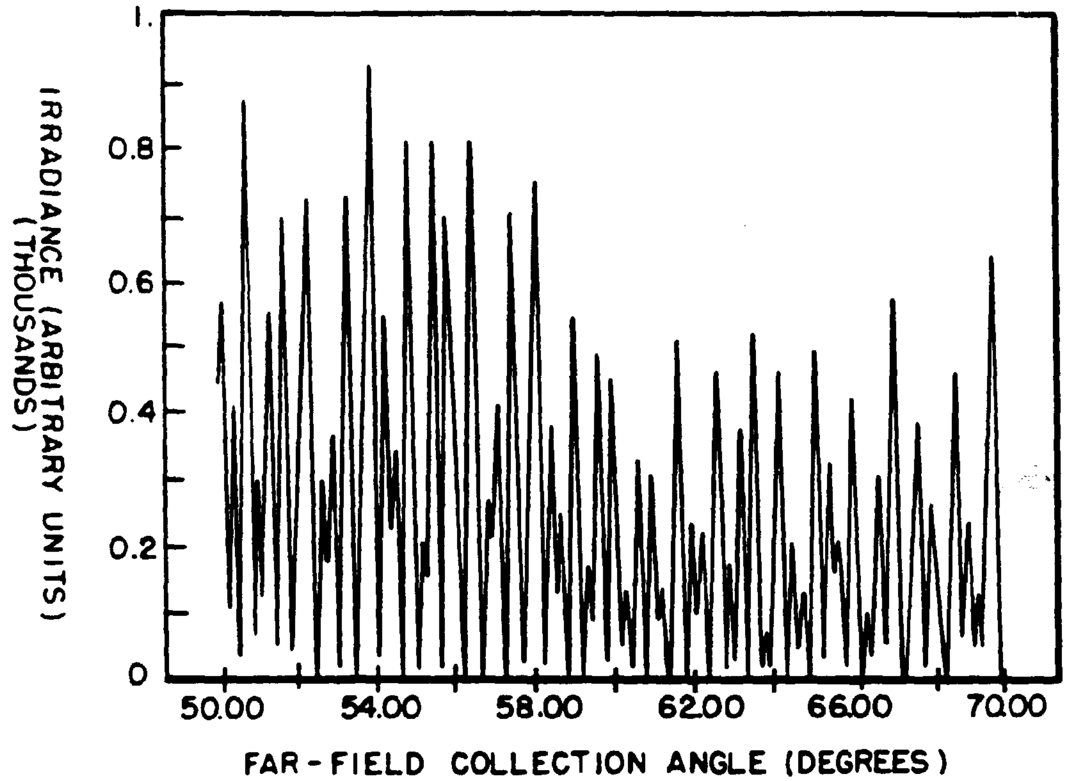


FIG. 27b.

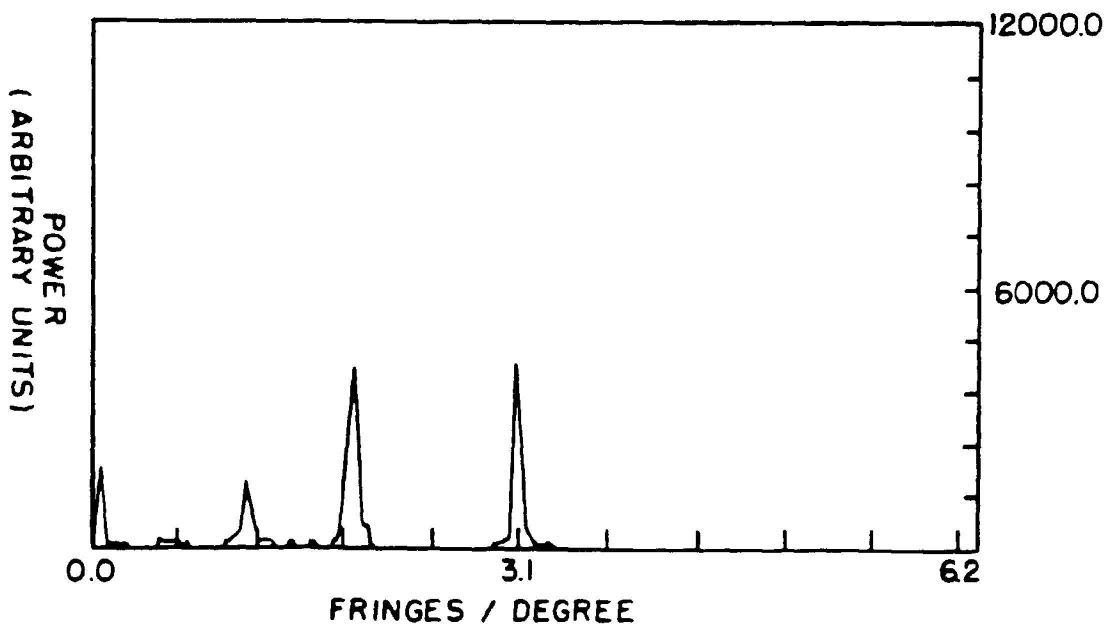

FIG. 28a.

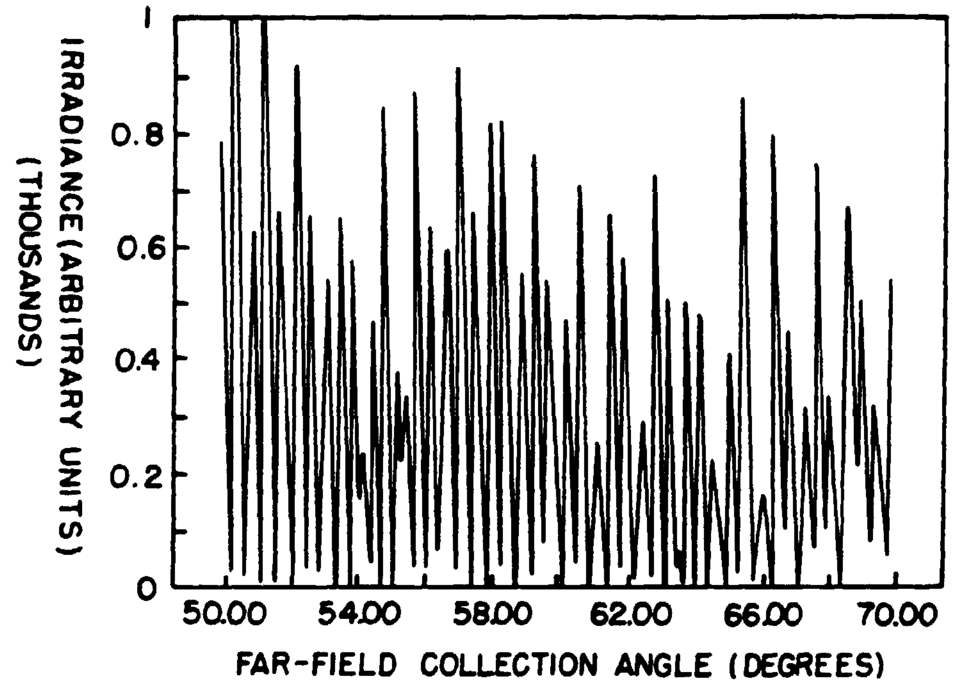


FIG. 28b.

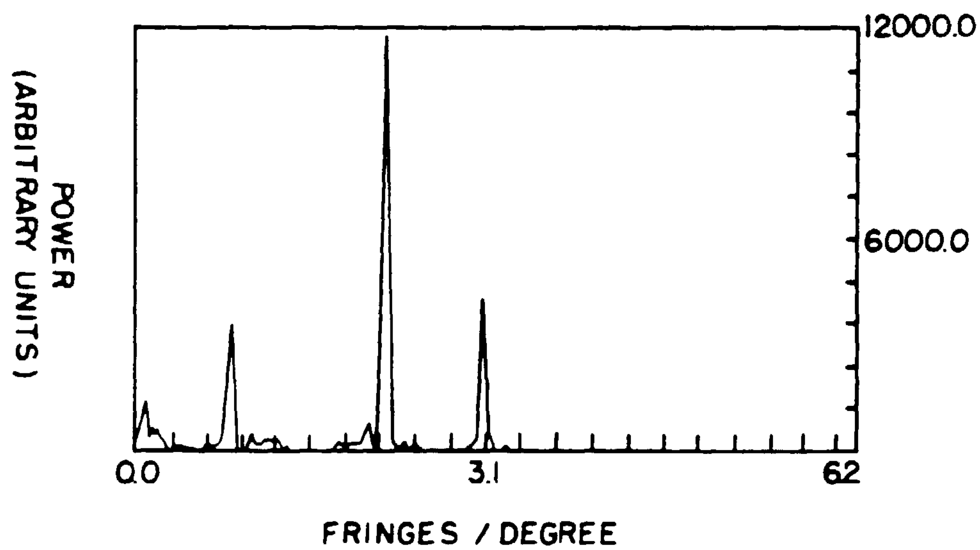

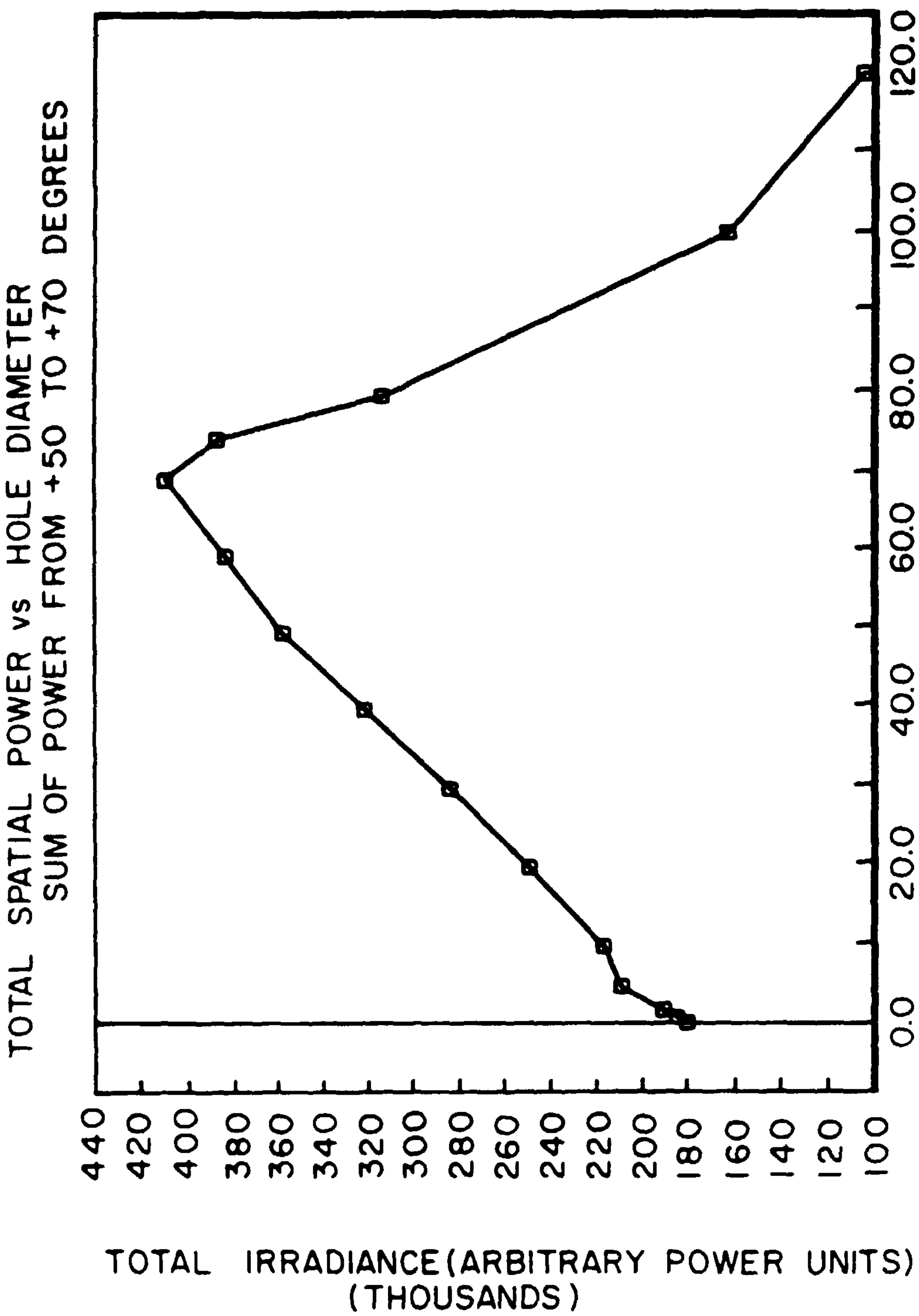
TOTAL SPATIAL POWER vs HOLE DIAMETER
SUM OF POWER FROM +50 TO +70 DEGREES
HOLE DIAMETER (MICRONS)
0.0
20.0
40.0
60.0
80.0
100.0
120.0
440
420
400
380
360
340
320
300
280
260
240
220
200
180
160
140
120
100
TOTAL IRRADIANCE(ARBITRARY POWER UNITS)
(THOUSANDS)

FIG. 29.

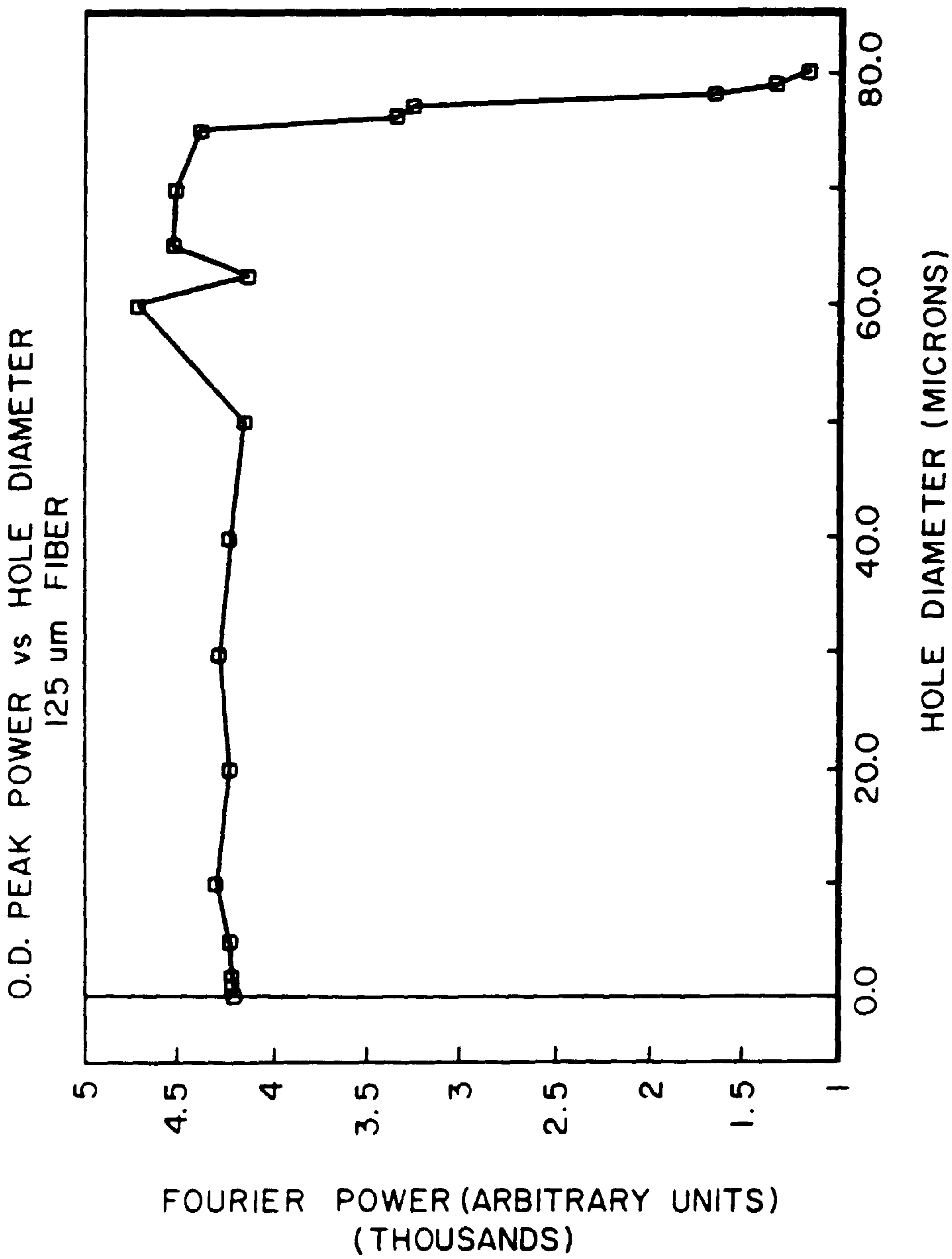
O.D. PEAK POWER vs HOLE DIAMETER
125 um FIBER
HOLE DIAMETER (MICRONS)
0.0
20.0
40.0
60.0
80.0
FOURIER POWER (ARBITRARY UNITS)
(THOUSANDS)
5
4.5
4
3.5
3
2.5
2
1.5
1

FIG. 30.

FIG. 31.

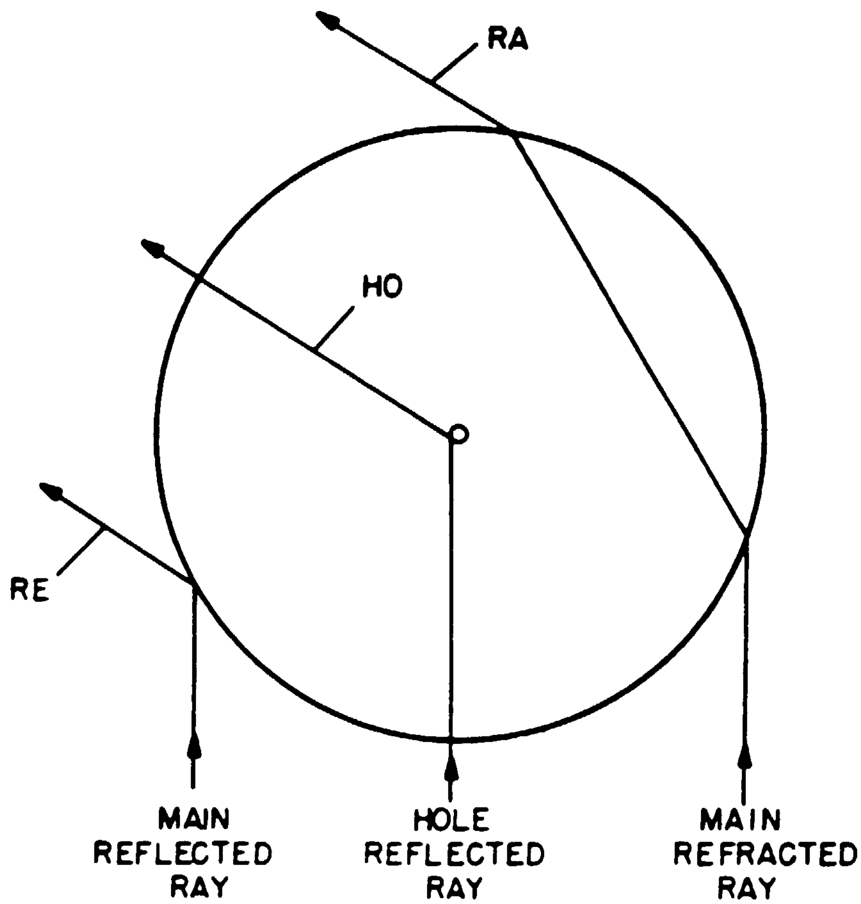
RA
HO
RE
MAIN
REFLECTED
RAY
HOLE
REFLECTED
RAY
MAIN
REFRACTED
RAY

FIG. 32.